# EUROPEAN PATENT APPLICATION

(11) **EP 1 818 801 A2**
(43) Date of publication of application: **15.08.2007**
(21) Application number: 07100819.7
(22) Date of filing: 19.01.2007
(51) Int. Cl.: G06F 3/12

(54) **Print apparatus, system, print job processing method, storage medium, and program**

(30) Priority: 20.01.2006 JP 2006013091; 07.12.2006 JP 2006331144
(71) Applicant: CANON KABUSHIKI KAISHA, Ohta-ku Tokyo 146-8501 (JP)
(72) Inventor: Tominaga, Masahiko, Tokyo Tokyo 146-8501 (JP)
(74) Representative: TBK-Patent

(57) **Abstract**

When an operator takes out a sheet from one of sheet processing apparatuses in a print system capable of supplying a sheet of a job having undergone a print process to a plurality of sheet processing apparatuses from a print apparatus capable of executing the print process of data in a storage unit capable of storing data of a plurality of jobs, execution of the print operation of a job which is accepted after a job of the sheet to be taken out by the operator and requires a sheet process by the sheet processing apparatus from which the operator takes out the sheet is inhibited. When the operator takes out a sheet from one of the sheet processing apparatuses, execution of the print operation of a job which is accepted after a job of the sheet to be taken out by the operator and does not require a sheet process by the sheet processing apparatus from which the operator takes out the sheet is permitted.

## Description

### BACKGROUND OF THE INVENTION

### Field of the Invention

The present invention relates to a print system capable of accepting a plurality of jobs, a job processing method, a storage medium, a program, and a print apparatus.

### Description of the Related Art

Conventionally in the commercial printing industry, a publication is issued through various work steps such as entry of a document, designing of the document, layout editing, comprehensive layout (presentation by printing), proofreading (layout correction and color correction), proof (proof print), block copy preparation, printing, post-process, and shipping.

In particular, the commercial printing industry often uses an offset reproduction printing press in the printing step, and the block copy preparation step is inevitable. However, once the block copy is prepared, it is difficult and disadvantageous in cost to correct the block copy. In block copy preparation, therefore, careful proofreading (i.e., careful layout check and color confirmation) is indispensable. Some period of time is generally taken until issuing of a publication is complete.

In the commercial printing industry, most apparatuses used in respective work steps are bulky and expensive. In addition, work in each step requires expert knowledge, and the know-how of experts is indispensable.

With the advent of high-speed and high-quality electrophotographic and inkjet print apparatuses, a so-called print-on-demand (to be referred to as POD hereinafter) market is coming into being, competing against the commercial offset printing industry.

The POD market appears to replace large-scale printing presses and printing methods so as to deal with jobs of relatively small lots within a short period without using any bulky apparatus or system.

In the POD market, digital printing using electronic data can be implemented to provide printing services and the like by making the best of print apparatuses such as digital copying machines and digital multifunction peripherals.

In the POD market, digitization advances more than in the conventional commercial printing industry, management and control using computers becomes widespread, and a printed material can be actually issued within a short period. As another advantage, the POD market does not require any know-how of the operator. Recently, the image quality of printed materials by POD printing is coming close to the level of the commercial printing industry.

In this situation, office-equipment makers are expanding into this new POD market (see Japanese Patent Application Laid-Open No. 2005-165722).

In order to enter the POD market, office-equipment makers have to consider circumstances which hardly occur in the office environment. In other words, office-equipment makers and the like are making extensive studies toward practical use of digital print systems suited to the POD environment.

For example, it is expected that the functions of an apparatus such as a digital copying machine or digital multifunction peripheral, which is satisfactorily adapted to the office environment, may not always match the POD environment or the like. In the POD environment, an operator must make detailed settings and work in order to create a final product which meets a customer's request. This environment is aware of shortening of the work time and cost reduction. The apparatus is desirably applicable to such an environment.

More specifically, a print apparatus processes many target jobs in the POD environment, and it is important how many jobs are processable by the print system within a short time. From another viewpoint, it is expected that a client requests various sheet processes (e.g., stapling, punching, saddle stitching, case binding, and cutting) for a target job. From still another viewpoint, downsizing of the print apparatus and system and reduction of the space may also be important. It is, therefore, desirable to establish a convenient, flexible printing environment capable of coping with use cases and needs assumed in the POD environment. It is desirable to meet the following demands assumed in establishing a convenient, flexible printing environment capable of coping with use cases and needs assumed in the POD environment.

For example, there is a demand for a mechanism of preventing any trouble which influences a specific job or a plurality of jobs due to work to take out the printed material of a given job by an operator from a sheet processing apparatus. It is important to minimize troubles and the like caused by intervention work of an operator which may influence the productivity of jobs to be processed in the system, and how to maintain high productivity without generating any trouble. However, no concrete proposal has been made. At present, no product capable of coping with use cases and needs on site in an environment (e.g., POD environment) different from the office environment is commercially available. In other words, there is room to study practical use of a print apparatus, print system, and the like applicable not only to the office environment but also to the POD environment.

### SUMMARY OF THE INVENTION

The present invention has been made to address the conventional drawbacks, and has as its object to provide a convenient print system suitable not only to the office environment but also to the POD environment, a job processing method, a storage medium, a program, and a print apparatus.

It is another object of the present invention to provide a mechanism of minimizing intervention work by an operator that may occur in the POD environment due to, e.g., the specifications of an image forming apparatus designed in consideration of only the office environment. It is still another object of the present invention to implement efficient work by reducing the work-load of the operator. It is still another object of the present invention to provide a mechanism capable of processing a plurality of jobs at productivity as high as possible even when the operator takes out sheets from a sheet processing apparatus used for a sheet process necessary for a job to be processed.

It is still another object of the present invention to provide a mechanism capable of flexibly coping with various needs from various users as much as possible in consideration of various situations and use environments.

According to a first aspect of the present invention, there is provided a print system capable of supplying a sheet of a job having undergone a print process by a print unit from the print unit of a print apparatus having the print unit capable of executing the print process of data in a storage unit capable of storing data of a plurality of jobs to a plurality of sheet processing apparatuses each of which has a sheet processing unit capable of executing a sheet process for a sheet of a job printed by the print unit and allows an operator to take out the sheet of the job having undergone the sheet process by the sheet processing unit, characterized by comprising: a control unit which, when the operator takes out a sheet from one of the plurality of sheet processing apparatuses, inhibits execution of a print operation of a job which is accepted after a job of the sheet to be taken out by the operator and requires a sheet process by the sheet processing apparatus from which the operator takes out the sheet, wherein when the operator takes out a sheet from one of the plurality of sheet processing apparatuses, the control unit permits execution of a print operation of a job which is accepted after a job of the sheet to be taken out by the operator and does not require a sheet process by the sheet processing apparatus from which the operator takes out the sheet.

According to a second aspect of the present invention, there is provided a job processing method for a print system capable of supplying a sheet of a job having undergone a print process by a print unit from the print unit of a print apparatus having the print unit capable of executing the print process of data in a storage unit capable of storing data of a plurality of jobs to a plurality of sheet processing apparatuses each of which has a sheet processing unit capable of executing a sheet process for a sheet of a job printed by the print unit and allows an operator to take out the sheet of the job having undergone the sheet process by the sheet processing unit, characterized by comprising the steps of: when the operator takes out a sheet from one of the plurality of sheet processing apparatuses, inhibiting execution of a print operation of a job which is accepted after a job of the sheet to be taken out by the operator and requires a sheet process by the sheet processing apparatus from which the operator takes out the sheet; and when the operator takes out a sheet from one of the plurality of sheet processing apparatuses, permitting execution of a print operation of a job which is accepted after a job of the sheet to be taken out by the operator and does not require a sheet process by the sheet processing apparatus from which the operator takes out the sheet.

Further features of the present invention will become apparent from the following description of exemplary embodiments with reference to the attached drawings.

### BRIEF DESCRIPTION OF THE DRAWINGS

Fig. 1 is a view for explaining an example of the overall configuration of a printing environment 10000 including a print system 1000 to be controlled in an embodiment;

Fig. 2 is a block diagram for explaining an example of the configuration of the print system 1000 to be controlled in the embodiment;

Fig. 3 is a view for explaining an example of the configuration of the print system 1000 to be controlled in the embodiment;

Fig. 4 is a view for explaining an example of a UI unit to be controlled in the embodiment;

Fig. 5 is a view for explaining an example of the UI unit to be controlled in the embodiment;

Fig. 6 is a view for explaining an example of display control on the UI unit to be controlled in the embodiment;

Fig. 7 is a view for explaining an example of display control on the UI unit to be controlled in the embodiment;

Fig. 8A is a view for explaining a control example of the print system 1000 to be controlled in the embodiment;

Fig. 8B is a view for explaining the control example of the print system 1000 to be controlled in the embodiment;

Fig. 9A is a view for explaining a control example of the print system 1000 to be controlled in the embodiment;

Fig. 9B is a view for explaining the control example of the print system 1000 to be controlled in the embodiment;

Fig. 10A is a view for explaining a control example of the print system 1000 to be controlled in the embodiment;

Fig. 10B is a view for explaining the control example of the print system 1000 to be controlled in the embodiment;

Fig. 11 is a sectional view for explaining an example of the internal structure of an inline finisher to be controlled in the embodiment;

Fig. 12 is a sectional view for explaining an example of the internal structure of an inline finisher to be controlled in the embodiment;

Fig. 13 is a sectional view for explaining an example of the internal structure of an inline finisher to be controlled in the embodiment;

Fig. 14 is a view for explaining an example of display control on the UI unit to be controlled in the embodiment;

Fig. 15 is a view for explaining a control example when the print system 1000 to be controlled in the embodiment creates a printed material;

Fig. 16 is a view for explaining a control example when the print system 1000 to be controlled in the embodiment creates a printed material;

Fig. 17A is a view for explaining an example of display control on the UI unit to be controlled in the embodiment;

Fig. 17B is a view for explaining an example of display control on the UI unit to be controlled in the embodiment;

Fig. 18A is a view for explaining an example of display control on the UI unit to be controlled in the embodiment;

Fig. 18B is a view for explaining an example of display control on the UI unit to be controlled in the embodiment;

Fig. 18C is a view for explaining an example of display control on the UI unit to be controlled in the embodiment;

Fig. 18D is a view for explaining an example of display control on the UI unit to be controlled in the embodiment;

Fig. 19 is a view showing, as the system configuration of the print system 1000, a system configuration in which two "large-volume stackers" and one "saddle stitching apparatus" illustrated using the system configurations of Figs. 8A to 10B cascade-connect to a print apparatus 100 in the connection order of Fig. 19;

Fig. 20 is a view showing an example of the outer appearance of the "large-volume stacker" described with reference to Figs. 8A to 10B and 13;
Fig. 21 is a view for explaining an example of display control on the UI unit to be controlled in the embodiment;

Fig. 22 is a flowchart for explaining a control example for a job to be processed by the print system 1000 in the embodiment;

Fig. 23 is a view for explaining an example of display control on the UI unit to be controlled in the embodiment;

Fig. 24 is a view for explaining an example of display control on the UI unit to be controlled in the embodiment;

Fig. 25 is a view for explaining an example of the configuration of the print system 1000 to be controlled in the embodiment;

Fig. 26 is a view for explaining an example of the configuration of the print system 1000 to be controlled in the embodiment;

Fig. 27 is a view for explaining an example of display control on the UI unit to be controlled in the embodiment;

Fig. 28 is a view for explaining an example of display control on the UI unit to be controlled in the embodiment;

Fig. 29 is a flowchart for explaining a control example for a job to be processed by the print system 1000 in the embodiment;

Fig. 30 is a view for explaining an example of display control on the UI unit to be controlled in the embodiment;

Fig. 31 is a view for explaining an example of display control on the UI unit to be controlled in the embodiment;

Fig. 32 is a view for explaining an example of display control on the UI unit to be controlled in the embodiment;

Fig. 33 is a view for explaining an example of display control on the UI unit to be controlled in the embodiment;

Fig. 34 is a view for explaining an example of display control on the UI unit to be controlled in the embodiment;

Fig. 35 is a view for explaining an example of display control on the UI unit to be controlled in the embodiment; and

Fig. 36 is a view for explaining an example of display control on the UI unit to be controlled in the embodiment.

### DESCRIPTION OF THE EMBODIMENTS

Preferred embodiments of the present invention will be described in detail below with reference to the accompanying drawings.

### <First Embodiment>

### [Description of System Configuration of Entire Printing Environment 10000 Including Print System 1000]

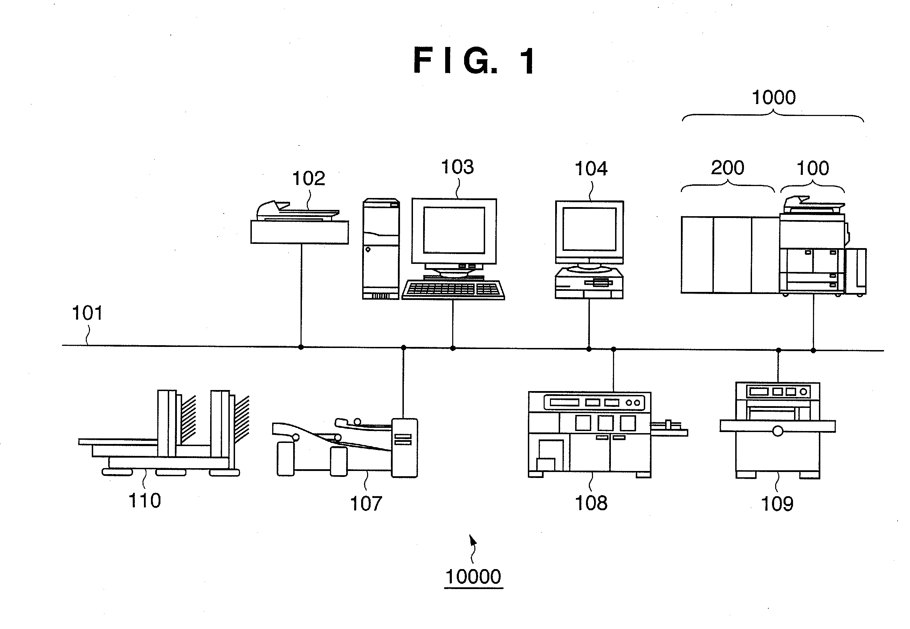

The embodiment assumes a printing environment (POD environment) different from the office environment in order to solve problems described in Description of the Related Art. The embodiment will explain the system environment of an entire POD environment site (printing environment 10000 in Fig. 1) including a print system 1000. The printing environment itself is a feature of the embodiment.

In the embodiment, the printing environment 10000 where the print system 1000 is applicable is also suited to the POD environment and is called the POD system 10000.

The POD system 10000 in Fig. 1 comprises, as building components, the print system 1000 of the embodiment, and a server computer 103 and client computer 104 (to be referred to as PCs hereinafter). The POD system 10000 also comprises a paper folding apparatus 107, cutting apparatus 109, saddle stitching apparatus 110, case binding apparatus 108, scanner unit 102, and the like. In this manner, a plurality of apparatuses are prepared in the POD system 10000.

The print system 1000 comprises a print apparatus 100 and sheet processing apparatus 200 as building components. As an example of the print apparatus 100, the embodiment will explain a multifunction peripheral having a plurality of functions such as the copy function and PC print function. However, the print apparatus 100 may be a single function type print apparatus having only the PC function or copy function. The multi function peripheral will also be called an MFP hereinafter.

The paper folding apparatus 107, cutting apparatus 109, saddle stitching apparatus 110, and case binding apparatus 108 in Fig. 1 are defined as sheet processing apparatuses, similar to the sheet processing apparatus 200 of the print system 1000. This is because these apparatuses can execute sheet processes for sheets of a job printed by the print apparatus 100 of the print system 1000. For example, the paper folding apparatus 107 can fold sheets of a job printed by the print apparatus 100. The cutting apparatus 109 can cut a bundle of sheets printed by the print apparatus 100. The saddle stitching apparatus 110 can saddle-stitch sheets of a job printed by the print apparatus 100. The case binding apparatus 108 can case-bind sheets of a job printed by the print apparatus 100. To execute various sheet processes by these sheet processing apparatuses, an operator must take out a printed material of a job printed by the print apparatus 100 from the delivery unit of the print apparatus 100, and set the printed material in a target sheet processing apparatus.

The use of a sheet processing apparatus other than the sheet processing apparatus 200 of the print system 1000 requires intervention work by the operator after the print apparatus 100 executes a print process.

In other words, when the sheet processing apparatus 200 of the print system 1000 executes a sheet process required for a job printed by the print apparatus 100, no intervention work by the operator is necessary after the print apparatus 100 executes a print process. This is because the print apparatus 100 can directly supply sheets printed by it to the sheet processing apparatus 200. More specifically, the sheet feeding path in the print apparatus 100 can couple to that in the sheet processing apparatus 200. In this manner, the sheet processing apparatus 200 and print apparatus 100 of the print system 1000 physically cooperate with each other. In addition, the print apparatus 100 and sheet processing apparatus 200 comprise CPUs so as to communicate data. That is, the print apparatus 100 and sheet processing apparatus 200 are electrically coupled to each other.

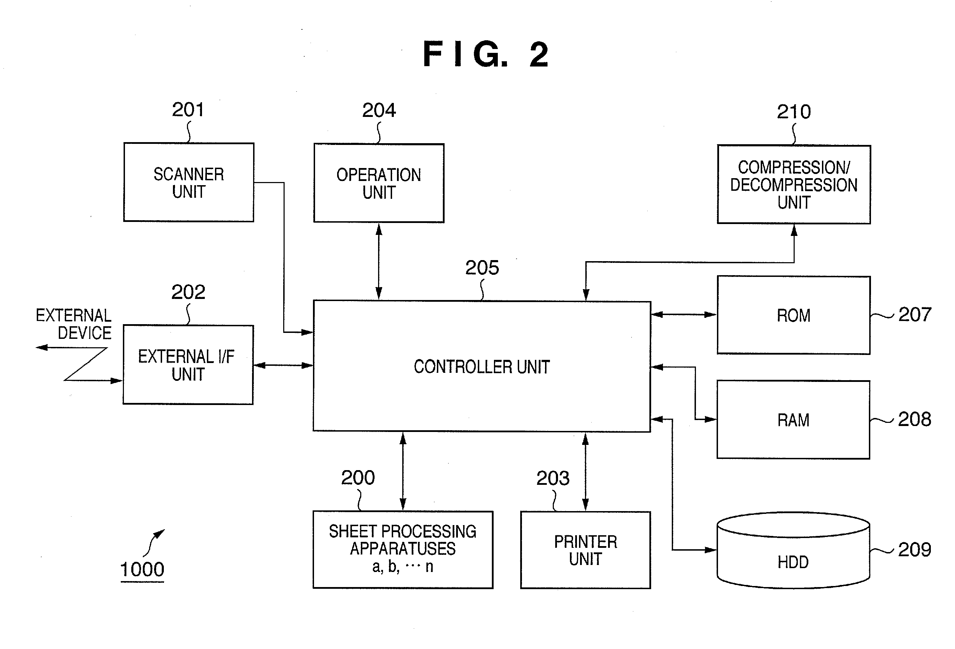

In the embodiment, the control unit of the print system comprehensively controls the print apparatus 100 and sheet processing apparatus 200. For example, in the embodiment, a controller unit 205 in the print apparatus 100 in Fig. 2 performs comprehensive control. In this embodiment we will call these sheet processing apparatuses post-processing apparatuses or post-presses.

All these apparatuses in the POD system 10000 of Fig. 1 except the saddle stitching apparatus 110 connect to a network 101 so as to communicate data with each other.

For example, the print apparatus 100 prints the print data of a target job whose print execution request is transmitted via the network 101 from an information processing apparatus serving as an example of external apparatuses such as the PCs 103 and 104.

For example, the PC 103 manages all jobs to be processed in the POD environment 10000 by transmitting/receiving data to/from another apparatus by network communication. In other words, the PC 103 functions as a computer which comprehensively manages a series of workflow steps including a plurality of process steps. The PC 103 determines post-process conditions capable of finishing in the POD environment 10000 on the basis of a job instruction accepted from an operator. In addition, the PC 103 designates a post-process (finishing process) step complying with a request from an end user (client who requests printing in this example). At this time, the PC 103 uses information exchange tools such as JDF to exchange information with respective post-processing devices using commands and statuses in post-presses.

As a point of the embodiment in the POD environment 10000 having the above building components, the embodiment classifies the above sheet processing apparatuses into three categories and defines them as follows.

[Definition 1] A sheet processing apparatus which satisfies both (condition 1) and (condition 2) listed below is defined as an "inline finisher". The embodiment also refers to an apparatus satisfying this definition as an inline type sheet processing apparatus.

(Condition 1) The paper path (sheet feeding path) physically connects to the print apparatus 100 so as to directly receive sheets conveyed from the print apparatus 100 without any operator intervention.

(Condition 2) A sheet processing apparatus electrically connects to another apparatus so as to communicate data necessary for an operation instruction, status confirmation, or the like with another apparatus. More specifically, a sheet processing apparatus electrically connects to the print apparatus 100 so as to communicate data with it, or electrically connects to an apparatus (e.g., the PC 103 or 104) other than the print apparatus 100 via the network 101 so as to communicate data with the apparatus. A sheet processing apparatus which satisfies either condition meets (condition 2).

More specifically, the sheet processing apparatus 200 of the print system 1000 corresponds to an "inline finisher". This is because the sheet processing apparatus 200 physically and electrically connects to the print apparatus 100, as described above.

[Definition 2] A sheet processing apparatus which does not satisfy condition 1 above but satisfies (condition 2) is defined as a "near-line finisher". In this embodiment we will refer to an apparatus satisfying this definition as a near-line type sheet processing apparatus.

For example, the paper path does not connect to the print apparatus 100, and a sheet processing apparatus requires intervention work by an operator such as carrying of a printed material. However, the sheet processing apparatus can electrically exchange information such as an operation instruction or status confirmation via a communication means such as the network 101. A sheet processing apparatus which meets these conditions will be defined as a "near-line finisher".

More specifically, the paper folding apparatus 107, cutting apparatus 109, saddle stitching apparatus 110, and case binding apparatus 108 in Fig. 1 correspond to "near-line finishers". This is because these sheet processing apparatuses do not physically connect to the print apparatus 100, but electrically connect to another apparatus such as the PC 103 or 104 via the network 101 so as to communicate data.

[Definition 3] A sheet processing apparatus which satisfies neither (condition 1) nor (condition 2) listed above is defined as an "offline finisher". The embodiment also refers to an apparatus satisfying this definition as an offline type sheet processing apparatus.

For example, the paper path does not connect to the print apparatus 100, and a sheet processing apparatus requires intervention work by an operator such as carrying of a printed material. Further, the sheet processing apparatus does not comprise any communication unit necessary for an operation instruction and status confirmation, and cannot communicate data with another apparatus. Thus, the operator carries an output material, sets it, manually inputs an operation, and manually gives a status report from the device. A sheet processing apparatus which meets these conditions will be defined as an "offline finisher".

More specifically, the saddle stitching apparatus 110 in Fig. 1 corresponds to an "offline finisher". This is because this sheet processing apparatus does not physically connect to the print apparatus 100, cannot connect to the network 101, and does not electrically connect to another apparatus to communicate data.

Various sheet processes are executable in the POD environment 10000 having various sheet processing apparatuses classified into these three categories.

For example, printed media of a job printed by the print apparatus 100 can undergo various sheet processes such as a cutting process, saddle stitching process, case binding process, sheet folding process, punching process, sealing process, and collating process. A sheet process is possible in a bookbinding printing style desired by an end user (client).

Near-line finishers and offline finishers managed by the PC 103 include various finishers such as a dedicated stapler, dedicated puncher, inserter, and collator. The PC 103 grasps a device status and job status from near-line finishers via the network 101 by sequential polling or the like using a predetermined protocol. In addition, the PC 103 manages the execution statuses (progresses) of many jobs processed in the POD environment 10000.

In the embodiment, different sheet processing apparatuses may execute a plurality of print sheet processes, or one sheet processing apparatus may execute a plurality of types of print sheet processes. The system may comprise any sheet processing apparatuses.

Another point of the embodiment will be explained.

The print system 1000 in Fig. 1 comprises the print apparatus 100, and the sheet processing apparatus 200 detachable from the print apparatus 100. The sheet processing apparatus 200 can directly receive, via the sheet feeding path, sheets of a job printed by the print apparatus 100. The sheet processing apparatus 200 executes a sheet process requested by a user together with a print execution request via a user interface unit for sheets of a job printed by a printer unit 203 of the print apparatus 100. This is apparent from the fact that the sheet processing apparatus 200 is an inline type sheet processing apparatus, as described above.

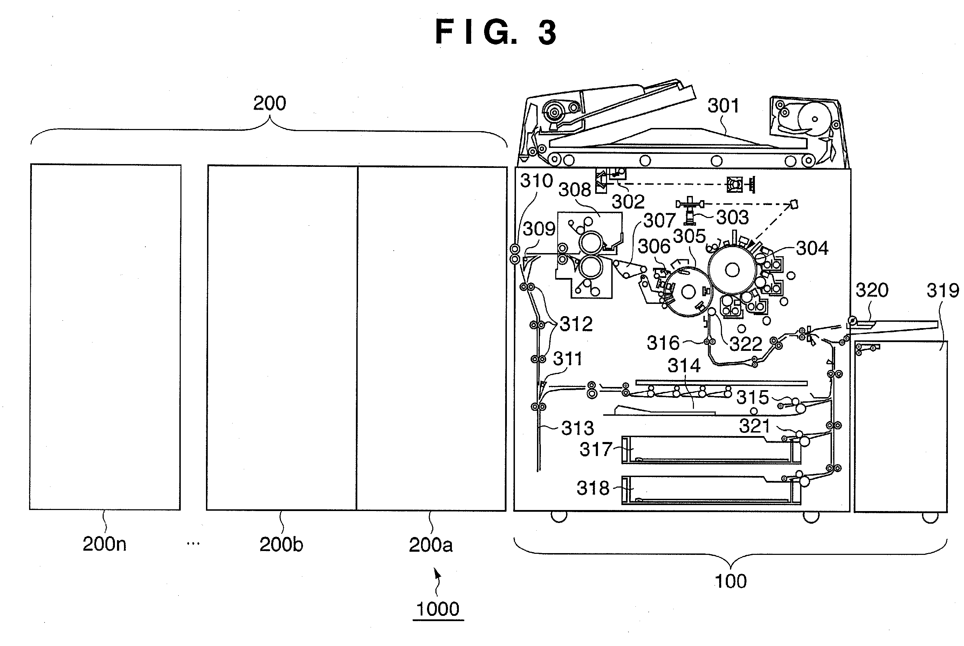

It should be noted that the sheet processing apparatus 200 in the embodiment can also be defined as a group of sheet processing apparatuses 200. This is because in the embodiment, a plurality of sheet processing apparatuses, which are independent housings and independently available, couple to the print apparatus 100 and are available as the sheet processing apparatus 200. For example, the print system 1000 shown in Fig. 1 comprises the print apparatus 100 and three sheet processing apparatuses. In other words, in the print system 1000 in Fig. 1, three sheet processing apparatuses series-connect to the print apparatus 100. In this example, an arrangement in which a plurality of sheet processing apparatuses connect to the print apparatus 100 is called a cascade connection. The embodiment handles, as inline finishers, all sheet processing apparatuses contained in a group of sheet processing apparatuses 200 cascade-connected to the print apparatus 100. The controller 205 in Fig. 2 serving as an example of the control unit of the print system 1000 comprehensively controls the print apparatus 100 and a plurality of inline type sheet processing apparatuses, and executes various control examples to be described below in the embodiment. The embodiment also has this feature. This arrangement will be described later with reference to Fig. 3 and the like.

### [Internal Configuration (Mainly Software Configuration) of Print System 1000]

The internal configuration (mainly software configuration) of the print system 1000 will be explained with reference to the system block diagram of Fig. 2. In this example, the print apparatus 100 incorporates all the units of the print system 1000 shown in Fig. 2 except the sheet processing apparatus 200 (strictly speaking, a group of sheet processing apparatuses configurable by a plurality of inline type sheet processing apparatuses). The sheet processing apparatus 200 is detachable from the print apparatus 100, and is providable as an option of the print apparatus 100. This configuration aims to provide a necessary number of inline finishers in the POD environment. For this purpose, the embodiment adopts the following configuration.

The print apparatus 100 comprises a nonvolatile memory such as a hard disk 209 (to be also referred to as an HDD hereinafter) capable of storing a plurality of job data to be processed in the print apparatus 100. The print apparatus 100 has the copy function of printing, by the printer unit 203 via the HDD, job data accepted from a scanner unit 201 of the print apparatus 100. The print apparatus 100 also has the print function of printing, by the printer unit 203 via the HDD, job data accepted from an external apparatus such as the PC 103 or 104 via an external I/F unit 202 serving as an example of a communication unit. The print apparatus 100 is an MFP type print apparatus (to be also referred to as image forming apparatus) having a plurality of functions.

The print apparatus according to the embodiment can take any configuration of a color or monochrome print apparatus as long as it can execute various control examples described in the embodiment.

The print apparatus 100 according to the embodiment comprises the scanner unit 201 which scans an original document image and processes scanned image data. The print apparatus 100 also comprises the external I/F unit 202 which transmits/receives image data to/from a facsimile device, network connection device, or external dedicated device. The print apparatus 100 comprises the hard disk 209 capable of storing image data of jobs to be printed that are accepted from either the scanner unit 201 or external I/F unit 202. The print apparatus 100 comprises the printer unit 203 which prints target job data stored in the hard disk 209 on a print medium. The print apparatus 100 further comprises an operation unit 204 which has a display unit and serves as an example of the user interface unit of the print system 1000. Other examples of the user interface unit provided by the print system 1000 are the display unit, keyboard, and mouse of an external apparatus such as the PC 103 or 104.

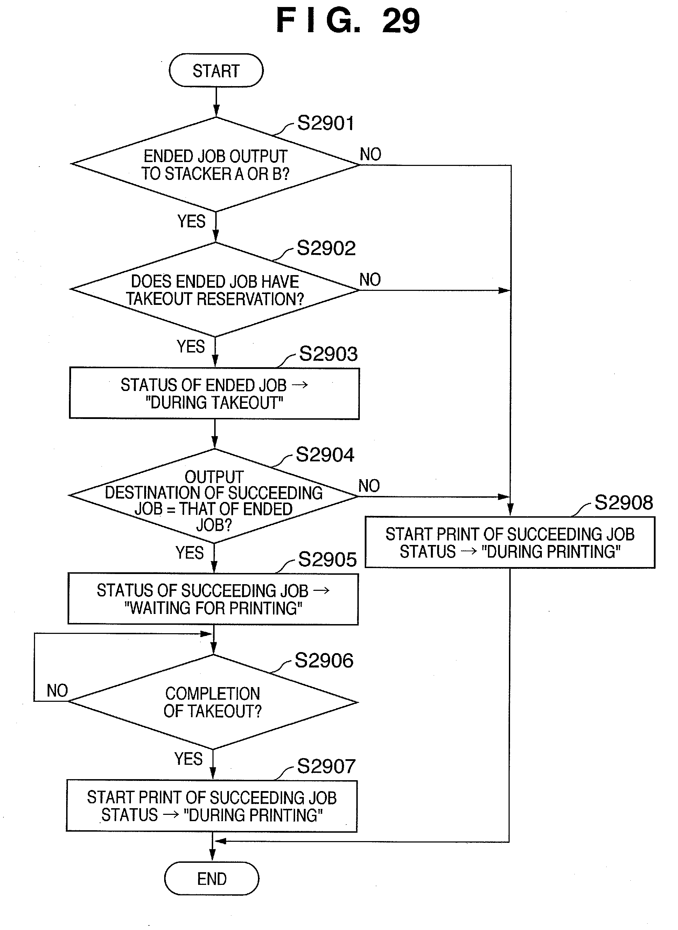

The controller unit (to be also referred to as a control unit or CPU) 205 serving as an example of the control unit of the print system 1000 comprehensively controls the processes, operations, and the like of various units of the print system 1000. A ROM 207 stores various control programs necessary in the embodiment including programs for executing various processes of a flowchart shown in Fig. 29 (to be described later) and the like. The ROM 207 also stores a display control program for displaying various UI windows on the display unit of the operation unit 204 including user interface windows (to be referred to as UI windows hereinafter) shown in the accompanying drawings. The control unit 205 reads out and executes programs from the ROM 207 to cause the print apparatus to execute various operations described in the embodiment. The ROM 207 also stores, e.g., a program for executing an operation to analyze PDL (Page Description Language) code data received from an external apparatus (e.g., the PC 103 or 104) via the external I/F unit 202, and expand the PDL code data into raster image data (bitmap image data). Software processes these programs.

The ROM 207 is a read-only memory, and stores programs (e.g., a boot sequence and font information) and various programs (e.g., the above-mentioned programs) in advance. A RAM 208 is a readable/writable memory, and stores image data, various programs, and setting information sent from the scanner unit 201 or external I/F unit 202 via the controller unit 205.

The HDD (hard disk) 209 is a large-capacity storage device which stores image data compressed by a compression/decompression unit 210. The HDD 209 can hold a plurality of data such as print data of a job to be processed. The control unit 205 controls to print, by the printer unit 203 via the HDD 209, target job data input via various input units such as the scanner unit 201 and external I/F unit 202. The control unit 205 also controls to transmit job data to an external apparatus via the external I/F unit 202. In this fashion, the controller unit 205 controls to execute various output processes for target job data stored in the HDD 209. The compression/decompression unit 210 compresses/decompresses image data and the like stored in the RAM 208 and HDD 209 in accordance with various compression schemes such as JBIG and JPEG.

With the above configuration, the control unit 205 serving as an example of the control unit of the print system controls even the operation of the inline type sheet processing apparatus 200, as shown in Fig. 1. The mechanical structure of the print system 1000 including a description of this operation will be explained with reference to Fig. 3 and the like.

### [Apparatus Configuration (Mainly Mechanical Structure) of Print System 1000]

The configuration (mainly mechanical structure) of the print system 1000 will be explained with reference to the view of Fig. 3 for explaining the apparatus configuration.

As described above, in the print system 1000, a plurality of inline type sheet processing apparatuses cascade-connect to the print apparatus 100. An arbitrary number of inline type sheet processing apparatuses connectable to the print apparatus 100 can be installed in accordance with the use environment in order to enhance the effects of the embodiment under specific limitations.

To make the description clearer, N sheet processing apparatuses 200 are connectable as a group of sheet processing apparatuses. Sheet processing apparatuses are defined as sheet processing apparatuses 200a, 200b,... sequentially from the first sheet processing apparatus, and the Nth sheet processing apparatus is a sheet processing apparatus 200n. For descriptive convenience, each sheet processing apparatus 200 has a shape as shown in Figs. 1 to 3, but has an original appearance to be described later.

A mechanical structure will be explained when the print apparatus 100 executes a print process corresponding to a step preceding to sheet processes executed by the inline type sheet processing apparatuses 200. A paper handling operation in which sheets of a printed job are supplied from the printer unit 203 into the sheet processing apparatus 200 will be explained. The controller unit (to be also referred to as a control unit or CPU hereinafter) 205 in Fig. 2 causes the print apparatus 100 to mainly execute this paper handling operation.

Of reference numerals 301 to 322 shown in Fig. 3, reference numeral 301 corresponds to the mechanical structure of the scanner unit 201 in Fig. 2. Reference numerals 302 to 322 correspond to the mechanical structure of the printer unit 203 in Fig. 2. The embodiment will describe the structure of a 1D type color MFP. A 4D type color MFP and monochrome MFP are also examples of the print apparatus according to the embodiment, but a description thereof will be omitted.

The auto document feeder (ADF) 301 in Fig. 3 separates the first and subsequent original document sheets in the order of pages from an original document bundle set on the support surface of the document tray, and feeds each original document sheet to the document table glass in order to scan the original document sheet by the scanner 302. The scanner 302 scans the image of the original document sheet fed onto the document table glass, and converts the image into image data by a CCD. The rotary polygon mirror 303 receives a light ray (e.g., a laser beam) modulated in accordance with the image data, and irradiates the photosensitive drum 304 with the scan beam reflected via a reflecting mirror. A latent image formed by the laser beam on the photosensitive drum 304 is developed with toner, and the toner image is transferred onto a sheet material adhered onto the transfer drum 305. A series of image forming processes are executed sequentially with yellow (Y), magenta (M), cyan (C), and black (K) toners, forming a full-color image.

After four image forming processes, the sheet material bearing the full-color image is separated by the separation gripper 306 from the transfer drum 305, and conveyed to the fixing unit 308 by the pre-fixing conveyor 307. The fixing unit 308 comprises a combination of rollers and belts, and incorporates a heat source such as a halogen heater. The fixing unit 308 fuses and fixes, by heat and pressure, toner on a sheet material bearing a toner image. The delivery flapper 309 is swingable about the swing shaft, and regulates the sheet material conveyance direction. When the delivery flapper 309 swings clockwise in Fig. 3, a sheet material is conveyed straight, and discharged outside the apparatus by the delivery rollers 310.

To form images on the two surfaces of a sheet material, the delivery flapper 309 swings counterclockwise in Fig. 3, and the course of the sheet material changes downward to supply the sheet material to the double-sided conveyor. The double-sided conveyor comprises the reverse flapper 311, reverse rollers 312, reverse guide 313, and double-sided tray 314. The reverse flapper 311 is swingable about the swing shaft, and regulates the sheet material conveyance direction. To process a double-sided print job, the control unit 205 controls to swing the reverse flapper 311 counterclockwise in Fig. 3 and supply a sheet having the first surface printed by the printer unit 203 to the reverse guide 313 via the reverse rollers 312.

While the reverse rollers 312 clamp the trailing end of the sheet material, the reverse rollers 312 temporarily stop, the reverse flapper 311 swings clockwise in Fig. 3, and the reverse rollers 312 rotate backward. The sheet is switched back to replace its trailing and leading ends, and then the sheet is guided to the double-sided tray 314. The double-sided tray 314 temporarily supports the sheet material, and the refeed roller 315 supplies the sheet material again to the registration rollers 316. At this time, the sheet material is sent with a surface opposite to the first surface in the transfer step facing the photosensitive drum.

The second image is formed on the second surface of the sheet by the same process as that described above. After the images are formed on the two surfaces of the sheet material, the sheet undergoes the fixing step and is discharged from the print apparatus main body to outside the apparatus via the delivery rollers 310. The control unit 205 executes this double-sided print sequence, and causes the print apparatus to execute double-sided printing of target job data on the first and second surfaces of a sheet.

The sheet feed/conveyance section comprises the sheet feed cassettes 317 and 318 (each capable of storing, e.g., 500 sheets) serving as sheet feed units storing sheets necessary for a print process, the paper deck 319 (capable of storing, e.g., 5,000 sheets), and the manual feed tray 320. Units for feeding sheets stored in these sheet feed units are the sheet feed rollers 321, registration rollers 316, and the like. The sheet feed cassettes 317 and 318 and the paper deck 319 can set sheets of various materials at various sheet sizes so as to discriminate these sheets in these sheet feed units. The manual feed tray 320 can also set various print media including a special sheet such as an OHP sheet.

The sheet feed cassettes 317 and 318, the paper deck 319, and the manual feed tray 320 respectively have the sheet feed rollers 321 so as to successively feed sheets one by one. For example, a pickup roller sequentially picks up stacked sheet materials, a separation roller facing the sheet feed roller 321 prevents overlapping feed, and sheet materials are supplied one by one to the conveyance guide. The separation roller receives, via a torque limiter (not shown), a driving force for driving the separation roller in a direction opposite to the conveyance direction. When only one sheet material enters a nip portion formed between the separation roller and the sheet feed roller, the separation roller rotates in the conveyance direction following the sheet material. If overlapping feed occurs, the separation roller rotates in the direction opposite to the conveyance direction to set back the overlapping-fed sheet material and supply only one top sheet material.

The supplied sheet material is guided between the conveyance guides, and conveyed to the registration rollers 316 by a plurality of conveyance rollers. At this time, the registration rollers 316 stop, the leading end of the sheet material abuts against the nip portion formed between the pair of registration rollers 316. Then, the sheet material forms a loop to correct skew. The registration rollers 316 start rotating to convey the sheet material in synchronism with the timing of a toner image formed on the photosensitive drum 304 in the image forming section. The attraction roller 322 electrostatically attracts the sheet material sent by the registration rollers 316 onto the surface of the transfer drum 305. The sheet material discharged from the fixing unit 308 is introduced into the sheet feeding path in the sheet processing apparatus 200 via the delivery rollers 310.

Through the above print process, the control unit 205 processes a job to be printed.

The control unit 205 causes the printer unit 203 by the above-described method to print job print data stored in the HDD 209 from a data generation source on the basis of a print execution request accepted from a user via the UI unit.

For example, the data generation source of a job whose print execution request is accepted from the operation unit 204 means the scanner unit 201. The data generation source of a job whose print execution request is accepted from a host computer means the host computer.

The control unit 205 stores print data of a job to be processed sequentially from the start page in the HDD 209, and reads out the print data sequentially from the start page from the HDD 209 to form the image of the print data on a sheet. The control unit 205 performs this start page process. In addition, the control unit 205 supplies printed sheets sequentially from the start page to the sheet feeding path in the sheet processing apparatus 200 with the image surfaces of the sheets facing down. For this purpose, immediately before the delivery rollers 310 introduce a sheet into the sheet processing apparatus 200, the control unit 205 causes the units 309 and 312 and the like to execute a switchback operation to reverse the sheet traveling from the fixing unit 308. The control unit 205 also executes paper handling control for the start page process.

The arrangement of the inline type sheet processing apparatus 200 of the print system 1000 also having the print apparatus 100 will be explained.

As shown in Fig. 3, the print system 1000 according to the embodiment comprises a total of n inline type sheet processing apparatuses cascade-connectable to the print apparatus 100. The number of installed inline type sheet processing apparatuses is arbitrary as much as possible. However, the print system 1000 must utilize at least a sheet processing apparatus which can supply a sheet printed by the printer unit 203 to an internal sheet processing unit without any intervention work by an operator. In other words, the print system 1000 must utilize a sheet processing apparatus having a sheet feeding path (paper path) capable of conveying, within the apparatus, a printed material discharged from the printer unit 203 via the delivery rollers 310 of the print apparatus 100. The print system 1000 follows this restriction.

However, the print system 1000 is flexibly configurable as long as it follows this restriction, as one mechanism for enhancing the effects of the embodiment.

For example, the number of connected inline type sheet processing apparatuses is arbitrary such as three or five. The embodiment also assumes a POD environment where an administrator determines that no inline type sheet processing apparatus is necessary, in order to increase the use efficiency of an offline type sheet processing apparatus. For example, even when no inline type sheet processing apparatus is used (i.e., the number of inline type sheet processing apparatuses is 0), the print apparatus 100 of the embodiment is available.

When cascade-connecting a plurality of inline type sheet processing apparatuses to the print apparatus 100, a specific user (e.g., administrator) can arbitrarily change and determine their connection order under the restriction.

The above mechanism aims to improve user friendliness, and is not an indispensable constituent feature. In other words, the present invention is not limited to this arrangement. For example, the present invention is applicable to a system configuration which uniformly defines the number of inline type sheet processing apparatuses available in the print system 1000 and their connection order. The present invention incorporates any system configuration and apparatus configuration as long as at least one of various job control examples (to be described later) is executable.

How many and what kinds of inline type sheet processing apparatuses are connectable to the print apparatus 100 in the print system 1000, how to connect them, and what kinds of sheet processes they can execute will be described later.

### [Arrangement of Operation Unit 204 as Example of UI Unit of Print System 1000]

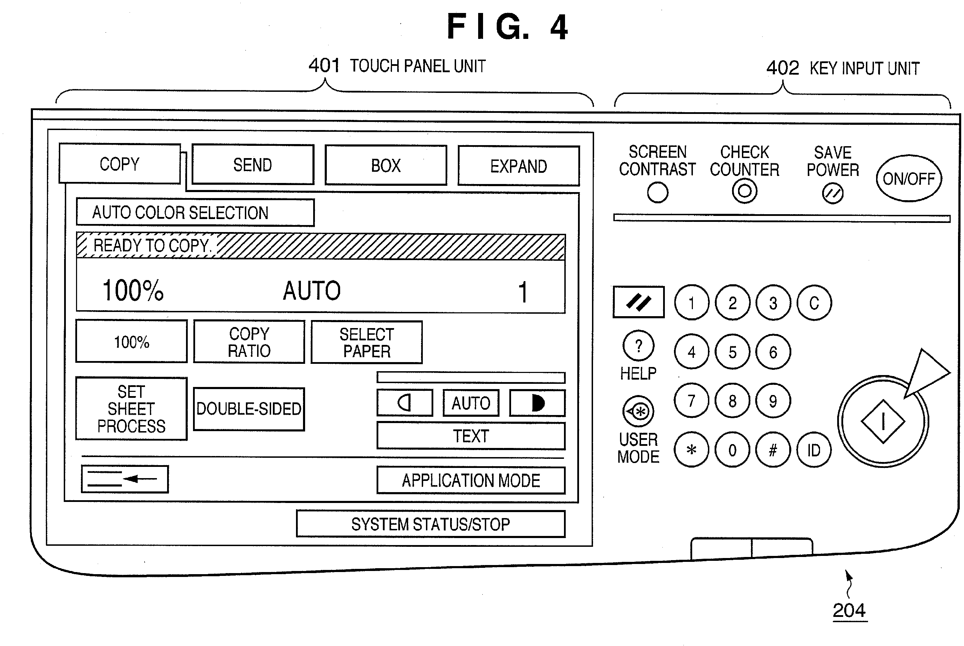

The operation unit 204 serving as an example of the user interface unit (to be referred to as a UI unit hereinafter) of the print apparatus 100 in the print system 1000 will be explained with reference to Fig. 4.

The operation unit 204 comprises a key input unit 402 capable of accepting a user operation with hard keys, and a touch panel unit 401 serving as an example of a display unit capable of accepting a user operation with soft keys (display keys).

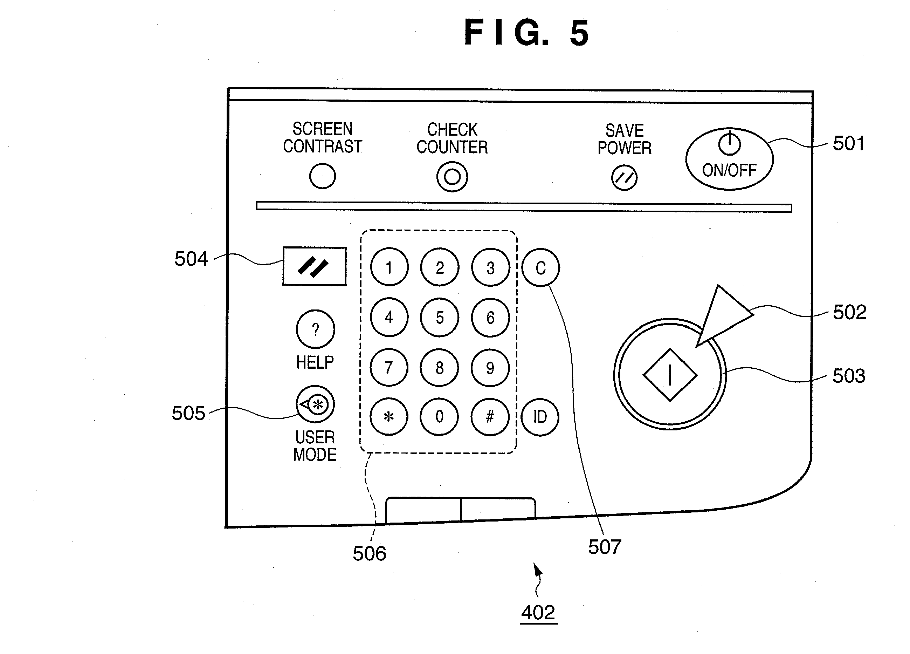

As shown in Fig. 5, the key input unit 402 comprises an operation unit power switch 501. In response to a user operation to the switch 501, the control unit 205 controls to selectively switch between the standby mode (normal operation state) and the sleep mode (state in which the program stops in wait for an interrupt by network printing, facsimile transmission, or the like, suppressing power consumption). The control unit 205 controls to accept a user operation to the switch 501 while a main power switch (not shown) for supplying power to the whole system is ON.

A start key 503 enables accepting, from a user, an instruction to cause the print apparatus to start a kind of job process designated by a user, such as copying or transmission of a job to be processed. A stop key 502 enables accepting, from the user, an instruction to cause the print apparatus to interrupt the process of an accepted job. A ten-key pad 506 allows the user to set the entries of various settings. A clear key 507 is used to cancel various parameters such as entries set by the user via the ten-key pad 506. A reset key 504 is used to accept, from the user, an instruction to invalidate various settings of a job to be processed by the user and restore the setting values to defaults. A user mode key 505 is used to shift to a system setup window for each user.

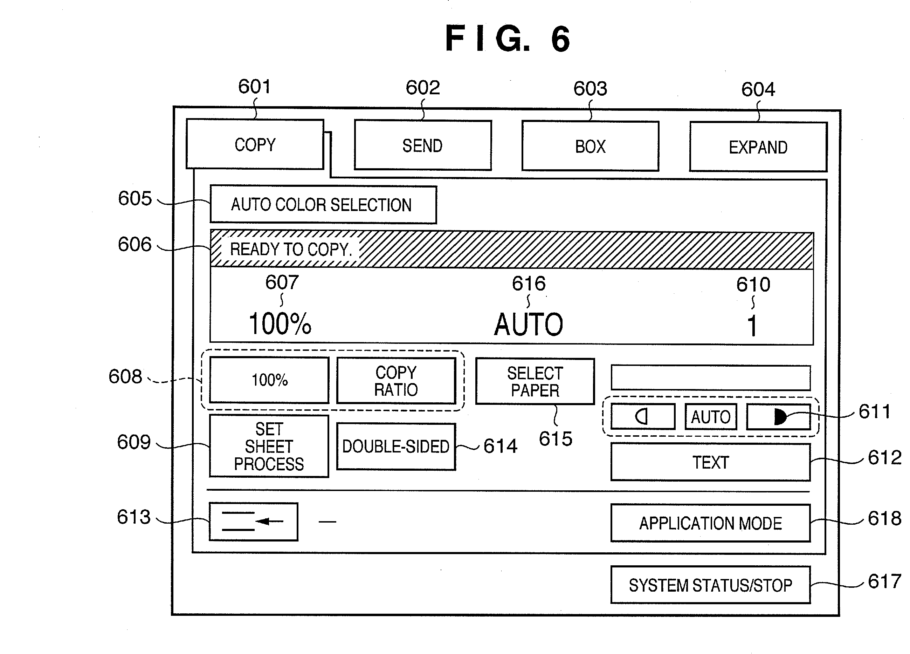

Fig. 6 is a view for explaining the touch panel unit (to be also referred to as a display unit) 401 serving as an example of a user interface unit provided by the print system. The touch panel unit 401 has an LCD (Liquid Crystal Display), and a touch panel display formed from a transparent electrode adhered onto the LCD. The touch panel unit 401 has both a function of accepting various settings from an operator and a function of presenting information to the operator. For example, when it is detected that a user presses a portion corresponding to an effective display key on the LCD, the control unit 205 controls to display an operation window corresponding to the key operation on the touch panel unit 401 in accordance with a display control program stored in advance in the ROM 207. Fig. 6 shows an example of an initial window displayed on the touch panel unit 401 when the print apparatus is in the standby mode (state in which there is no job to be processed by the print apparatus).

When the user presses a copy tab 601 on the display unit 401 shown in Fig. 6, the control unit 205 causes the display unit 401 to display the operation window of the copy function provided by the print apparatus. When the user presses a send tab 602, the control unit 205 causes the display unit 401 to display the operation window of the data send function (e.g., FAX transmission or E-mail sending) provided by the print apparatus. When the user presses a box tab 603, the control unit 205 causes the display unit 401 to display the operation window of the box function provided by the print apparatus.

The box function uses a plurality of data storage boxes (to be referred to boxes hereinafter) which are virtually ensured in the HDD 209 in advance and are available discriminately for respective users. With the box function, the control unit 205 allows a user to select a desired one of boxes via the user interface unit, and accepts a desired operation from the user. For example, the control unit 205 responds to an instruction input from the user via the operation unit 204, and controls the HDD 209 to store document data of a job accepted from the scanner unit 201 of the print apparatus in a box selected by the user. The control unit 205 also makes it possible to store, e.g., text data of a job accepted from an external apparatus (e.g., the PC 103 or 104) via the external I/F unit 202 in a box designated by the user in accordance with an instruction designated by the user of the external apparatus via the user interface unit of the external apparatus. The control unit 205 controls, e.g., the printer unit 203 to print job data stored in a box in the desired output form of a user in accordance with a user instruction from the operation unit 204, or controls the external I/F unit 202 to transmit the job data to an external apparatus desired by the user.

To allow the user to execute various box operations, the control unit 205 controls the display unit 401 to display the box function operation window in response to press of the box tab 603 by the user. When the user presses an expand tab 604 on the display unit 401 of Fig. 6, the control unit 205 causes the display unit 401 to display a window for setting expansion functions such as scanner setting. When the user presses a system monitor key 617, the control unit 205 causes the display unit 401 to display a display window for notifying the user of the MFP state or status.

A color selection setting key 605 allows the user to select color copying, monochrome copying, or auto selection in advance. A copy ratio setting key 608 causes the display unit 401 to display a setup window which allows the user to set a copy ratio such as equal magnification, enlargement, or reduction.

When the user presses a double-sided key 614, the control unit 205 causes the display unit 401 to display a window which allows the user to set (select) which of single-sided printing and double-sided printing is executed in the print process of a target job. In response to press of a sheet selection key 615 by the user, the control unit 205 causes the display unit 401 to display a window which allows the user to set a sheet feed unit, sheet size, and sheet type (medium type) necessary for the print process of a target job. In response to pressing of a key 612 by the user, the control unit 205 causes the display unit 401 to display a window which allows the user to select an image process mode (e.g., a text mode or photo mode) suited to an original document image. By operating a density setting key 611, the user can adjust the density of the output image of a job to be printed.

Referring to Fig. 6, the control unit 205 causes a status display field 606 of the display unit 401 to display the operation state (e.g., standby, warm-up, printing, jam, or error) of a current event in the print apparatus in order to confirm it by the user. The control unit 205 causes a display field 607 to display information for prompting the user to confirm the copy ratio of a job to be processed. The control unit 205 causes a display field 616 to display information for prompting the user to confirm the sheet size and sheet feed mode of a job to be processed. The control unit 205 causes a display field 610 to display information for prompting the user to confirm the number of copies of a job to be processed, and information for prompting the user to confirm the sheet number during printing. In this manner, the control unit 205 causes the display unit 401 to display various types of information to be announced to the user.

When a user presses an interrupt key 613, the control unit 205 stops printing a current job by the print apparatus, and executes printing of a job from the user. When the user presses an application mode key 618, the control unit 205 causes the display unit 401 to display a window for setting various image processes and layouts, such as two-page separation, cover sheet/slip sheet setting, reduction layout, and image movement.

Still another point of the embodiment will be described.

As a setting for a job to be processed, the control unit 205 causes the UI unit to execute a display for accepting a request from a user to execute a sheet process by the sheet processing unit of the inline type sheet processing apparatus 200 of the print system 1000. The control unit 205 also causes the UI unit to execute a display for accepting an instruction from the user to cause the UI unit to execute this display.

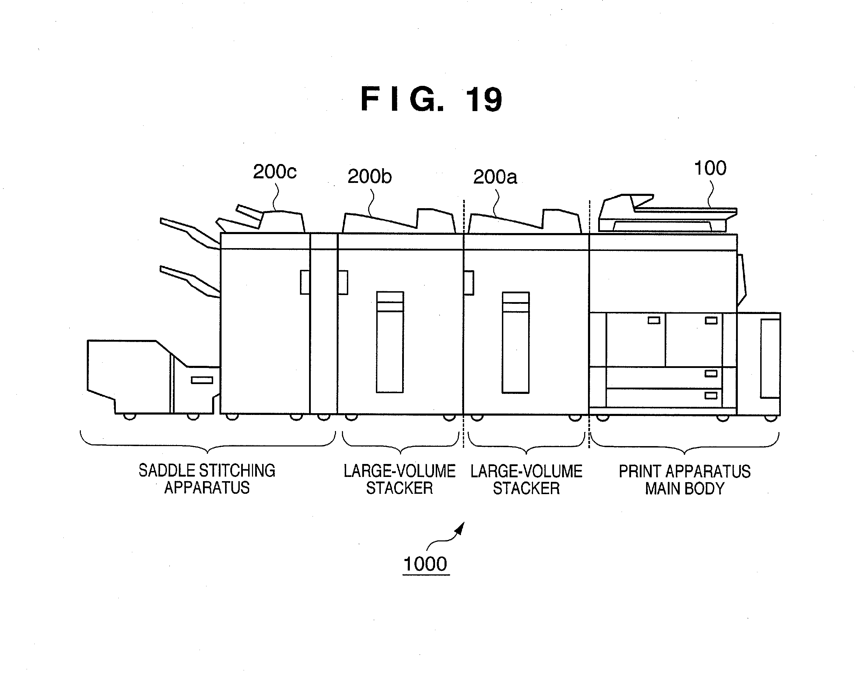

For example, the control unit 205 causes the display unit 401 to display a sheet process setting key 609 in Fig. 6. Assume that the user presses the sheet process setting key 609. Then, the control unit 205 causes the display unit 401 to execute a display for allowing the user to specify a desired sheet process among sheet process selection candidates executable using the inline type sheet processing apparatus of the print system 1000. The "sheet process setting key 609" illustrated in Fig. 6 will also be referred to as a "finishing key" in Fig. 19 and subsequent drawings. That is, the "sheet process setting key 609" and "finishing key" mean the same function button. In the following description, a "sheet process" will also be referred to as "finishing". As for a "punching process", needs for various punching processes (processes to punch a printed sheet) are assumable in the POD environment.

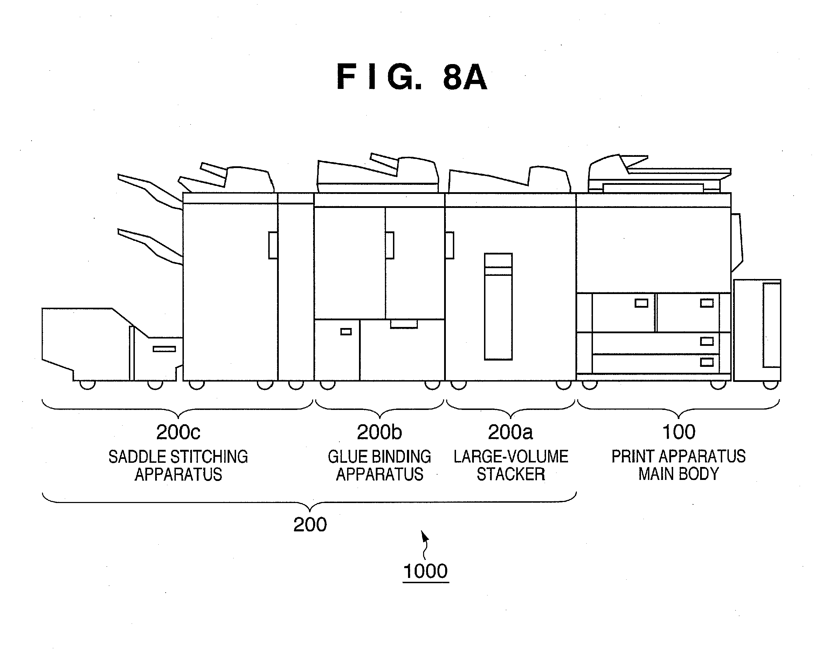

Thus, Fig. 19 and subsequent drawings illustrate "two-hole punching (process to form two holes at a sheet end corresponding to a sheet binding edge)" and "multi-hole punching (process to form many holes such as 30 holes at a sheet end)" as a plurality of types of punching processes. These processes are executable by the punching unit of the saddle stitching apparatus shown in Figs. 8A to 10B in correspondence with the above configuration. Another apparatus or unit may execute these punching processes. However, the use of an apparatus which satisfies the definition of an inline finisher in the print system 1000 is permitted, and the use of a different type of apparatus in the print system 1000 is inhibited.

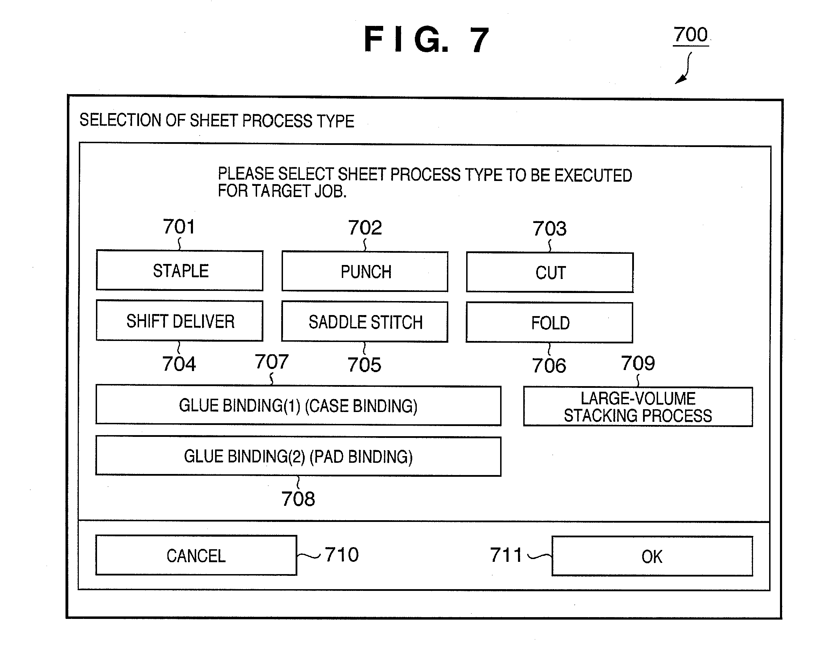

In this example, the control unit 205 causes the display unit 401 to execute a display in Fig. 7 in response to press of the sheet process setting key 609 by the user. The control unit 205 controls to accept, via the display of Fig. 7, a request to execute a sheet process by the inline sheet processing apparatus 200 for a printed sheet of a job to be processed.

The control unit 205 determines sheet processing apparatus candidates selectable via the display of Fig. 7 in accordance with the kind of sheet processing apparatus attached to the print system 1000 and the mounting status of the sheet processing apparatus. For example, the display of Fig. 7 permits accepting a request from a user to execute any type of sheet process among types of sheet processes listed below for a sheet printed by the printer unit 203:
(1) a stapling process,
(2) a punching process,
(3) a folding process,
(4) a shift delivery process,
(5) a cutting process,
(6) a saddle stitching process,
(7) a case binding process as an example of glue binding process,
(8) a pad binding process as another example of glue binding process, and
(9) a large-volume stacking process.

In the UI control example of Fig. 7, the control unit 205 controls the operation unit 204 to set these nine sheet processes as selection candidates. This is because the inline type sheet processing apparatuses of the print system 1000 can be used to selectively execute these nine sheet processes.

In other words, the control unit 205 controls the UI unit to exclude a sheet process unexecutable by the print system 1000 from selection candidates in the display of Fig. 7. For example, when the print system 1000 does not comprise one sheet processing apparatus capable of selectively executing a case binding process and pad binding process, or this sheet processing apparatus is out of order, the control unit 205 controls to invalidate keys 707 and 708. For example, the control unit 205 grays out and hatches the keys 707 and 708. With this setting, the control unit 205 controls not to accept a request from a user to execute corresponding sheet processes. Further, when the print system 1000 comprises a sheet processing apparatus capable of executing a sheet process different from the above-mentioned nine candidates, the control unit 205 controls the display of Fig. 7 to validate a display key for accepting a request from a user to execute the different sheet process. With this display key, the control unit 205 permits accepting a request from a user to execute the sheet process. The embodiment can execute this display control together with job process control (to be described later), preventing any user operation error.

In executing this control, the control unit 205 acquires system configuration information for specifying what kind of sheet processing apparatus the print system 1000 comprises as the sheet processing apparatus 200. In this control, the control unit 205 also uses, e.g., status information for specifying whether an error occurs in the sheet processing apparatus 200. The control unit 205 acquires these pieces of information by manually inputting them by a user via the UI unit, or automatically on the basis of a signal output from the sheet processing apparatus 200 via a signal line when the sheet processing apparatus 200 connects to the print apparatus 100. On the premise of this configuration, the control unit 205 causes the display unit 401 to execute the display of Fig. 7 with display contents based on the acquired information.

The print system 1000 can accept, from an external apparatus such as the PC 103 or 104, a request to print a target job and a request to execute a sheet process necessary for the job. When inputting a job from the external apparatus, the control unit 205 controls the display unit of the external apparatus serving as a print data transmission source to display the same functions as those of the display in Fig. 7. In this example, the control unit 205 causes the display unit of a computer such as the PC 103 or 104 to display a printer driver setup window (to be described later). When the UI of the external apparatus executes the display, the control unit of the external apparatus executes the above control. For example, when the display unit of the PC 103 or 104 displays a printer driver UI window, the control entity is the CPU of the PC.

### [Concrete Example of Configuration of Print System 1000 Controlled in Embodiment]

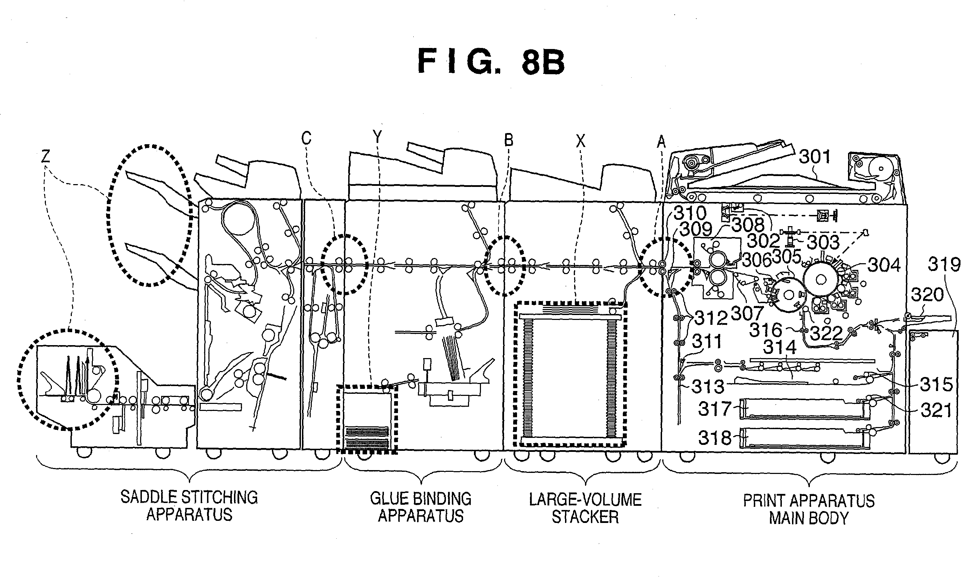

A system configuration representing how many and what kinds of inline type sheet processing apparatuses are connectable to the print apparatus 100 in the print system 1000, how to connect them, and what kinds of sheet processes they can execute will be explained with reference to Figs. 8A and 8B and the like in association of a feature of the embodiment.

The embodiment can implement, for example, a system configuration as shown in Figs. 8A and 8B as the print system 1000 shown in Figs. 1 to 3.

In the system configuration example of Fig. 8A, the print system 1000 comprises a total of three inline type sheet processing apparatuses, i.e., a large-volume stacker, glue binding apparatus, and saddle stitching apparatus as a group of sheet processing apparatuses 200. In the configuration example of Fig. 8A, the large-volume stacker, glue binding apparatus, and saddle stitching apparatus connect in the order named to the print apparatus 100 of the print system 1000. The control unit 205 serving as an example of the control unit of the print system 1000 comprehensively controls the print system 1000 having the system configuration as shown in Figs. 8A and 8B.

In this example, the large-volume stacker is a sheet processing apparatus capable of stacking a large number (e.g., 5,000) of sheets from the printer unit 203.

The glue binding apparatus in this example is a sheet processing apparatus capable of executing a case binding process requiring a sheet gluing process when attaching a cover and binding a bundle of sheets printed by the printer unit 203. The glue binding apparatus can also execute a pad binding process corresponding to a sheet process to glue and bind a bundle of sheets without attaching any cover. The glue binding apparatus is also called a case binding apparatus because it is a sheet processing apparatus capable of executing at least a case binding process.

The saddle stitching apparatus is a sheet processing apparatus capable of selectively executing a stapling process, punching process, cutting process, shift delivery process, saddle stitching process, and folding process for sheets from the printer unit 203.

In the embodiment, the control unit 205 registers, in a specific memory, various types of system configuration information on these sheet processing apparatuses as management information necessary for various control examples. For example, when the print system 1000 has the system configuration as shown in Fig. 8A, the control unit 205 registers the following pieces of information in the HDD 209.

(Information 1) Apparatus presence/absence information which allows the control unit 205 to confirm that the print system 1000 comprises an inline type sheet processing apparatus. This information corresponds to information which allows the control unit to specify whether the print system 1000 comprises an inline type sheet processing apparatus.

(Information 2) Inline sheet processing apparatus count information which allows the control unit 205 to confirm that the print system 1000 comprises three inline type sheet processing apparatuses 200. This information corresponds to information which allows the control unit to specify the number of inline type sheet processing apparatuses of the print system 1000.

(Information 3) Inline sheet processing apparatus type information which allows the control unit 205 to specify that the print system 1000 comprises the large-volume stacker, glue binding apparatus, and saddle stitching apparatus. This information corresponds to information which allows the control unit to confirm the types of inline type sheet processing apparatuses of the print system 1000.

(Information 4) Information which allows the control unit 205 to confirm that one of the three inline type sheet processing apparatuses is a large-volume stacker capable of stacking sheets from the printer unit 203. Apparatus performance information which allows the control unit 205 to confirm that another inline type sheet processing apparatuses is a glue binding apparatus capable of executing a glue binding process (case binding process and/or pad binding process) for sheets from the printer unit 203. Information which allows the control unit 205 to confirm that the remaining inline type sheet processing apparatuses is a saddle stitching apparatus capable of selectively executing stapling, punching, cutting, shift delivery, saddle stitching, and folding for sheets from the printer unit 203. In other words, information which allows the control unit 205 to specify that sheet processes executable by the system are a total of nine processes: stapling, punching, cutting, shift delivery, saddle stitching, folding, case binding, pad binding, and large-volume stacking. This information corresponds to information which allows the control unit to confirm performance information of sheet processes executable by the inline type sheet processing apparatuses of the print system 1000.

(Information 5) Information which allows the control unit 205 to confirm that the three sheet processing apparatuses cascade-connect to the print apparatus 100 in the order of the large-volume stacker, glue binding apparatus, and saddle stitching apparatus. This information corresponds to connection order information of these sheet processing apparatuses in the system when a plurality of inline finishers are connected.

The control unit 205 registers, in the HDD 209, various types of information as represented by (information 1) to (information 5) as system configuration information necessary for various control examples. The control unit 205 utilizes the information as criterion information necessary for job control (to be described later).

On the premise of the above configuration, for example, the print system 1000 has the system configuration as shown in Fig. 8A. Control executed by the control unit 205 in this system configuration will be exemplified.

For example, when the print system 1000 has the system configuration in Figs. 8A and 8B, it can execute all the nine sheet processes. The control unit 205 recognizes this on the basis of the criteria of (information 1) to (information 5). Based on the recognition result, the control unit 205 controls the UI unit so as to set all the nine sheet processes in the display of Fig. 7 as selection candidates. In addition, the control unit 205 executes the following control in response to a user operation.

For example, the control unit 205 accepts, from a user, a stapling process execution request for a target job via the UI unit in response to press of a key 701 by the user in the display of Fig. 7 executed by the UI unit under the control of the control unit 205. In response to this request, the control unit 205 causes the saddle stitching apparatus corresponding to the sheet processing apparatus 200c in Fig. 8A to staple printed sheets of the job.

For example, the control unit 205 accepts, from the user, a (sheet) punching process execution request for a target job via the UI unit in response to pressing of a key 702 by the user in the display of Fig. 7 executed by the UI unit under the control of the control unit 205. In response to this request, the control unit 205 causes the saddle stitching apparatus corresponding to the sheet processing apparatus 200c in Fig. 8A to punch printed sheets of the job.

For example, the control unit 205 accepts, from the user, a cutting process execution request for a target job via the UI unit in response to pressing of a key 703 by the user in the display of Fig. 7 executed by the UI unit under the control of the control unit 205. In response to this request, the control unit 205 causes the saddle stitching apparatus corresponding to the sheet processing apparatus 200c in Fig. 8A to cut printed sheets of the job.

For example, the control unit 205 accepts, from the user, a cutting process execution request for a target job via the UI unit in response to pressing of a key 704 by the user in the display of Fig. 7 executed by the UI unit under the control of the control unit 205. In response to this request, the control unit 205 causes the saddle stitching apparatus corresponding to the sheet processing apparatus 200c in Fig. 8A to cut printed sheets of the job.

For example, the control unit 205 accepts, from the user, a saddle stitching process execution request for a target job via the UI unit in response to pressing of a key 705 by the user in the display of Fig. 7 executed by the UI unit under the control of the control unit 205. In response to this request, the control unit 205 causes the saddle stitching apparatus corresponding to the sheet processing apparatus 200c in Fig. 8A to saddle-stitch printed sheets of the job.

For example, the control unit 205 accepts, from the user, a folding process execution request for a target job via the UI unit in response to pressing of a key 706 by the user in the display of Fig. 7 executed by the UI unit under the control of the control unit 205. In response to this request, the control unit 205 causes the saddle stitching apparatus corresponding to the sheet processing apparatus 200c in Fig. 8A to fold (e.g., Z-fold) printed sheets of the job.

For example, the control unit 205 accepts, from the user, a case binding process execution request for a target job via the UI unit in response to pressing of the key 707 by the user in the display of Fig. 7 executed by the UI unit under the control of the control unit 205. In response to this request, the control unit 205 causes the glue binding apparatus corresponding to the sheet processing apparatus 200b in Fig. 8A to case-bind printed sheets of the job.

For example, the control unit 205 accepts, from the user, a pad binding process execution request for a target job via the UI unit in response to pressing of the key 708 by the user in the display of Fig. 7 executed by the UI unit under the control of the control unit 205. In response to this request, the control unit 205 causes the glue binding apparatus corresponding to the sheet processing apparatus 200b in Fig. 8A to pad-bind printed sheets of the job.

For example, the control unit 205 accepts, from the user, a large-volume stacking process execution request for a target job via the UI unit in response to pressing of a key 709 by the user in the display of Fig. 7 executed by the UI unit under the control of the control unit 205. In response to this request, the control unit 205 causes the large-volume stacker corresponding to the sheet processing apparatus 200a in Fig. 8A to stack a large number of printed sheets of the job.

As described above, the control unit 205 controls to accept, via the UI unit together with a print execution request, a request to execute a sheet process desired by the user among selection candidates corresponding to sheet processes executable by the sheet processing apparatuses of the print system 1000. In response to accepting a request from the user via the UI unit provided by the embodiment to print a target job, the control unit 205 causes the printer unit 203 to execute a print process necessary for the job. Further, the control unit 205 causes a sheet processing apparatus of the print system 1000 to execute a sheet process necessary for printed sheets of the job.

As another feature of the embodiment, the control unit 205 executes the following control in the print system 1000.

For example, the print system 1000 has the system configuration as shown in Fig. 8A. That is, the print system 1000 is built by connecting the print apparatus 100 → the large-volume stacker → the glue binding apparatus → the saddle stitching apparatus in the order named. The internal system configuration in this case is as shown in Fig. 8B.

Fig. 8B is a sectional view of the apparatuses of the whole print system 1000 when the print system 1000 has the system configuration in Fig. 8A. The apparatus configuration in Fig. 8B corresponds to that in Fig. 8A.

As is apparent from the internal apparatus configuration in Fig. 8B, a sheet printed by the printer unit 203 of the print apparatus 100 is capable of being supplied into the respective sheet processing apparatuses. More specifically, as shown in Fig. 8B, the respective sheet processing apparatuses comprise sheet feeding paths capable of feeding a sheet via points A, B, and C in the apparatuses.

Each inline type sheet processing apparatus such as the sheet processing apparatus 200a or 200b in Fig. 8B has a function of receiving a sheet from a preceding apparatus connected to the input side of the sheet processing apparatus even if a target job does not require a sheet process executable by the sheet processing apparatus. Each inline type sheet processing apparatus has a function of transferring a sheet received from the preceding apparatus to a succeeding apparatus connected to the output side of the sheet processing apparatus.

As described above, in the print system 1000 of the embodiment, a sheet processing apparatus, which executes a sheet process different from sheet processes necessary for a target job, has a function of conveying sheets of the target job from a preceding apparatus to a succeeding apparatus. This configuration is also a feature of the embodiment.

For example, when the print system 1000 has the system configuration as shown in Figs. 8A and 8B on the premise of the above system configuration, the control unit 205 executes the following control for the print system 1000 in accordance with a job for which a user issues a print execution request via the UI unit according to the above-described method. A control example called (case 1) in Fig. 8B, a control example called (case 2) in Fig. 8B, and a control example called (case 3) in Fig. 8B will be sequentially explained as control examples executed by the control unit 205 for the print system 1000 on condition that the print system 1000 has the system configuration shown in Figs. 8A and 8B.

The control example (case 1) in Fig. 8B will be described which corresponds to control executed by the control unit 205 for the print system 1000 on condition that the print system 1000 has the system configuration illustrated in Figs. 8A and 8B. For example, when the print system 1000 has the system configuration in Figs. 8A and 8B, a target job whose print execution request is accepted from a user requires a sheet process (e.g., a stacking process) by the large-volume stacker after a print process. This job is called a "stacker job".

A case will be explained in which the print system 1000 having the system configuration shown in Figs. 8A and 8B processes the stacker job. In this case, the control unit 205 makes job sheets printed by the print apparatus 100 pass through point A in Fig. 8B, and causes the large-volume stacker to execute the sheet process. The control unit 205 holds the print result of the stacker job having undergone the sheet process (e.g., the stacking process) by the large-volume stacker, at a delivery destination X inside the large-volume stacker shown in Fig. 8B without conveying the print result to another apparatus (e.g., an inline finisher positioned on the output side of the large-volume stacker in the system of Fig. 8B).

An operator can directly take out, from the delivery destination X, the printed material of the stacker job held at the delivery destination X in Fig. 8B. In other words, this configuration can omit a series of apparatus operations and operator operations to convey sheets to a most downstream delivery destination Z in the sheet conveyance direction in Fig. 8B and take out the printed material of the stacker job from the delivery destination Z.

A series of control operations executed by the control unit 205 when the print system 1000 has the system configuration in Figs. 8A and 8B corresponds to a control example (case 1) in Fig. 8B.

The control example (case 2) in Fig. 8B will be described which corresponds to control executed by the control unit 205 for the print system 1000 on condition that the print system 1000 has the system configuration illustrated in Figs. 8A and 8B. For example, when the print system 1000 has the system configuration in Figs. 8A and 8B, a target job whose print execution request is accepted from a user requires a sheet process (e.g., a case binding process or pad binding process) by the glue binding apparatus after a print process. This job is called a "glue binding job".

A case will be explained in which the print system 1000 having the system configuration shown in Figs. 8A and 8B processes the glue binding job. In this case, the control unit 205 makes job sheets printed by the print apparatus 100 pass through points A and B in Fig. 8B, and causes the glue binding apparatus to execute the sheet process. The control unit 205 holds the print result of the glue binding job having undergone the sheet process (e.g., the case binding process or pad binding process) by the glue binding apparatus, at a delivery destination Y inside the glue binding apparatus shown in Fig. 8B without conveying the print result to another apparatus (e.g., an inline finisher positioned on the output side of the glue binding apparatus in the system of Fig. 8B).

The operator can directly take out, from the delivery destination Y, the printed material of the glue binding job held at the delivery destination Y in Fig. 8B. In other words, this configuration can omit a series of apparatus operations and operator operations to convey sheets to the most downstream delivery destination Z in the sheet conveyance direction in Fig. 8B and take out the printed material of the glue binding job from the delivery destination Z.

A series of control operations executed by the control unit 205 when the print system 1000 has the system configuration in Figs. 8A and 8B corresponds to a control example (case 2) in Fig. 8B.

The control example (case 3) in Fig. 8B will be described which corresponds to control executed by the control unit 205 for the print system 1000 on condition that the print system 1000 has the system configuration illustrated in Figs. 8A and 8B. For example, when the print system 1000 has the system configuration in Figs. 8A and 8B, a target job whose print execution request is accepted from a user requires a sheet process (e.g., a saddle stitching process, punching process, cutting process, shift delivery process, or folding process) by the saddle stitching apparatus after a print process. This job is called a "saddle stitching job".

A case will be explained in which the print system 1000 having the system configuration shown in Figs. 8A and 8B processes the saddle stitching job. In this case, the control unit 205 makes job sheets printed by the print apparatus 100 pass through points A, B, and C in Fig. 8B, and causes the saddle stitching apparatus to execute the sheet process. The control unit 205 holds the print result of the saddle stitching job having undergone the sheet process by the saddle stitching apparatus, at the delivery destination Z of the saddle stitching apparatus shown in Fig. 8B without conveying the print result to another apparatus.

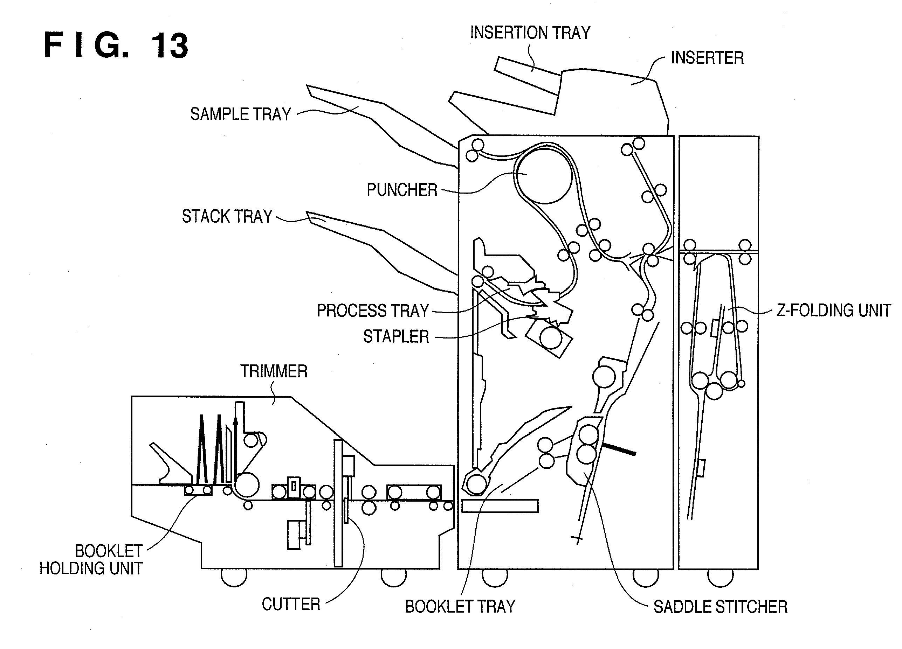

The delivery destination Z in Fig. 8B has a plurality of delivery destination candidates. This is because the saddle stitching apparatus of the embodiment can execute a plurality of sheet processes and the delivery destination changes in each sheet process, which will be described with reference to Fig. 13.

A series of control operations executed by the control unit 205 when the print system 1000 has the system configuration in Figs. 8A and 8B corresponds to a control example (case 3) in Fig. 8B.

As described above, the control unit 205 serving as an example of the control unit of the embodiment also executes paper handling control based on system configuration information of the print system 1000 that is stored in the HDD 209.

Information corresponding to the system configuration information contains information representing whether the system comprises an inline finisher, and when the system comprises an inline finisher, information on the number of inline finishers and their performance information. When the system comprises a plurality of inline finishers, their connection order information also corresponds to the system configuration information.

As shown in Figs. 1 to 3, 8A, 8B, and the like, the print system 1000 according to the embodiment enables connecting a plurality of inline type sheet processing apparatuses to the print apparatus 100. As is apparent from a comparison between Figs. 8A and 8B and Figs. 9A, 9B, 10A, and 10B (to be described later), a plurality of inline type sheet processing apparatuses can be independently connected or disconnected, or a free combination of them can be attached to the print apparatus 100. The connection order of inline type sheet processing apparatuses is arbitrary as long as they are physically connectable. However, the embodiment imposes restrictions on the system configuration.

For example, an apparatus permitted to be adopted as an inline type sheet processing apparatus in the print system 1000 must satisfy the following constituent components.

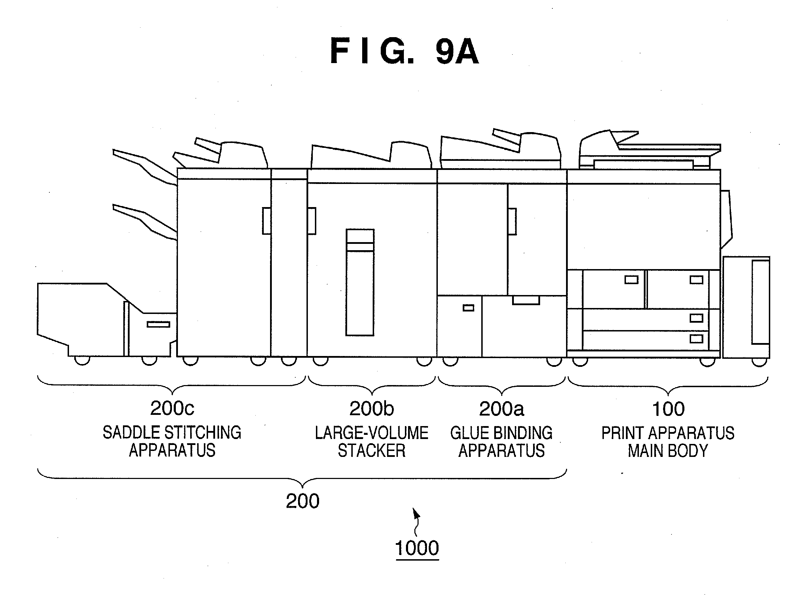

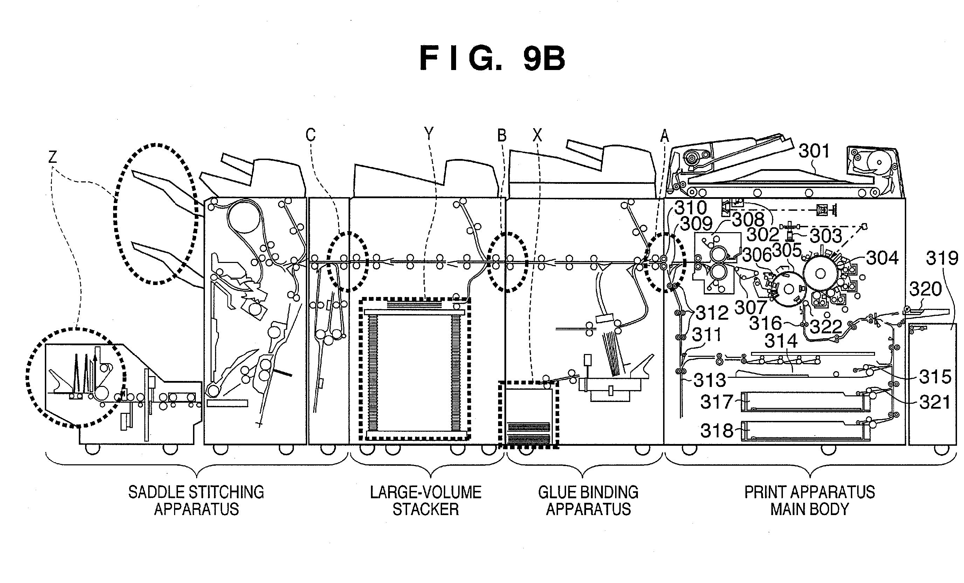

A sheet processing apparatus can execute a sheet process for sheets of a job requiring a sheet process executable by the sheet processing apparatus, and has a sheet conveyance function of receiving, from a preceding apparatus, sheets of a job requiring no sheet process by the sheet processing apparatus and transferring them to a succeeding apparatus. In this example, this sheet processing apparatus corresponds to the large-volume stacker and glue binding apparatus shown in the system configuration of Figs. 8A and 8B and that of Figs. 9A and 9B (to be described later).

The embodiment also permits the use of a sheet processing apparatus, which does not meet the above configuration, as an inline type sheet processing apparatus in the print system 1000. For example, this apparatus satisfies the following components.

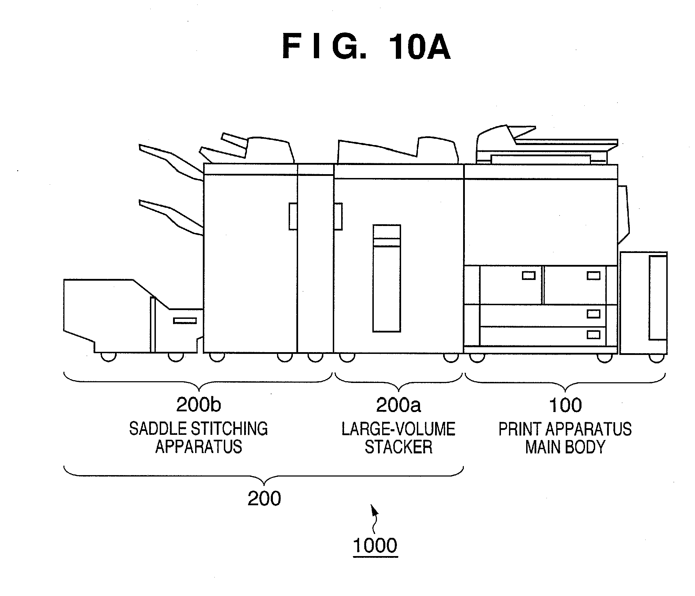

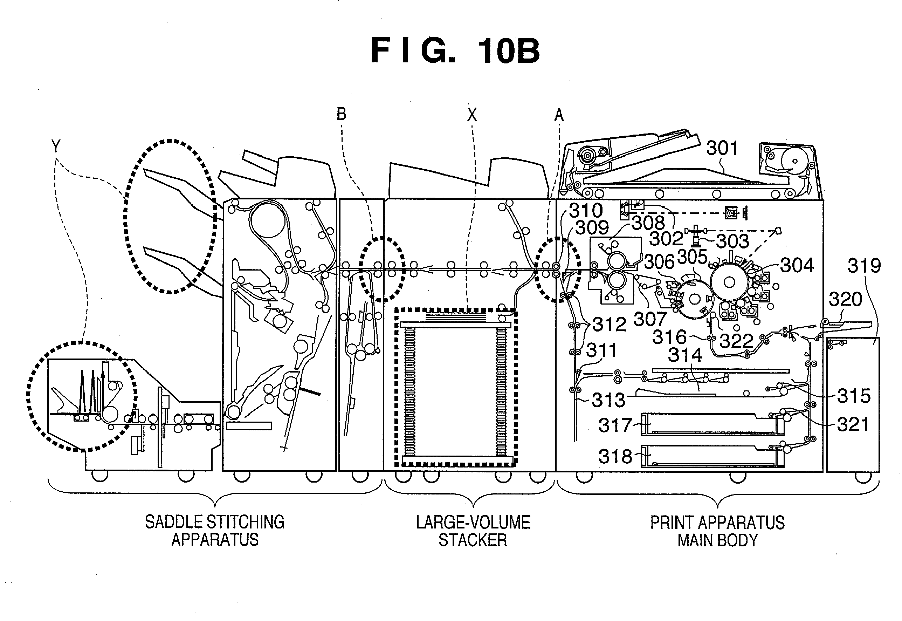

A sheet processing apparatus can execute a sheet process for sheets of a job requiring a sheet process executable by the sheet processing apparatus, but does not have the sheet conveyance function of receiving, from a preceding apparatus, sheets of a job requiring no sheet process by the sheet processing apparatus and transferring them to a succeeding apparatus. In this example, this sheet processing apparatus corresponds to the saddle stitching apparatus shown in the system configuration of Figs. 8A and 8B, that of Figs. 9A and 9B, and that of Figs. 10A and 10B (to be described later). The embodiment imposes restrictions on an apparatus of this type.

For example, when the print system 1000 employs an inline finisher (e.g., the saddle stitching apparatus in Figs. 8A and 8B) having no function of conveying sheets to a succeeding apparatus, the number of apparatuses of this type is limited to one. However, the embodiment permits simultaneous use of inline finishers of another type.

For example, the embodiment permits the use of the large-volume stacker and glue binding apparatus together with the saddle stitching apparatus, as represented by the system configuration in Figs. 8A and 8B and that of Figs. 9A and 9B (to be described later). When a plurality of sheet processing apparatuses are cascade-connected and used, an inline type sheet processing apparatus having no function of conveying sheets to a succeeding apparatus is installed at the most downstream position in the sheet conveyance direction.

For example, the saddle stitching apparatus is connected last in the print system 1000, as represented by the system configuration of Figs. 8A and 8B and that of Figs. 9A and 9B (to be described later). That is, it is inhibited to configure the system by interposing the saddle stitching apparatus between the large-volume stacker and the glue binding apparatus, as a system configuration different from that of Figs. 8A and 8B and that of Figs. 9A and 9B (to be described later).

The control unit of the system comprehensively controls the print system 1000 so as to operate under the above-described restrictions.

For example, if inline type sheet processing apparatuses are connected in a connection order which violates the restrictions, the control unit 205 causes the UI unit to display a warning. For example, when a user inputs the connection order of sheet processing apparatuses via the UI unit, as represented by the above-mentioned configuration, the control unit 205 controls to invalidate a user setting which violates the restrictions. For example, the control unit 205 executes gray-out display or hatching display to inhibit any improper connection setting.

By employing the above configuration, any user operation error, apparatus malfunction, and the like can be prevented in the configuration of the embodiment. That is, this configuration further enhances effects described in the embodiment.

On the premise of this configuration, the embodiment can freely build the system configuration of the print system 1000 under the restrictions.

For example, the operator of the POD system 10000 can arbitrarily determine and change the connection order of inline type sheet processing apparatuses and the number of connected inline type sheet processing apparatuses under the restrictions. The print system 1000 executes control corresponding to the system configuration status. An example of this control will be described.

The print system 1000 can also take the system configuration in Fig. 9A, as an example of a system configuration in which the connection order of inline type sheet processing apparatuses changes from that in the system configuration of Fig. 8A.

The system configuration of Fig. 9A is different from that of Fig. 8A in the connection order of inline sheet processing apparatuses of the print system 1000. More specifically, the print system 1000 is built by connecting the print apparatus 100 → the glue binding apparatus → the large-volume stacker → the saddle stitching apparatus in the order named. The internal system configuration in this case is as shown in Fig. 9B.

Fig. 9B is a sectional view of the apparatuses of the whole print system 1000 when the print system 1000 has the system configuration in Fig. 9A. The system configuration in Fig. 9B corresponds to the internal system configuration in Fig. 9A.

Similar to the above-described system configuration example, the internal system configuration in Fig. 9B can also supply a sheet printed by the printer unit 203 of the print apparatus 100 into the respective sheet processing apparatuses. More specifically, as shown in Fig. 9B, the respective sheet processing apparatuses comprise sheet feeding paths capable of feeding a sheet from the printer unit 203 via points A, B, and C in the apparatuses.

The system configuration in Figs. 9A and 9B also follows the above restrictions. For example, the sheet processing apparatuses cascade-connect to the print apparatus 100 so as to install the saddle stitching apparatus at the most downstream position in the sheet conveyance direction.

For example, when the print system 1000 has the system configuration as shown in Figs. 9A and 9B on the premise of the above configuration, the control unit 205 executes the following control for a job for which a user issues a print execution request via the UI unit according to the above-described method. A control example called (case 1) in Fig. 9B, a control example called (case 2) in Fig. 9B, and a control example called (case 3) in Fig. 9B will be sequentially explained as control examples executed by the control unit 205 for the print system 1000 on condition that the print system 1000 has the system configuration shown in Figs. 9A and 9B.

The control example (case 1) in Fig. 9B will be described which corresponds to control executed by the control unit 205 for the print system 1000 on condition that the print system 1000 has the system configuration illustrated in Figs. 9A and 9B. For example, when the print system 1000 has the system configuration in Figs. 9A and 9B, a target job whose print execution request is accepted from a user requires a sheet process (e.g., a stacking process) by the large-volume stacker after a print process. This job is called a "stacker job".

A case will be explained in which the print system 1000 having the system configuration shown in Figs. 9A and 9B processes the stacker job. In this case, the control unit 205 makes job sheets printed by the print apparatus 100 pass through points A and B in Fig. 9B, and causes the large-volume stacker to execute the sheet process. The control unit 205 holds the print result of the stacker job having undergone the sheet process (e.g., the stacking process) by the large-volume stacker, at the delivery destination Y inside the large-volume stacker shown in Fig. 9B without conveying the print result to another apparatus (e.g., an inline finisher positioned on the output side of the large-volume stacker in the system of Fig. 9B).

An operator can directly take out, from the delivery destination Y, the printed material of the stacker job held at the delivery destination Y in Fig. 9B. In other words, this configuration can omit a series of apparatus operations and operator operations to convey sheets to the most downstream delivery destination Z in the sheet conveyance direction in Fig. 9B and take out the printed material of the stacker job from the delivery destination Z.

A series of control operations executed by the control unit 205 when the print system 1000 has the system configuration in Figs. 9A and 9B corresponds to a control example (case 1) in Fig. 9B.

The control example (case 2) in Fig. 9B will be described which corresponds to control executed by the control unit 205 for the print system 1000 on condition that the print system 1000 has the system configuration illustrated in Figs. 9A and 9B. For example, when the print system 1000 has the system configuration in Figs. 9A and 9B, a target job whose print execution request is accepted from a user requires a sheet process (e.g., a case binding process or pad binding process) by the glue binding apparatus after a print process. This job is called a "glue binding job".

A case will be explained in which the print system 1000 having the system configuration shown in Figs. 9A and 9B processes the glue binding job. In this case, the control unit 205 makes job sheets printed by the print apparatus 100 pass through point A in Fig. 9B, and causes the glue binding apparatus to execute the sheet process. The control unit 205 holds the print result of the glue binding job having undergone the sheet process (e.g., the case binding process or pad binding process) by the glue binding apparatus, at the delivery destination X inside the glue binding apparatus shown in Fig. 9B without conveying the print result to another apparatus (e.g., an inline finisher positioned on the output side of the glue binding apparatus in the system of Fig. 9B).

The operator can directly take out, from the delivery destination X, the printed material of the glue binding job held at the delivery destination X in Fig. 9B. In other words, this configuration can omit a series of apparatus operations and operator operations to convey sheets to the most downstream delivery destination Z in the sheet conveyance direction in Fig. 9B and take out the printed material of the glue binding job from the delivery destination Z.

A series of control operations executed by the control unit 205 when the print system 1000 has the system configuration in Figs. 9A and 9B corresponds to a control example (case 2) in Fig. 9B.

The control example (case 3) in Fig. 9B will be described which corresponds to control executed by the control unit 205 for the print system 1000 on condition that the print system 1000 has the system configuration illustrated in Figs. 9A and 9B. For example, when the print system 1000 has the system configuration in Figs. 9A and 9B, a target job whose print execution request is accepted from a user requires a sheet process (e.g., a saddle stitching process, punching process, cutting process, shift delivery process, or folding process) by the saddle stitching apparatus after a print process. This job is called a "saddle stitching job".

A case will be explained in which the print system 1000 having the system configuration shown in Figs. 9A and 9B processes the saddle stitching job. In this case, the control unit 205 makes job sheets printed by the print apparatus 100 pass through points A, B, and C in Fig. 9B, and causes the saddle stitching apparatus to execute the sheet process. The control unit 205 holds the print result of the saddle stitching job having undergone the sheet process by the saddle stitching apparatus, at the delivery destination Z of the saddle stitching apparatus shown in Fig. 9B without conveying the print result to another apparatus.

The delivery destination Z in Fig. 9B has a plurality of delivery destination candidates. This is because the saddle stitching apparatus of the embodiment can execute a plurality of sheet processes and the delivery destination changes in each sheet process, which will be described with reference to Fig. 13.

A series of control operations executed by the control unit 205 when the print system 1000 has the system configuration in Figs. 9A and 9B corresponds to a control example (case 3) in Fig. 9B.

As illustrated in Figs. 8A, 8B, 9A, and 9B, the print system 1000 can flexibly change the connection order of sheet processing apparatuses permitted to be used as inline sheet processing apparatuses under the restrictions. The present invention provides many mechanisms for maximizing the above-described effects of the embodiment.

From this viewpoint, in the embodiment, the print system 1000 can properly employ a configuration other than the system configurations as shown in Figs. 8A, 8B, 9A, and 9B. An example of this configuration will be explained below.

For example, the system configurations in Figs. 8A, 8B, 9A, and 9B each comprise three inline type sheet processing apparatuses. In the embodiment, a user can arbitrarily determine the number of inline type sheet processing apparatuses under the restrictions.

For example, the print system 1000 can also adopt the system configuration in Fig. 10A.

The system configuration of Fig. 10A is different from those of Figs. 8A and 9A in the number of connected sheet processing apparatuses. More specifically, the print system 1000 is built by connecting two sheet processing apparatuses in the order of the print apparatus 100 → the large-volume stacker → the saddle stitching apparatus. The internal system configuration in this case is as shown in Fig. 10B.

Fig. 10B is a sectional view of the system configuration of the overall print system 1000 when the print system 1000 has the system configuration in Fig. 10A. The apparatus configuration of Fig. 10B corresponds to that of Fig. 10A.

Similar to the above-described system configuration examples, the internal apparatus configuration in Fig. 10B can also supply a sheet printed by the printer unit 203 of the print apparatus 100 into the respective sheet processing apparatuses. More specifically, as shown in Fig. 10B, the respective sheet processing apparatuses comprise sheet feeding paths capable of feeding a sheet via points A and B in the apparatuses. This system configuration also follows the above restrictions. For example, the sheet processing apparatuses are so connected as to install the saddle stitching apparatus at the most downstream position in the sheet conveyance direction.

For example, when the print system 1000 has the system configuration as shown in Figs. 10A and 10B on the premise of the above configuration, the control unit 205 executes the following control for a job for which a user issues a print execution request via the UI unit according to the above-described method. A control example called (case 1) in Fig. 10B, a control example called (case 2) in Fig. 10B, and a control example called (inhibition control) in Fig. 10B will be sequentially explained as control examples executed by the control unit 205 for the print system 1000 on condition that the print system 1000 has the system configuration shown in Figs. 10A and 10B.

The control example (case 1) in Fig. 10B will be described which corresponds to control executed by the control unit 205 for the print system 1000 on condition that the print system 1000 has the system configuration illustrated in Figs. 10A and 10B. For example, when the print system 1000 has the system configuration in Figs. 10A and 10B, a target job whose print execution request is accepted from a user requires a sheet process (e.g., a stacking process) by the large-volume stacker after a print process. This job is called a "stacker job".

A case will be explained in which the print system 1000 having the system configuration shown in Figs. 10A and 10B processes the stacker job. In this case, the control unit 205 makes job sheets printed by the print apparatus 100 pass through point A in Fig. 10B, and causes the large-volume stacker to execute the sheet process. The control unit 205 holds the print result of the stacker job having undergone the sheet process (e.g., the stacking process) by the large-volume stacker, at the delivery destination X inside the large-volume stacker shown in Fig. 10B without conveying the print result to another apparatus (e.g., an inline finisher positioned on the output side of the large-volume stacker in the system of Fig. 10B).

An operator can directly take out, from the delivery destination X, the printed material of the stacker job held at the delivery destination X in Fig. 10B. In other words, this configuration can omit a series of apparatus operations and operator operations to convey sheets to the most downstream delivery destination Y in the sheet conveyance direction in Fig. 10B and take out the printed material of the stacker job from the delivery destination Y.

A series of control operations executed by the control unit 205 when the print system 1000 has the system configuration in Figs. 10A and 10B corresponds to a control example (case 1) in Fig. 10B.

The control example (case 2) in Fig. 10B will be described which corresponds to control executed by the control unit 205 for the print system 1000 on condition that the print system 1000 has the system configuration illustrated in Figs. 10A and 10B. For example, when the print system 1000 has the system configuration in Figs. 10A and 10B, a target job whose print execution request is accepted from a user requires a sheet process (e.g., a saddle stitching process, punching process, cutting process, shift delivery process, or folding process) by the saddle stitching apparatus after a print process. This job is called a "saddle stitching job".

A case will be explained in which the print system 1000 having the system configuration shown in Figs. 10A and 10B processes the saddle stitching job. In this case, the control unit 205 makes job sheets printed by the print apparatus 100 pass through points A and B in Fig. 10B, and causes the saddle stitching apparatus to execute the sheet process. The control unit 205 holds the print result of the saddle stitching job having undergone the sheet process by the saddle stitching apparatus, at the delivery destination Y of the saddle stitching apparatus shown in Fig. 10B without conveying the print result to another apparatus.

The delivery destination Y in Fig. 10B has a plurality of delivery destination candidates. This is because the saddle stitching apparatus of the embodiment can execute a plurality of sheet processes and the delivery destination changes in each sheet process, which will be described with reference to Fig. 13.

A series of control operations executed by the control unit 205 when the print system 1000 has the system configuration in Figs. 10A and 10B corresponds to a control example (case 2) in Fig. 10B.

In the system configuration of Figs. 10A and 10B, the control unit 205 inhibits acceptance of a user request to execute a sheet process (e.g., a case binding process or pad binding process) by the glue binding apparatus. This control is (inhibition control) in Fig. 10B which corresponds to control executed by the control unit 205 for the print system 1000 on condition that the print system 1000 has the system configuration illustrated in Figs. 10A and 10B. A more detailed example of (inhibition control) in Fig. 10B will be described.

For example, when the print system has the system configuration as in Figs. 10A and 10B, the UI unit executes the display in Fig. 7 under the control of the control unit 205 so as to hatch or gray out the keys 707 and 708. In other words, the control unit 205 invalidates user operations to the keys 707 and 708.

When the print system 1000 has the system configuration as shown in Figs. 10A and 10B, as described above, the control unit 205 inhibits the print system 1000 from executing the glue binding process.

Control executed by the control unit 205 when the print system 1000 has the system configuration in Figs. 10A and 10B corresponds to (inhibition control) in Fig. 10B.

As described above, the control unit 205 executes various control examples depending on the number of connected inline type sheet processing apparatuses in the print system 1000. That is, the control unit 205 executes various control examples corresponding to sheet process types executable by the print system 1000.

As is apparent from the description of Figs. 8A to 10B and the like, the control unit of the print system 1000 causes the print system 1000 to execute various control examples corresponding to system configuration statuses (the number of connected inline sheet processing apparatuses and the connection order) of the print system 1000.

The embodiment flexibly changes the connection order of inline sheet processing apparatuses and the number of connected inline sheet processing apparatuses in the print system 1000 so as to meet user needs because the embodiment considers all user merits.

The reason why each inline type sheet processing apparatus permitted to be used in the print system 1000 is an independent housing and is detachable from the print apparatus will be described.

As one reason, this mechanism considers a company or the like which does not require any case binding process but wants to perform a large-volume stacking process, as a POD company which is the delivery destination of the print system 1000.

In the system use environment, a need to implement all the nine sheet processes by inline sheet processing apparatuses is expected. A need to implement only a specific sheet process by an inline sheet processing apparatus may also arise. The embodiment provides a mechanism coping with various needs from respective POD companies serving as delivery destinations.

The reason why inline type sheet processing apparatuses permitted to be used in the print system 1000 can be arbitrarily changed in connection order and combined under the restrictions will be explained. This reason is also a reason for setting a delivery destination at which an operator can take out a printed material from each inline sheet processing apparatus, as shown in Figs. 8A, 8B, 9A, and 9B.

As one reason, user friendliness of the print system 1000 improves by flexibly building the system in accordance with the use frequencies of sheet processes requested in the print system 1000.

For example, a POD company having the POD system 10000 in Fig. 1 tends to receive a relatively large number of print jobs requiring a case binding process for a user manual, guidebook, and the like, as print form needs from customers. In this use environment, it is more convenient to build the print system 1000 not in the connection order as shown in Figs. 8A and 8B but in the connection order as shown in Figs. 9A and 9B.

In other words, it is more convenient to connect the glue binding apparatus at a portion closer to the print apparatus 100. This is because a shorter sheet conveyance distance in the apparatus necessary to execute a case binding process for a case binding job is effective.

For example, as the sheet conveyance distance is longer, the time taken to complete a printed material as the final product of the job is longer. As the sheet conveyance distance is longer, the jam generation rate in the apparatus during a sheet conveyance operation is likely to be higher. These are reasons for the flexible connection order.

For a POD company which receives many case binding jobs as user needs, not the system configuration of Figs. 8A and 8B but that of Figs. 9A and 9B can shorten the sheet conveyance distance necessary to create a printed material of a case binding job, and allows quickly taking out the printed material.

Assume that another POD company tends to receive many jobs requiring large-volume sheet stacking. For this POD company, not the system configuration of Figs. 9A and 9B but that of Figs. 8A and 8B can shorten the sheet conveyance distance necessary to create a printed material of a stacker job, and allows quickly taking out the printed material.

In this fashion, the embodiment pays attention to an increase in productivity of jobs in the print system 1000 with an efficient, flexible system configuration suited to the use environment. In addition, the embodiment can provide many mechanisms which provide friendliness to a user who utilizes the print system 1000.

Concrete examples of the internal structures of various inline type sheet processing apparatuses available in the print system 1000 illustrated in Figs. 8A to 10B will be described for each sheet processing apparatus.

### [Internal Structure of Large-Volume Stacker]

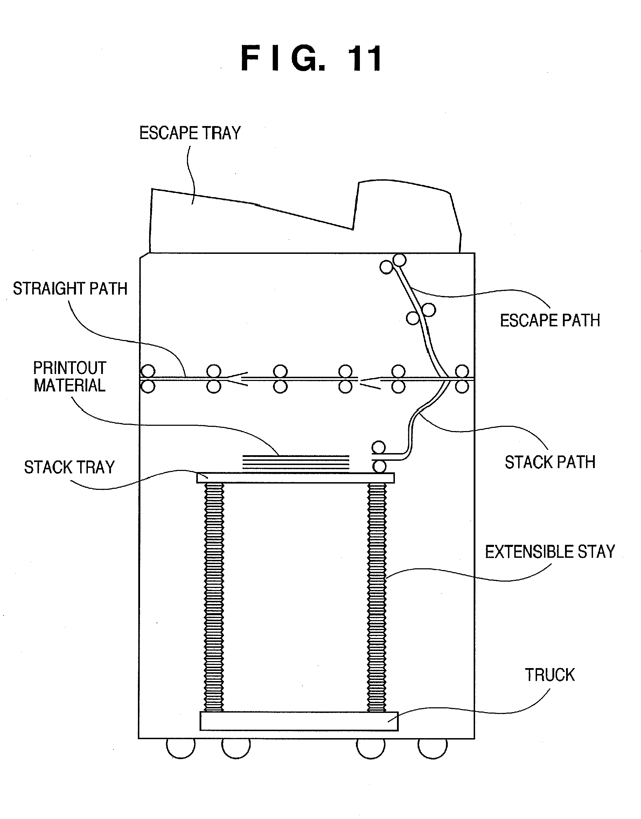

Fig. 11 is a sectional view showing an example of the internal structure of the large-volume stacker in Figs. 8A to 10B controlled by the control unit 205 in the embodiment.

In the large-volume stacker, the sheet feeding path extending from the print apparatus 100 is roughly divided into three: a straight path, escape path, and stack path, as shown in Fig. 11. The large-volume stacker incorporates these three sheet feeding paths.

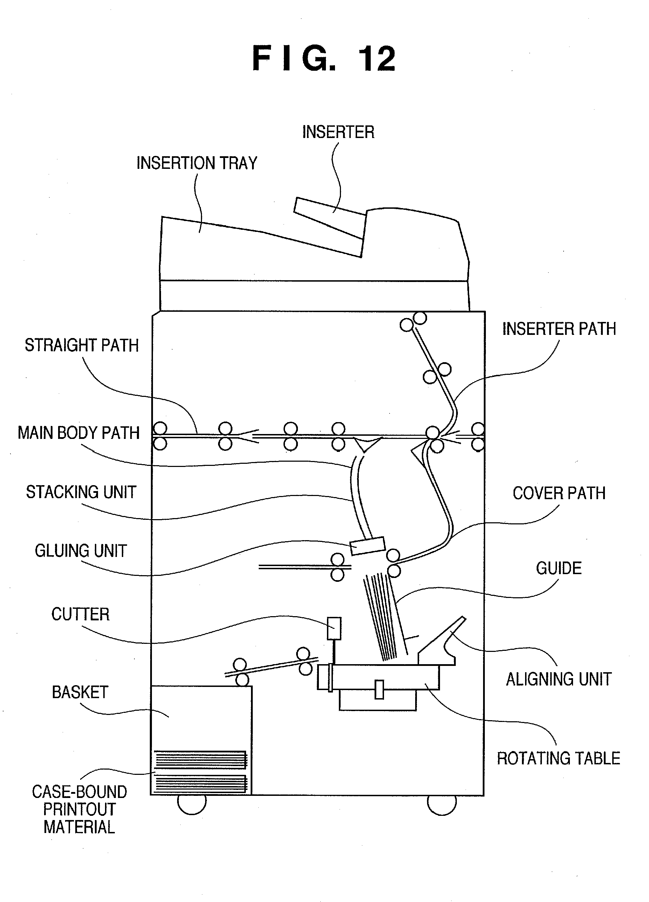

The straight path of the large-volume stacker in Fig. 11 and that of the glue binding apparatus in Fig. 12 function to transfer sheets received from a preceding apparatus to a succeeding apparatus, and are also called through paths in inline sheet processing apparatuses in this example.

The straight path in the large-volume stacker is a sheet feeding path for transferring, to a succeeding apparatus, sheets of a job requiring no sheet stacking process by the stacking unit of the stacker. In other words, the straight path is a unit for conveying sheets of a job requiring no sheet process by the sheet processing apparatus from an upstream apparatus to a downstream apparatus.

The escape path in the large-volume stacker is used to output sheets without stacking them. For example, when no succeeding sheet processing apparatus is connected, a printed material is conveyed to the escape path and taken out from the stack tray so as to quickly take out the printed material from the stack tray for the purpose of output confirmation work (proof print) or the like.

The sheet feeding path in the large-volume stacker comprises a plurality of sheet sensors necessary to detect the sheet conveyance status and jam.

The CPU (not shown) of the large-volume stacker notifies the control unit 205 of sheet detection information from each sensor via a signal line (signal line shown in Fig. 2 for electrically connecting the sheet processing apparatus 200 and control unit 205) for communicating data with the control unit 205. On the basis of the information from the large-volume stacker, the control unit 205 grasps the sheet conveyance status and jam in the large-volume stacker. When the print system is configured by cascade-connecting another sheet processing apparatus between the large-volume stacker and the print apparatus 100, the CPU of the large-volume stacker notifies the control unit 205 via the CPU of the sheet processing apparatus of sensor information of the large-volume stacker. As described above, the large-volume stacker comprises an arrangement unique to an inline finisher.

The stack path in the large-volume stacker is a sheet feeding path for causing the large-volume stacker to stack sheets of a job requiring a sheet stacking process by the stacking unit of the stacker.

For example, the print system 1000 comprises the large-volume stacker shown in Figs. 8A to 10B. In this system configuration status, the control unit 205 accepts a request from a user via the UI unit by a key operation to the key 709 in the display of Fig. 7 to execute a sheet stacking process executable by the stacker for a target job. The control unit 205 controls to convey sheets to the stack path of the large-volume stacker. The sheets conveyed to the stack path are delivered to the stack tray.

The stack tray in Fig. 11 is a stacking unit mounted on an extensible stay. A shock absorber or the like is attached to the joint between the stay and the stack tray. The control unit 205 controls the large-volume stacker to stack printed sheets of a target job using the stack tray. A truck supports the extensible stay from below it. When attaching a handle (not shown) to the truck, the truck can carry stacked outputs on it to another offline finisher.

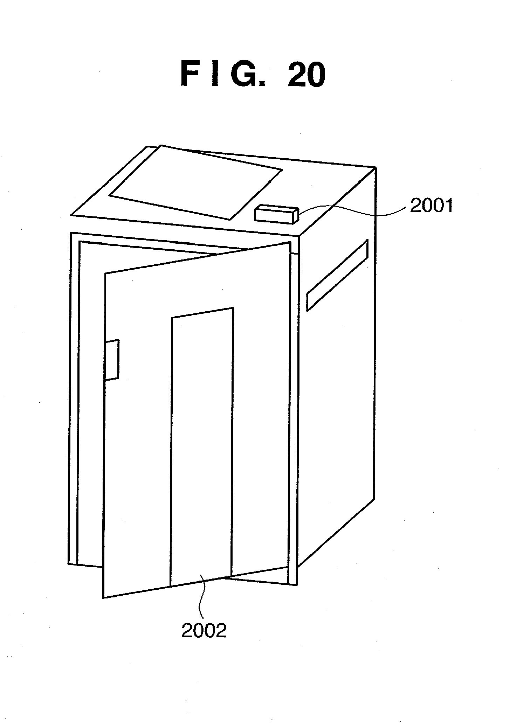

When the front door of the stacker unit is closed, the extensible stay moves up to a position where outputs are easily stacked. The stack tray moves down on condition that an instruction to open the front door (door 2002 in Fig. 20) is input by an operator operation to a switch 2001 in Fig. 20. If the operator closes the open door 2002, the stack tray can move up toward a home position near the printed material discharge port. As a result, the stack tray can prepare to stack a printed material again. The front door (door 2002 in Fig. 20) is an example of a specific type of opening/closing unit which can open (opening operation) by an operator in the print system 1000. The print system 1000 can utilize inline finishers having various opening/closing units capable of opening/closing by an operator. The large-volume stacker as one of inline finishers available in the print system 1000 is an inline finisher requiring the opening operation of the opening/closing unit (door 2002) when the operator takes out a printed material.

Outputs can be stacked by flat stacking or shift stacking. Flat stacking means always stacking sheets at the same position. Shift stacking means stacking sheets with a shift in a far/near direction every number of copies or jobs so as to divide outputs and easily handle them.

The large-volume stacker permitted to be used as an inline type sheet processing apparatus in the print system 1000 can execute a plurality of stacking methods when stacking sheets from the printer unit 203. The control unit 205 controls various operations for the stacker.

### [Internal Structure of Glue Binding Apparatus]

Fig. 12 is a sectional view showing an example of the internal structure of the glue binding apparatus in Figs. 8A to 10B controlled by the control unit 205 in the embodiment.

In the glue binding apparatus, the sheet feeding path extending from the print apparatus 100 is roughly divided into three: a straight path, main body path, and cover path, as shown in Fig. 12. The glue binding apparatus incorporates these three sheet feeding paths.

The straight path (through path) of the glue binding apparatus in Fig. 12 is a sheet feeding path functioning to transfer, to a succeeding apparatus, sheets of a job requiring no sheet glue binding process by the glue binding unit of the apparatus. In other words, the straight path is a unit for conveying sheets of a job requiring no sheet process by the sheet processing apparatus from an upstream apparatus to a downstream apparatus.

The sheet feeding path in the glue binding apparatus comprises a plurality of sheet sensors necessary to detect the sheet conveyance status and jam.

The CPU (not shown) of the glue binding apparatus notifies the control unit 205 of sheet detection information from each sensor via a signal line (signal line shown in Fig. 2 for electrically connecting the sheet processing apparatus 200 and control unit 205) for communicating data with the control unit 205. On the basis of the information from the glue binding apparatus, the control unit 205 grasps the sheet conveyance status and jam in the glue binding apparatus. When the print system is configured by cascade-connecting another sheet processing apparatus between the glue binding apparatus and the print apparatus 100, the CPU of the glue binding apparatus notifies the control unit 205 via the CPU of the sheet processing apparatus of sensor information of the glue binding apparatus. In this manner, the glue binding apparatus comprises an arrangement unique to an inline finisher.

The main body path and cover path in the glue binding apparatus in Fig. 12 are sheet feeding paths for creating a case-bound printed material.

For example, according to the embodiment, the printer unit 203 prints the print data of a body by a case binding print process. Printed sheets are used as the body of an output material corresponding to a case-bounded printed material of one bundle. In case binding, a sheet bundle of a body on which print data corresponding to the body (contents) is printed is called a "main body" in this example. A process to wrap the main body with one cover sheet is executed in the case binding process. The control unit 205 executes various sheet conveyance control examples to convey a cover sheet through the cover path, and convey sheets of the main body printed by the printer unit 203 to the main body path.

In this configuration, the control unit 205 accepts a request from a user via the UI unit by a key operation to the key 707 in the display of Fig. 7 to execute a case binding process executable by the glue binding apparatus for a target job. The control unit 205 controls the apparatus as follows.

For example, the control unit 205 sequentially accumulates sheets printed by the printer unit 203 on the stacking unit via the main body path in Fig. 12. After the stacking unit accumulates sheets of all pages on which body data necessary for sheets of one bundle in a job to be processed are printed, the control unit 205 conveys a cover sheet necessary for the job via the cover path.

Case binding has a matter associated with one feature of the embodiment. In a case binding process as an example of a glue binding process in this example, the number of sheets processable as one sheet bundle is much larger than the number of sheets processable as one sheet bundle by a sheet process different from the glue binding process. For example, the case binding process can process a maximum of 200 sheets as one sheet bundle of the body. To the contrary, the stapling process or the like can process a maximum of 20 print sheets as one sheet bundle, and the saddle stitching process can process a maximum of 15 print sheets. The allowable number of print sheets to be processed as one sheet bundle is greatly different between the glue binding process and other sheet processes.

In the embodiment, the control unit 205 can control an inline type sheet processing apparatus to execute the case binding process as a glue binding process. Further, the embodiment can provide new finishing which is not requested in the office environment and is executable by an inline type sheet processing apparatus. In other words, the above arrangement is one mechanism assuming the POD environment, and is associated with control to be described later.

Case binding can use a cover data preprinted sheet conveyed from the inserter tray of the inserter of the glue binding apparatus, as shown in Fig. 12. Case binding can also use a sheet bearing a cover image printed by the print apparatus 100. Either sheet is conveyed as a cover sheet to the cover path. Conveyance of the cover sheet is suspended below the stacking unit.

In parallel with this operation, the glue binding apparatus executes a gluing process for a main body of sheets which bear all the pages of the body and are stacked on the stacking unit. For example, the gluing unit applies a predetermined amount of glue to the lower portion of the main body. After the glue spreads sufficiently, the pasted portion of the main body is attached to the center of the cover, covered, and joined. In joining, the main body is pushed down, and the covered main body slides onto a rotating table along the guide. The guide moves so that the covered main body falls onto the rotating table.

The aligning unit aligns the covered main body laid on the rotating table, and the cutter cuts an edge. The rotating table rotates through 90°, the aligning unit aligns the main body, and the cutter cuts the top edge. The rotating table rotates through 180°, the aligning unit aligns the main body, and the cutter cuts the tail edge.

After cutting, the aligning unit pushes the main body to an inner portion, putting the completed covered main body into a basket.

After the glue is satisfactorily dried in the basket, an operator can take out the completed case-bound bundle.

The glue binding apparatus comprises a gluing unit which executes a glue binding process for sheets of a target job for which a user issues a glue binding process execution request together with a print execution request via the UI unit.

As described above with reference to the configuration, the glue binding process executable by an inline type sheet processing apparatus in the embodiment has many process steps and many preparations, compared to other sheet processes. In other words, the glue binding process is different in configuration from sheet processes such as stapling and saddle stitching often used in the office environment. The process time taken to complete a requested sheet process is likely to be longer than those of other finishing processes. The embodiment pays attention to this point.

As is apparent from merely the glue binding function, the embodiment adopts a mechanism which applies not only to the office environment but also to a new printing environment such as the POD environment, provides user friendliness and productivity, and puts a print system and product into practical use. For example, new functions such as the case binding function and large-volume stacking function which are not supported in the office environment are provided as constituent features available even in the POD environment. As illustrated in Figs. 8A to 10B, system configurations capable of connecting a plurality of inline type sheet processing apparatuses are also mechanisms for achieving this purpose. It should be noted that the embodiment not only provides the above-described new functions and system configurations, but also finds out and examines problems to be tackled, such as use cases and user needs assumed in the use of the function configurations. One feature is to provide constituent features serving as solutions to the problems. In this way, the embodiment finds out and examines in advance market demands and the like as problems to newly equipped functions and system configurations, and employs mechanisms as configurations considering solutions to the problems when an office-equipment maker finds and enters a new market. This is also one feature of the embodiment. As an example of the constituent features, the control unit 205 executes various control examples in the embodiment.

### [Internal Structure of Saddle Stitching Apparatus]

Fig. 13 is a sectional view showing an example of the internal structure of the saddle stitching apparatus in Figs. 8A to 10B controlled by the control unit 205 in the embodiment.

The saddle stitching apparatus incorporates various units for selectively executing a stapling process, cutting process, punching process, folding process, shift delivery process, and the like for sheets from the print apparatus 100. As described in the restrictions, the saddle stitching apparatus does not have a through path serving as the function of conveying sheets to a succeeding apparatus.

The sheet feeding path in the saddle stitching apparatus comprises a plurality of sheet sensors necessary to detect the sheet conveyance status and jam.

The CPU (not shown) of the saddle stitching apparatus notifies the control unit 205 of sheet detection information from each sensor via a signal line (signal line shown in Fig. 2 for electrically connecting the sheet processing apparatus 200 and control unit 205) for communicating data with the control unit 205. On the basis of the information from the saddle stitching apparatus, the control unit 205 grasps the sheet conveyance status and jam in the saddle stitching apparatus. When the print system is configured by cascade-connecting another sheet processing apparatus between the saddle stitching apparatus and the print apparatus 100, the CPU of the saddle stitching apparatus notifies the control unit 205 via the CPU in the sheet processing apparatus of sensor information of the saddle stitching apparatus. The saddle stitching apparatus comprises an arrangement unique to an inline finisher.

As shown in Fig. 13, the saddle stitching apparatus comprises a sample tray, stack tray, and booklet tray. The control unit 205 controls to switch the unit for use in accordance with the job type and the number of discharged print sheets.

For example, the control unit 205 accepts, from a user via the UI unit by a key operation to the key 701 in the display of Fig. 7, a request to execute a stapling process by the saddle stitching apparatus for a target job. The control unit 205 controls to convey sheets from the printer unit 203 to the stack tray. Before discharging print sheets to the stack tray, they are sequentially accumulated on the process tray in the saddle stitcher for each job, and bound by a stapler on the process tray to discharge the print sheet bundle onto the stack tray. According to this method, the control unit 205 causes the saddle stitching apparatus to staple sheets printed by the printer unit 203.

The saddle stitching apparatus further comprises a Z-folding unit for folding a sheet in three (Z shape), and a puncher for forming two (or three) holes for filing. The saddle stitching apparatus executes a process corresponding to each job type. For example, when the user sets the Z-folding process via the operation unit as a setting associated with a print sheet process for a job to be output, the control unit 205 controls the Z-folding unit to fold print sheets of the job. Then, the control unit 205 controls to make the print sheets pass through the apparatus, and deliver them onto a discharge tray such as the stack tray or sample tray. For example, when the user sets the punching process via the operation unit as a setting associated with a print sheet process for a job to be output, the control unit 205 controls the puncher to punch print sheets of the job. Then, the control unit 205 controls to make the print sheets pass through the apparatus, and deliver them onto a discharge tray such as the stack tray or sample tray.

The saddle stitcher performs a saddle stitching process to bind print sheets at two center portions, pinch the print sheets at their center by rollers, fold them in half, and create a booklet like a pamphlet.

Print sheets bound by the saddle stitcher are discharged onto the booklet tray. Whether a print sheet process operation such as a bookbinding process by the saddle stitcher is executable is also based on print sheet process settings made by the user for a job to be output.

The inserter sends print sheets set on the inserter tray to a discharge tray such as the stack tray or sample tray without supplying the print sheets to the printer. The inserter can insert a print sheet set on the inserter between print sheets (sheets printed by the printer unit) sent into the saddle stitcher. The user sets print sheets on the inserter tray of the inserter while the print sheets face up. The pickup roller sequentially feeds print sheets from the top. A print sheet from the inserter is directly conveyed to the stack tray or sample tray, and discharged while facing down. To send a print sheet to the saddle stitcher, the print sheet is fed to the puncher once, and then switched back and fed to adjust the face orientation.

Whether a print sheet process operation such as a print sheet insertion process by the inserter is executable is also based on print sheet process settings made by the user for a job to be output.

In the embodiment, for example, the saddle stitching apparatus also incorporates a cutter (trimmer), which will be described below.

A (saddle-stitched) booklet output from the saddle stitcher enters the trimmer. At this time, the booklet output is fed by a predetermined length by the roller, and cut by a predetermined length by the cutter to align uneven edges between pages of the booklet. The resultant booklet is stored in a booklet holding unit. Whether a print sheet process operation such as a cutting process by the trimmer is executable is also based on print sheet process settings made by the user for a job to be output.

As described above, the saddle stitching apparatus comprises a saddle stitcher which executes a saddle stitching process for sheets of a target job for which a user issues a saddle stitching process execution request together with a print execution request via the UI unit.

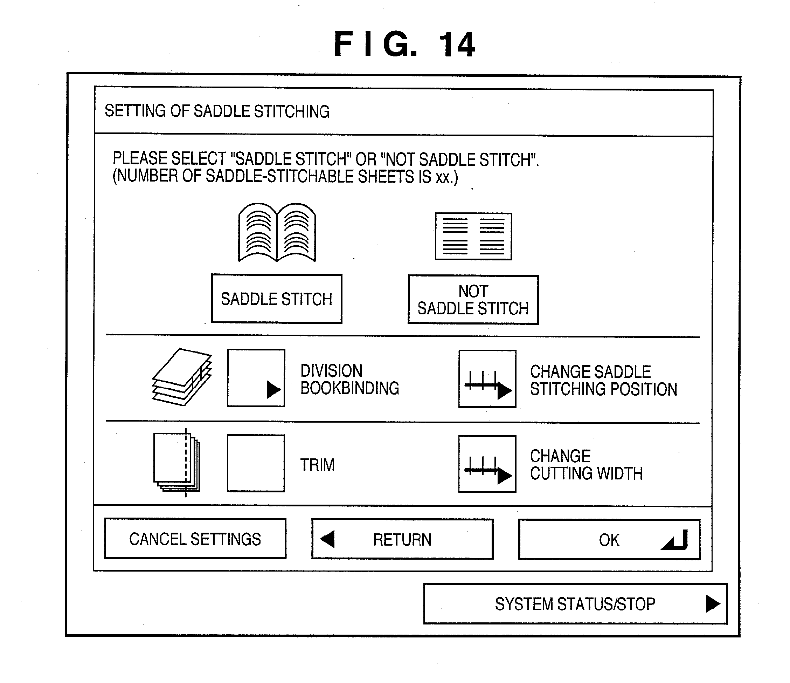

For example, when a user selects saddle stitching with the key 705 in the display of Fig. 7, the control unit 205 causes the UI unit to execute a display in Fig. 14. The control unit 205 controls to accept detailed settings of saddle stitching via the display in Fig. 14. For example, the control unit 205 determines whether to actually saddle-stitch sheets near their center with staples. The control unit 205 can also accept a setting such as division bookbinding, change of the saddle stitching position, execution/non-execution of cutting, or change of the cutting width from the user.

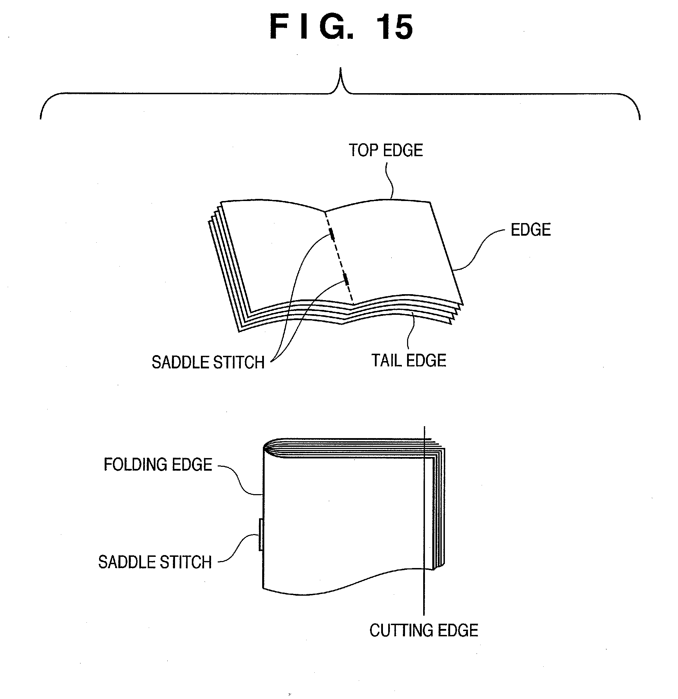

Assume that the user sets "saddle-stitch" and "cut" via the display in Fig. 14 executed by the UI unit under the control of the control unit 205. In this case, the control unit 205 controls the operation of the print system 1000 to form a target job into a print style as shown in Fig. 15 as the print result of saddle stitching. As represented by the print result of saddle stitching in Fig. 15, saddle stitches are put, and the edge is cut. By setting the positions of the saddle stitch and cutting edge in advance, they can be changed to desired positions.

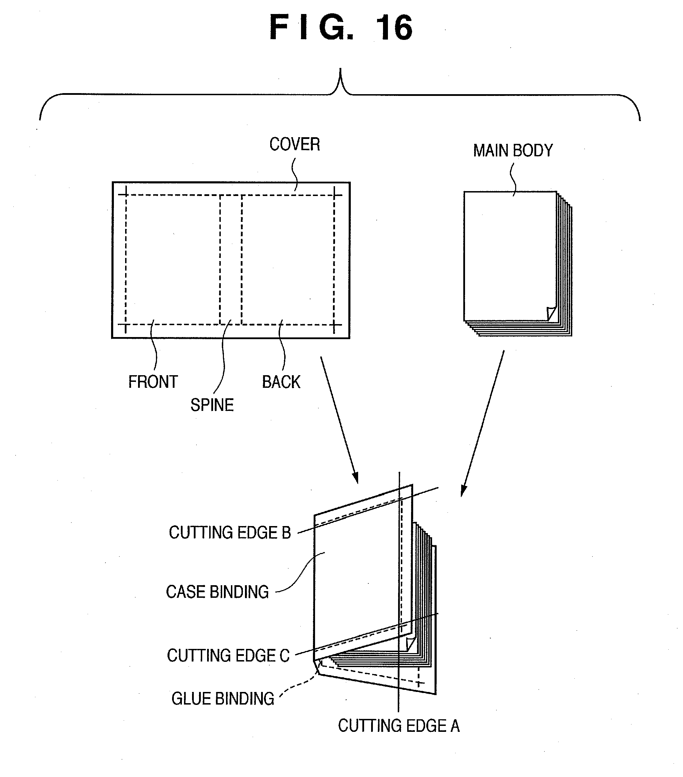

When the user requests execution of a case binding process with the key 707 in the display of Fig. 7, the control unit 205 controls the print system 1000 so as to form a target job into a print style as shown in Fig. 16 as the print result of case binding. As represented by the example in Fig. 16, the cutting widths of cutting edges A, B, and C can be set for a printed material subjected to case binding.

The print system 1000 can accept a target job print execution request and sheet process execution request even from an information processing apparatus serving as an example of an external apparatus. An example when a host computer uses the print system 1000 will be described.

For example, the print system 1000 is controlled as follows when operated by a host computer (e.g., the PC 103 or 104 in Fig. 1) which downloads program data for various processes and control examples in the embodiment from a data supply source (e.g., a WEB) or a specific storage medium. The control entity is the control unit of the PC.

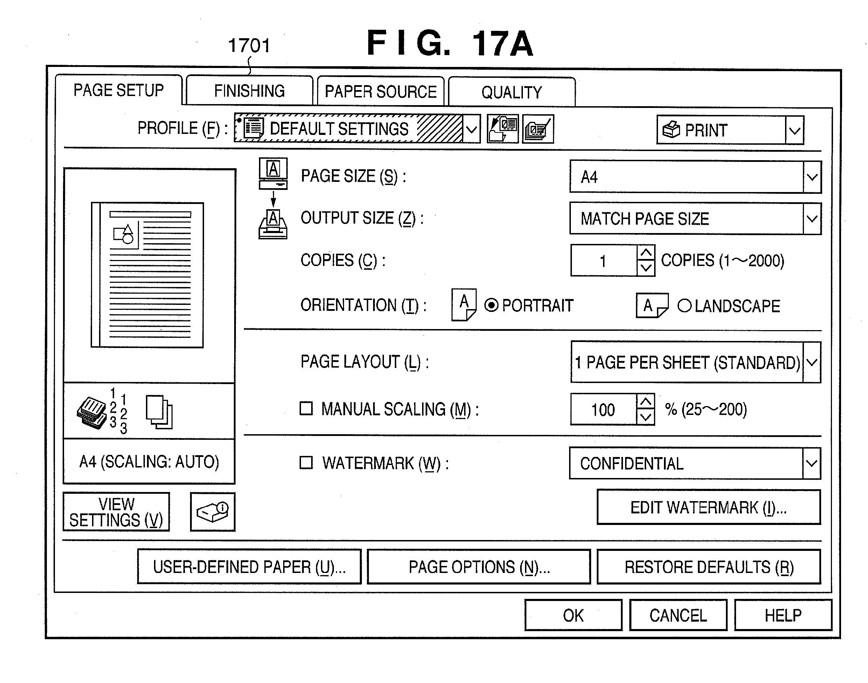

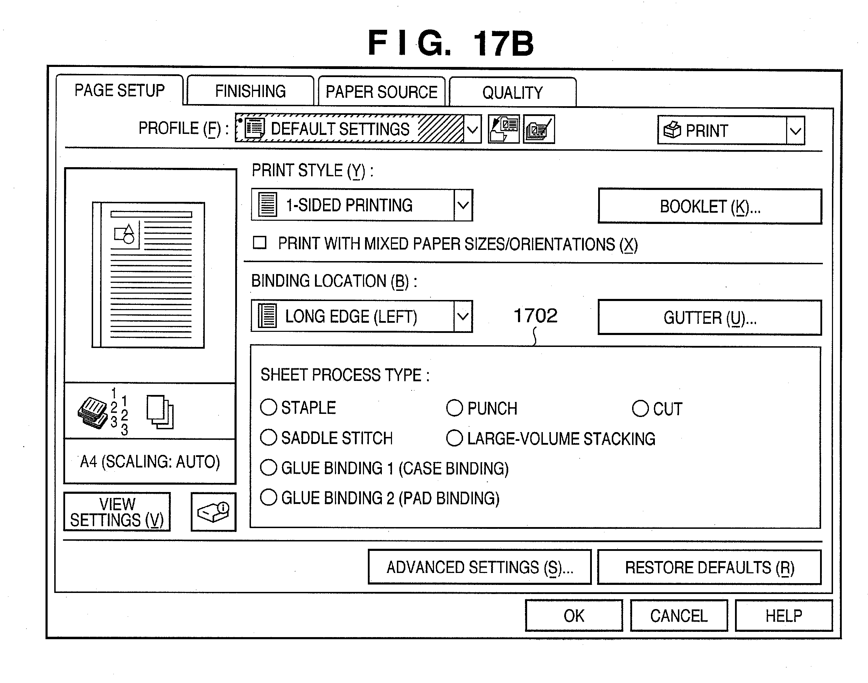

Assume that an instruction to activate a printer driver for operating the print apparatus 100 of the print system 1000 is issued in response to a mouse or keyboard operation by a user. In response to the instruction, the CPU of the host computer displays a print setup window shown in Fig. 17A on the display unit of the host computer. Figs. 17A and 17B are views showing examples of user interface windows controlled in the embodiment.

For example, the user presses a finishing key 1701 with the mouse on the operation window of Fig. 17A. Then, the CPU of the host computer controls the display unit to switch the print setup window to one as shown in Fig. 17B.

The CPU of the host computer allows the user to select a sheet process type to be executed by the inline type sheet processing apparatus 200 of the print system 1000 via the sheet process setting item 1702 on the print setup window of Fig. 17B.

Although not shown, the external apparatus including the host computer displays, as windows other than those in Figs. 17A and 17B, display windows capable of inputting instructions equivalent to those inputtable via various display windows described in detail in the embodiment. In other words, the external apparatus can execute the same processes and control examples as those described in the embodiment.

The user selects a desired sheet process via the sheet process setting item 1702, and returns to the window in Fig. 17A or 17B to press the OK key.

In response to this, the CPU of the host computer associates, as one job, commands representing various printing conditions set by the user via the print setup window with a series of data to be printed by the printer unit 203, and transmits the job to the print system 1000 via the network 101.

After the external I/F unit 202 of the print system 1000 receives the job from the computer, the control unit 205 of the system controls the print system 1000 to process the job from the host computer on the basis of process components set by the user on the host computer.

The above configuration can obtain various effects described in the embodiment even for a job from an external apparatus or the like, and can further increase the use efficiency of the print system 1000.

The control unit of the print system 1000 according to the embodiment executes various control examples to be described below on the premise of the above-described constituent features.

The configurations described with reference to Figs. 1 to 17B correspond to constituent features common to all examples in the embodiment. For example, various control examples described in the embodiment correspond to constituent features based on these configurations.

As described with reference to Figs. 1 to 17B, the print system 1000 according to the embodiment can construct a printing environment suitable not only for the office environment but also for the POD environment.

For example, the print system 1000 employs a mechanism capable of coping with use cases and user needs which are assumed not in the office environment but in the POD environment.

For example, a POD company can receive orders of various print forms from customers in the POD environment.

More specifically, an inline sheet processing apparatus can implement finishing (e.g., a glue binding process or large-volume stacking process) which is not requested as a user need in the office environment. In other words, the embodiment can deal with even user needs other than needs (e.g., for stapling) in the office environment in consideration of the POD environment. For example, the print system 1000 can flexibly cope with the business form of a POD company which does business in the POD environment where the print system 1000 is delivered. For example, a plurality of inline sheet processing apparatuses are connectable to the print apparatus 100, and each inline sheet processing apparatus can independently operate as an independent housing, as described above. The number of connected sheet processing apparatuses is arbitrary, and the print system 1000 can flexibly add or change an inline sheet processing apparatus.

The embodiment designs the print system 1000 while paying attention to the operability of the user of the print system 1000. For example, the embodiment allows an operator to manually register the system configuration of the print system 1000 in the HDD 209. This configuration will be exemplified.

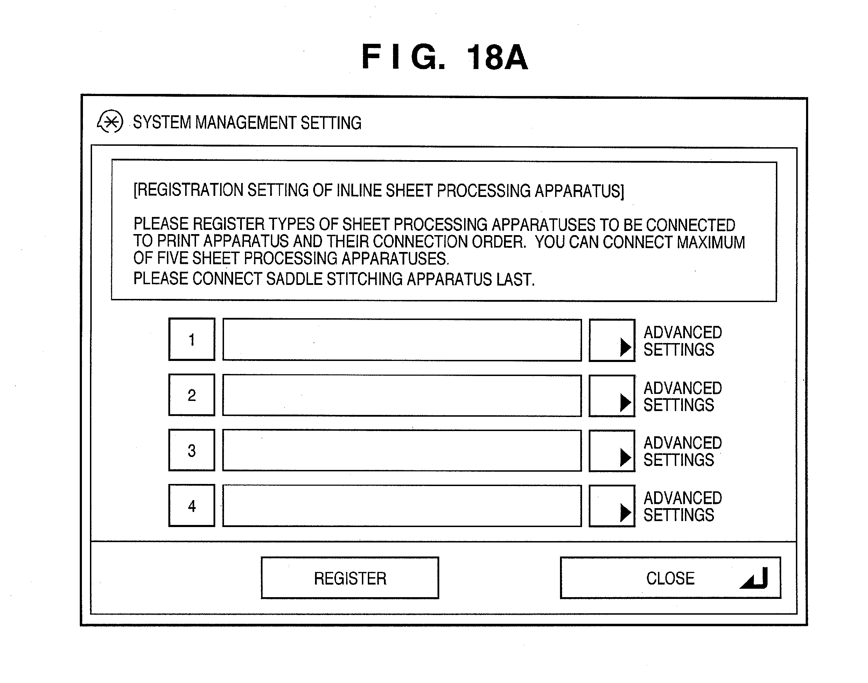

For example, a POD company wants to build the system configuration shown in Figs. 8A and 8B as the system configuration of the print system 1000. In this case, the operator of the POD company connects three sheet processing apparatuses in Figs. 8A and 8B purchased together with the print apparatus 100 to the print apparatus in the connection order shown in Figs. 8A and 8B. Then, the operator presses the user mode key 505 of the operation unit 204. In response to this key operation, the control unit 205 causes the display unit 401 to execute a display in Fig. 18A.

The display in Fig. 18A allows the operator to manually input system configuration information of the print system 1000. The control unit 205 allows the operator via displays in Figs. 18A to 18D to determine the types of inline type sheet processing apparatuses to be connected to the print apparatus 100. In addition, the control unit 205 allows the operator via the displays in Figs. 18A to 18D to determine the connection order of inline type sheet processing apparatuses to be connected to the print apparatus 100. If the operator presses an "advanced settings" key set for each setting item in the display of Fig. 18A, the control unit 205 displays a window (not shown). This window enables specifying sheet processing apparatuses used in the print system one by one. In the embodiment, since the print system follows the above-mentioned restrictions, the control unit 205 also notifies the operator of this information as guidance information. For example, the control unit 205 notifies the operator of a guidance "please register the types of sheet processing apparatuses to be connected to the print apparatus, and their connection order. You can connect a maximum of five apparatuses. Please connect a saddle stitching apparatus as a last apparatus." In this case, the maximum number of connected inline sheet processing apparatuses is five, but is not limited to this.

The control unit 205 controls the display unit 401 to determine sheet processing apparatuses for use one by one from the top setting item in Fig. 18A. The control unit 205 determines that the setting order itself from the top setting item is an actual apparatus connection order.

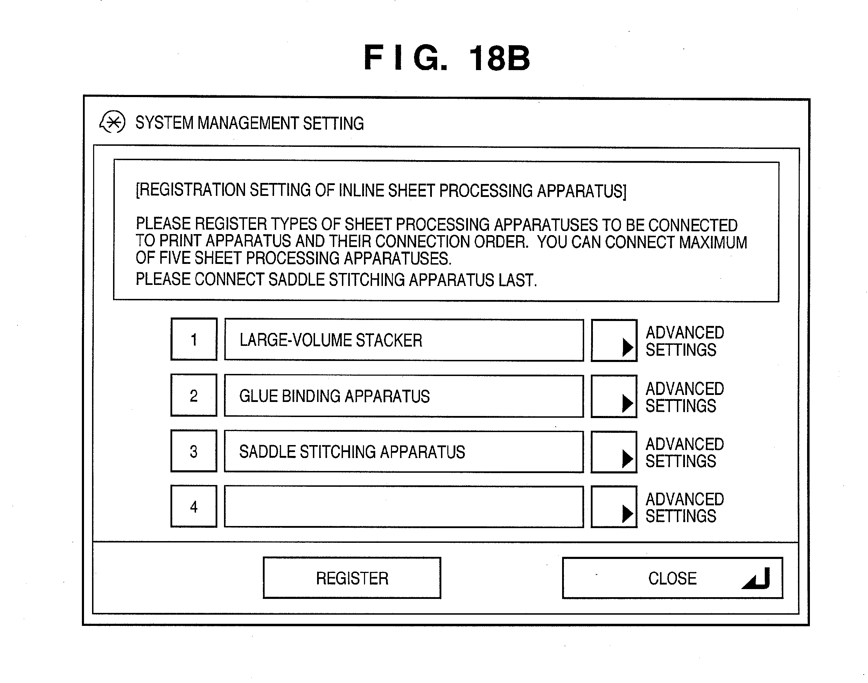

In this configuration, when the print system 1000 has the system configuration shown in Figs. 8A and 8B, the control unit 205 prompts the operator to register the types of sheet processing apparatuses and their connection order, like the display in Fig. 18B. More specifically, the control unit 205 prompts the operator to set "large-volume stacker ⇒ glue binding apparatus ⇒ saddle stitching apparatus" sequentially from the top setting item, like the display in Fig. 18B. The control unit 205 determines that this setting order is an actual connection order, as shown in Figs. 8A and 8B.

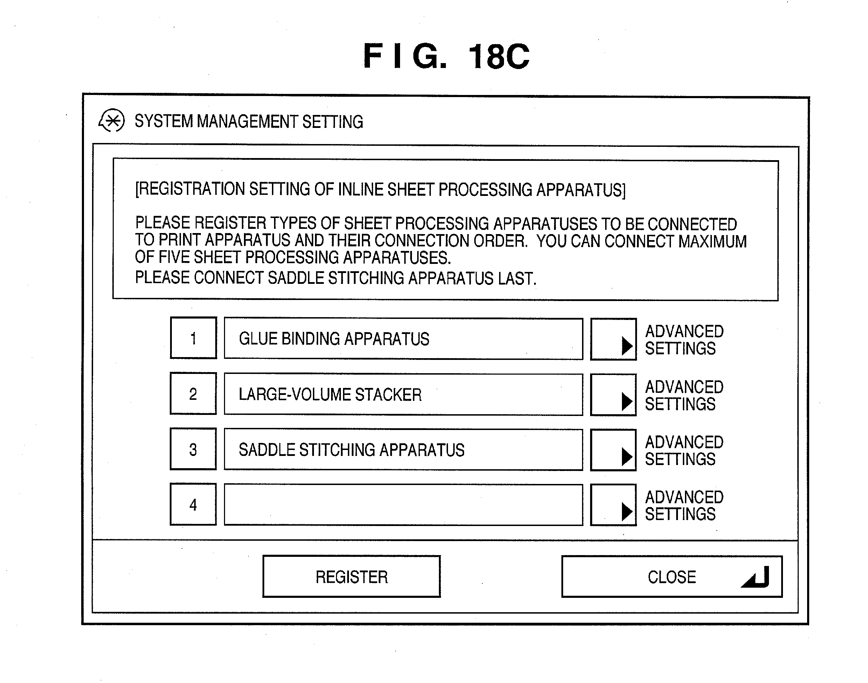

When the print system 1000 has the system configuration shown in Figs. 9A and 9B, the control unit 205 prompts the operator to register the types of sheet processing apparatuses and their connection order, like the display in Fig. 18C. More specifically, the control unit 205 prompts the operator to set "glue binding apparatus ⇒ large-volume stacker ⇒ saddle stitching apparatus" sequentially from the top setting item, like the display in Fig. 18C. The control unit 205 determines that this setting order is an actual connection order, as shown in Figs. 9A and 9B.

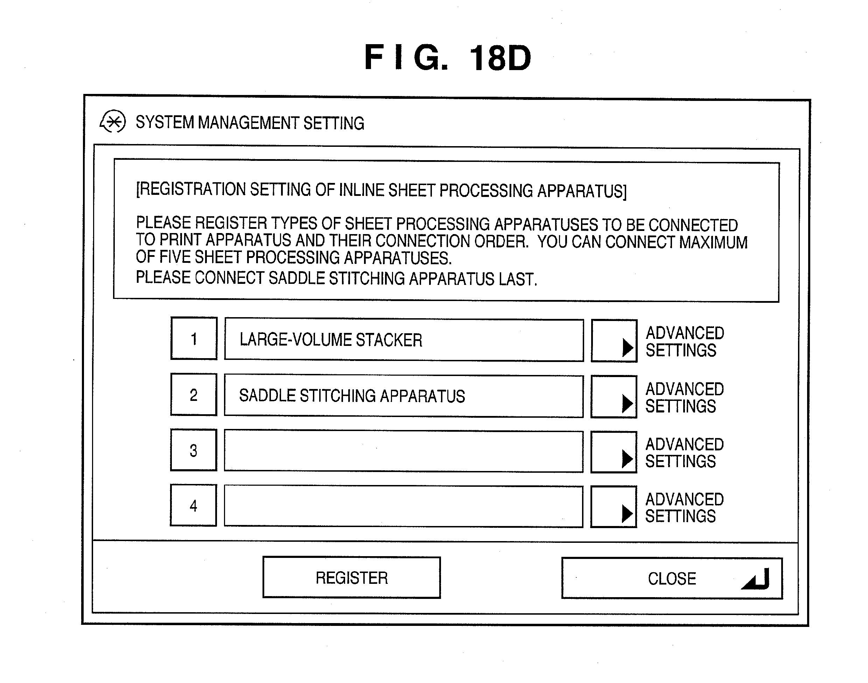

When the print system 1000 has the system configuration shown in Figs. 10A and 10B, the control unit 205 prompts the operator to register the types of sheet processing apparatuses and their connection order, like the display in Fig. 18D. More specifically, the control unit 205 prompts the operator to set "large-volume stacker => saddle stitching apparatus" sequentially from the top setting item, like the display in Fig. 18D. The control unit 205 determines that this setting order is an actual connection order, as shown in Figs. 10A and 10B.

This UI control to improve user friendliness assuming use cases on site is also one feature of the embodiment.

As described with reference to Figs. 1 to 18D, the print system 1000 comprises various mechanisms toward practical use of a product capable of flexibly coping with various use cases and user needs in the POD environment and the like that are different from user needs in the office environment.

The print system 1000 does not merely have new functions and new configurations as described above. To maximize the effects of the print system 1000, the print system 1000 can execute various control examples as follows.

For example, the control unit of the print system causes the print system 1000 to execute the following control.

The above control is a concrete solution to prevent any trouble which influences a specific job or a plurality of jobs due to work to take out the printed material of a given job by an operator from a sheet processing apparatus. In other words, this control example is a concrete solution to prevent any trouble and the like caused by intervention work of an operator which may influence the productivity of jobs to be processed in the print system 1000.

The embodiment pays attention to how to prevent troubles and maintain high productivity in the print system 1000. As a constituent component, the system comprises a mechanism which implements this, as will be described in the following control. The print system 1000 has specifications aiming at practical use of a digital printing system suitable not only for the office environment but also for the POD environment.

As described above, the print system 1000 of the embodiment enables connecting an arbitrary number of inline finishers to the print apparatus 100 in an arbitrary connection order under constraints. To further illustrate this configuration, for example, the following control example will describe control executed when the print system 1000 has the system configuration as shown in Fig. 19.

### [Description (1) of Control Example Executable by Control Unit of Print System 1000]

Fig. 19 shows, as the system configuration of the print system 1000, a system configuration in which two "large-volume stackers" and one "saddle stitching apparatus" illustrated using the system configurations of Figs. 8A to 10B cascade-connect to the print apparatus 100 in the connection order of Fig. 19.

In the following description, a large-volume stacker connected first to the print apparatus 100 of the print system 1000 having the system configuration in Fig. 19 is called "stacker A", and a large-volume stacker connected second is called a "stacker B". These two large-volume stackers have the same structure. Fig. 20 shows an example of the outer appearance of the "large-volume stacker" described with reference to Figs. 8A to 10B and 11.

Various control examples executed by the control unit of the embodiment, which will be described below with reference to Figs. 19 to 36, are basically executed when the print system 1000 has the system configuration in Fig. 19. If the print system 1000 has one of the system configurations in Fig. 8A to 10B, the control unit of the embodiment executes control similar to the following one by replacing various control examples to be described below with those complying with the system configuration.

As illustrated in the internal structure of the large-volume stacker described with reference to Fig. 11, the control unit 205 controls the large-volume stacker of the embodiment to deliver sheets to an escape tray (also called a sample tray) and a stack tray (also called a stacker unit) capable of stacking many printed materials of jobs having undergone a print process by the printer unit 203 of the print apparatus 100. The large-volume stacker of the embodiment also has a function of conveying a sheet received from an upstream apparatus (corresponding to the print apparatus 100 or another inline finisher connected on the input side) to another inline finisher connected on the output side via the through path in the large-volume stacker. The tray moves down for sheets from the print apparatus 100 in accordance with the sheet stacking amount of printed materials stacked on the stack tray. The large-volume stacker can also align printed materials.

The description of the large-volume stacker in the embodiment is the same as that with reference to Fig. 11. A feature concerning the large-volume stacker of the embodiment controlled by the control unit 205 in the print system 1000 will be further described with reference to Fig. 20. Fig. 20 is a view showing the outer appearance of the large-volume stacker for deep understanding of the configuration of the large-volume stacker in the embodiment. As shown in an example of the outer appearance of the large-volume stacker in Fig. 20, the large-volume stacker of the embodiment controlled by the control unit 205 comprises, on the front side of the housing, the door 2002 which can open/close in response to an operator operation. The door 2002 is also called a front door. The large-volume stacker of the embodiment comprises, on the top of the housing, the switch 2001 for allowing the operator to input an instruction to open the door 2002. The control unit (not shown) of the large-volume stacker mainly controls various operations in the large-volume stacker. The control unit of the large-volume stacker opens the door 2002 in accordance with an instruction manually input by the operator via the switch 2001. More specifically, the door 2002 is locked with a key (not shown) when closed. The operator unlocks the key to open the door 2002, and can take out a printed material stacked on the internal stack tray (see the internal structure in Fig. 11) of the large-volume stacker.

The key corresponding to a constituent component for locking the door 2002 of the large-volume stacker may be a key which implements the locking function with a physical hardware structure. However, the embodiment employs an electronic lock type key which implements the locking function with an electrical software structure. However, the embodiment is not limited to this. The embodiment can take any configuration as long as the door 2002 of the large-volume stacker is lockable so as not to open it even if the operator pulls the door 2002 toward him while the print system 1000 executes a print operation to discharge a printed material from the printer unit 203 to the internal stack tray (see Fig. 11) of the large-volume stacker. However, a configuration is preferable except one which allows the operator to open/close the door 2002 even at any timing regardless of the status of the print system 1000 or the job process status.

In the embodiment, the door 2002 may open in accordance with not only a request manually input by the operator from the switch 2001 of the large-volume stacker but also an instruction from the control unit 205 of the print apparatus 100. At this time, the control unit 205 transmits a door opening signal to the control unit of the large-volume stacker via a signal line shown in Fig. 2 in the large-volume stacker.

The large-volume stacker of the embodiment which is available in the print system 1000 and controlled by the control unit 205 allows the operator to take out a printed material stacked at the delivery destination of the large-volume stacker after an operation to open the door 2002 on the front of the housing. The large-volume stacker of the embodiment is a specific type of inline finisher requiring an operation to open the front door of the large-volume stacker before the operator takes out a printed material.

In contrast, the glue binding apparatus of the embodiment is an inline finisher requiring no front door opening operation before the operator takes out a printed material. This is because the basket (see Fig. 12) corresponding to a delivery destination which holds a printed material in the glue binding apparatus does not have any front door, and the operator can directly take out a printed material stacked in the basket. Similarly, the saddle stitching apparatus of the embodiment having the configuration shown in Fig. 13 is an inline finisher requiring no front door opening operation before the operator takes out a printed material. This is because none of the sample tray, stack tray, and booklet holding unit (see Fig. 13) corresponding to a delivery destination which holds a printed material in the saddle stitching apparatus has any front door, and the operator can directly take out a printed material stacked at the delivery destination.

In terms of takeout work of a printed material by the operator from the delivery destination of an inline finisher, the large-volume stacker of the embodiment is a specific type of inline finisher different in property and configuration from other inline finishers.

The embodiment requires the following processes (steps) in a series of processes until the operator takes out the printed material of a job (stacker job) from the large-volume stacker after the control unit 205 accepts the print execution request of the stacker job requiring a sheet process (e.g., a large-volume stacking process) by the large-volume stacker. These processes (steps) are performed in order.

[Step 1 Concerning Stacker Job] The control unit 205 confirms that the door 2002 of the large-volume stacker necessary for the sheet process of a job to be processed (to be referred to as stacker job X hereinafter) is kept closed. This state will be referred to as the first condition concerning a stacker job.

[Step 2 Concerning Stacker Job] The control unit 205 confirms that the key of the door 2002 of the large-volume stacker necessary for the sheet process of job X to be processed is locked. This state will be referred to as the second condition concerning a stacker job.

[Step 3 Concerning Stacker Job] If the stacker job to be processed satisfies both the first and second conditions, the control unit 205 permits the print apparatus 100 to start a print process necessary for stacker job X. In this case, the control unit 205 causes the print apparatus 100 to execute the print process of stacker job X while maintaining the closed state of the door 2002 of the large-volume stacker necessary for stacker job X and the locked state of the key of the door 2002. The control unit 205 executes this control for the print system 1000. When starting the print process of stacker job X, the control unit 205 controls the print apparatus 100 to read out print data of stacker job X from the HDD 209 sequentially from the first page and sequentially print up to the final page by the printer unit 203 under the printing conditions of the job.

If the door 2002 of the large-volume stacker necessary for stacker job X is closed but is not locked (to be also referred to as an unlocked state), the control unit 205 inhibits the print apparatus 100 from starting the print process necessary for stacker job X. Also, if the door 2002 of the large-volume stacker necessary for stacker job X is unlocked and open, the control unit 205 inhibits the print apparatus 100 from starting the print process necessary for stacker job X.

In this manner, the control unit 205 makes a confirmation to specify which inline finisher is to be used for a job in the print system 1000 having a plurality of inline finishers. In this confirmation, the control unit 205 uses the above-described system configuration information and print process condition information of a job to be processed. The control unit 205 also confirms whether various covers attached to the sheet processing apparatuses (e.g., the front door of a specified inline finisher) are kept closed or open. When the inline finisher to be confirmed is the large-volume stacker or the like, the control unit 205 also confirms whether the key of a specific unit such as the door 2002 of the large-volume stacker is locked. In these confirmations, the control unit 205 uses status information acquired from a target inline finisher via an internal signal line shown in Fig. 2.

Through a plurality of types of confirmations, the control unit 205 determines whether to permit or inhibit the start of printing a target job (e.g., stacker job X) in the print system 1000

[Step 4 Concerning Stacker Job] After the print apparatus 100 completes the print process of stacker job X for which the start of printing is permitted, the control unit 205 subsequently causes the large-volume stacker to execute a sheet process (e.g., a large-volume stacking process) necessary for the job. Also in this case, the control unit 205 causes the large-volume stacker to execute a sheet process necessary for the stacker job while maintaining the closed and locked states of the door 2002 of the large-volume stacker necessary for stacker job X. The control unit 205 causes the delivery destination (corresponding to the stack tray in Fig. 11) of the large-volume stacker to hold the printed material of stacker job X having undergone its sheet process.

If the door 2002 of the large-volume stacker necessary for stacker job X is closed but is unlocked, the control unit 205 inhibits the large-volume stacker from starting the sheet process (e.g., a large-volume stacking process by the stack tray) necessary for stacker job X. Also, if the door 2002 of the large-volume stacker necessary for stacker job X is unlocked and open, the control unit 205 inhibits the stacker from starting the sheet process necessary for stacker job X.

[Step 5 Concerning Stacker Job] After the control unit 205 confirms, from signal information transmitted from the stacker, the end of the sheet process of stacker job X by the large-volume stacker, it confirms whether the operator requests opening of the door 2002 of the large-volume stacker via a specific unit such as the switch 2001 of the large-volume stacker or the operation unit 204, while maintaining the closed and locked states of the door 2002 of the large-volume stacker.

[Step 6 Concerning Stacker Job] After the control unit 205 accepts, by the above method, the operator request to open the door 2002 of the large-volume stacker used for the sheet process of stacker job X, it moves down the stack tray (see Fig. 11) supporting the printed material of job X to the truck (see Fig. 11) positioned at the lower portion of the large-volume stacker.

[Step 7 Concerning Stacker Job] Upon completion of moving down the stack tray to the truck (see Fig. 11) positioned at the lower portion of the large-volume stacker, the control unit 205 causes the large-volume stacker to unlock the key of the door 2002 of the large-volume stacker. For example, the control unit 205 outputs a command to unlock the door 2002, via the internal signal line shown in Fig. 2 to the large-volume stacker whose door 2002 is locked. The control unit 205 controls to unlock the locked door 2002 of the large-volume stacker. In the embodiment, only after the electronic lock of the door 2002 is released, the control unit 205 can accept the operation to open the door 2002 by the operator. At this stage, the operator can open the door 2002 by manually pulling the closed door 2002 toward him.

[Step 8 Concerning Stacker Job] Upon completion of all the processes from steps 1 to 7 concerning the stacker job, the operator opens the door 2002 of the large-volume stacker. At this stage, the stack tray supporting the printed material of stacker job X is already set on the truck. The operator can directly extract the truck toward him together with the stack tray on the truck from the large-volume stacker whose door 2002 is open. By employing this configuration, the embodiment allows the operator to carry the printed material of a stacker job using the truck. The print system 1000 also allows the operator to directly take out the printed material of job X from the stack tray set on the truck without extracting the truck from the large-volume stacker whose door 2002 is open.

[Step 9 Concerning Stacker Job] The operator extracts the track supporting the printed material of job X from the large-volume stacker whose door 2002 is open. Then, the operator carries the printed material of job X on the truck together with the truck to a non-inline finisher or the like. While the truck keeps supporting the stack tray from which the printed material of job X is removed, the operator carries the truck to the large-volume stacker again. This operator process is possible even while the door 2002 keeps open in the print system 1000 of the embodiment. When the operator extracts the truck from the large-volume stacker, he sets the truck supporting the stack tray from which the operator removes the printed material of job X, at a predetermined position (truck home position) where the truck should be set in the currently open large-volume stacker. When the operator takes out the printed material of job X without extracting the truck, step 9 is unnecessary. In this case, the process skips step 9 and directly shifts to step 10.

[Step 10 Concerning Stacker Job] If the control unit 205 confirms that the truck supporting the stack tray from which the printed material of job X is removed exists at the truck home position in the currently open large-volume stacker used for the sheet process of job X, it determines, on the basis of status information from the large-volume stacker, whether the operator closes the open door 2002. In step 10, the control unit 205 waits until the operator closes the currently open door 2002 of the large-volume stacker used for job X.

[Step 11 Concerning Stacker Job] Upon completion of closing the door 2002 by the operator, the control unit 205 controls the large-volume stacker to lock the key of the door 2002 again.

[Step 12 Concerning Stacker Job] After confirming that the door 2002 is closed again and the key of the door 2002 is locked again, the control unit 205 controls the large-volume stacker to move up the stack tray (see Fig. 11) set on the truck mounted in the large-volume stacker to the home position near the printed material discharge port.

[Step 13 Concerning Stacker Job] Upon completion of moving up the stack tray to the home position in the large-volume stacker, the control unit 205 prepares for a new job process request requiring a printed material stacking process using the stack tray. For example, if a job requiring a stacking process using the stack tray waits for printing in the HDD 209, the control unit 205 permits the start of printing the job. In order to perform the same processes as those of job X, the control unit 205 controls the print system 1000 to perform the same processes from step 1 for the job in the same order.

Accordingly, a series of processes concerning the stacker job ends.

As described above, a plurality of processes (steps) are necessary in a series of processes until the operator takes out the printed material of a stacker job from the large-volume stacker after the control unit 205 accepts the print execution request of the stacker job requiring a sheet process by the large-volume stacker serving as one of inline finishers available in the print system 1000.

In this way, a plurality of processes are necessary to take out the printed material of a stacker job by the operator. The embodiment executes various control examples to be described in detail below during the takeout work period of the printed material of a stacker job by the operator.

The takeout work period of a printed material from the large-volume stacker will be defined by a concrete example. For example, the takeout work period is a predetermined period including a period when the stack tray completely moves up and is set at the home position (proper position where the operator can receive a printed material supplied from the stack path in the large-volume stacker) of the stack tray after the stack tray in the large-volume stacker starts moving down to the truck in the large-volume stacker in [Step 6 Concerning Stacker Job]. This is merely an example, and does not limit the embodiment.

The takeout work period of the printed material of a stacker job by the operator from the large-volume stacker includes at least the open period of the door 2002 of the large-volume stacker. The open period of the door 2002 of the large-volume stacker is a period during which the door 2002 of the large-volume stacker, from which the operator takes out the printed material of a stacker job, is open (also called an open state or unclosed state).

According to the embodiment, on the premise of various configurations described above, when the operator takes out the printed material of a job having undergone a print process from the large-volume stacker, the control unit 205 mainly controls the print system 1000 not to deliver, to the stack tray of the large-volume stacker, sheets of a succeeding job whose print execution request is issued after the job.

In other words, while the operator takes out the printed material of a job having undergone a print process from a sheet processing apparatus, the print system 1000 of the embodiment controls not to deliver sheets of a job succeeding to the job to the sheet processing unit in the sheet processing apparatus.

However, even while the operator takes out a printed material on the stack tray of the large-volume stacker, the control unit 205 controls to execute the following operation. An example of this operation is to deliver sheets of a succeeding job having undergone a print process to the escape tray at the upper portion of the large-volume stacker. Another example of this operation is to convey, via the through path in the large-volume stacker, sheets of a succeeding job which requires not a sheet stacking process by the large-volume stacker but a sheet process by a sheet processing apparatus connected after the large-volume stacker. The configuration of the large-volume stacker in the embodiment including the escape tray and through path (also called a straight path) of the large-volume stacker has been described with reference to Fig. 11, and a description thereof will be omitted.

An operation permitted by the control unit 205 while the operator takes out a printed material from the stack tray of the large-volume stacker is an operation, execution of which is permitted even while the door 2002 of the large-volume stacker in the embodiment is open. When the print system 1000 has the system configuration in Fig. 8B, this control means that the print system 1000 can execute the following operation.

Assume that the control unit 205 confirms that the print system 1000 has the system configuration in Fig. 8B. Also, assume that the control unit 205 confirms that the door 2002 of the stacker in Fig. 8B is currently open in accordance with an opening request from the operator via the switch 2001 in order to take out the printed material of a stacker job (to be referred to as stacker job 8A hereinafter) stacked on the stack tray of the large-volume stacker in Fig. 8B. In the case (to be referred to as case 8A hereinafter) in which the control unit 205 makes these two confirmations, the control unit 205 searches the HDD 209 for a job succeeding to stacker job 8A.

In case 8A, assume that the control unit 205 confirms that a succeeding job (to be referred to as job 8B hereinafter) requiring a sheet process by the large-volume stacker in Fig. 8B exists as a succeeding job whose print execution request is accepted after job 8A. In this case (to be referred as case 8B hereinafter), the control unit 205 inhibits the print apparatus 100 from starting the print process of job 8B while the door 2002 of the large-volume stacker in Fig. 8B is open. Also in case 8B, the control unit 205 controls the print apparatus 100 so that job 8B keeps waiting for printing.

In case 8A, assume that the control unit 205 confirms that a succeeding job (to be referred to as job 8C hereinafter) requiring a gluing process by the glue binding apparatus in Fig. 8B corresponding to an inline finisher positioned on the output side (downstream side) of the large-volume stacker in Fig. 8B exists as a succeeding job whose print execution request is accepted after job 8A. In this case (to be referred to as case 8C hereinafter), the control unit 205 permits the print apparatus 100 to start the print process of job 8C while the door 2002 of the large-volume stacker in Fig. 8B is open. For example, in case 8C, the control unit 205 reads out print data of job 8C from the HDD 209 and causes the printer unit 203 to print while keeping the door 2002 of the stacker in Fig. 8B open. Also in case 8C, the control unit 205 makes sheets on which the printer unit 203 prints the print data of job 8C, pass through a feeding path of point A in Fig. 8B ⇒ the through path in the large-volume stacker in Fig. 8B ⇒ point B in Fig. 8B while keeping the door 2002 of the stacker in Fig. 8B open. By this method, the control unit 205 causes the print system 1000 to supply sheets of job 8C from the print apparatus 100 into the glue binding apparatus in Fig. 8B while the door 2002 of the large-volume stacker in Fig. 8B is open. In case 8C, the control unit 205 causes the glue binding apparatus in Fig. 8B to execute a glue binding process for sheets (print media) of job 8C supplied from the print apparatus 100 while keeping the door 2002 of the stacker in Fig. 8B open. In this manner, the control unit 205 completes the process of job 8C in the print system 1000 while keeping the door 2002 of the stacker in Fig. 8B open.

In case 8A, assume that the control unit 205 confirms that a succeeding job (to be referred to as job 8D hereinafter) requiring a sheet process by the saddle stitching apparatus in Fig. 8B corresponding to an inline finisher positioned on the output side of the large-volume stacker in Fig. 8B exists as a succeeding job whose print execution request is accepted after job 8A. In this case (to be referred to as case 8D hereinafter), the control unit 205 permits the print apparatus 100 to start the print process of job 8D while the door 2002 of the large-volume stacker in Fig. 8B is open. For example, in case 8D, the control unit 205 reads out print data of job 8D from the HDD 209 and causes the printer unit 203 to print while keeping the door 2002 of the stacker in Fig. 8B open. Also in case 8D, the control unit 205 makes sheets on which the printer unit 203 prints the print data of job 8D, pass through a feeding path of point A in Fig. 88 ⇒ the through path in the large-volume stacker in Fig. 8B ⇒ point B in Fig. 88 ⇒ point C in Fig. 8B while keeping the door 2002 of the stacker in Fig. 8B open. By this method, the control unit 205 causes the print system 1000 to supply sheets of job 8D from the print apparatus 100 into the saddle stitching apparatus in Fig. 8B while the door 2002 of the large-volume stacker in Fig. 8B is open. In case 8D, the control unit 205 causes the saddle stitching apparatus in Fig. 8B to execute a sheet process for sheets (print media) of job 8D supplied from the print apparatus 100 while keeping the door 2002 of the stacker in Fig. 8B open. As a result, the control unit 205 completes the process of job 8D in the print system 1000 while keeping the door 2002 of the stacker in Fig. 8B open.

When the print system 1000 has the system configuration in Fig. 9B, this control means that the print system 1000 can execute the following operation.

Assume that the control unit 205 confirms that the print system 1000 has the system configuration in Fig. 9B. Also, assume that the control unit 205 confirms that the door 2002 of the stacker in Fig. 9B is currently open in accordance with an opening request from the operator via the switch 2001 in order to take out the printed material of a stacker job (to be referred to as stacker job 9A hereinafter) stacked on the stack tray of the large-volume stacker in Fig. 9B. In this case (to be referred to as case 9A hereinafter) in which the control unit 205 makes these two confirmations, the control unit 205 searches the HDD 209 for a job succeeding to stacker job 9A.

In case 9A, assume that the control unit 205 confirms that a succeeding job (to be referred to as job 9B hereinafter) requiring a sheet process by the large-volume stacker in Fig. 9B exists as a succeeding job whose print execution request is accepted after job 9A. In this case (to be referred as case 9B hereinafter), the control unit 205 inhibits the print apparatus 100 from starting the print process of job 9B while the door 2002 of the large-volume stacker in Fig. 9B is open. Also in case 9B, the control unit 205 controls the print apparatus 100 so that job 9B keeps waiting for printing.

In case 9A, assume that the control unit 205 confirms that a succeeding job (to be referred to as job 9C hereinafter) requiring a gluing process by the glue binding apparatus in Fig. 9B corresponding to an inline finisher positioned on the input side (upstream side) of the large-volume stacker in Fig. 9B exists as a succeeding job whose print execution request is accepted after job 9A. In this case (to be referred to as case 9C hereinafter), the control unit 205 permits the print apparatus 100 to start the print process of job 9C while the door 2002 of the large-volume stacker in Fig. 9B is open. For example, in case 9C, the control unit 205 reads out print data of job 9C from the HDD 209 and causes the printer unit 203 to print while keeping the door 2002 of the stacker in Fig. 9B open. Also in case 9C, the control unit 205 makes sheets on which the printer unit 203 prints the print data of job 9C, pass through point A in Fig. 9B while keeping the door 2002 of the stacker in Fig. 9B open. By this method, the control unit 205 causes the print system 1000 to supply sheets of job 9C from the print apparatus 100 into the glue binding apparatus in Fig. 9B while the door 2002 of the large-volume stacker in Fig. 9B is open. In case 9C, the control unit 205 causes the glue binding apparatus in Fig. 9B to execute a glue binding process for sheets (print media) of job 9C supplied from the print apparatus 100 while keeping the door 2002 of the stacker in Fig. 9B open. In this fashion, the control unit 205 completes the process of job 9C in the print system 1000 while keeping the door 2002 of the stacker in Fig. 9B open.

In case 9A, assume that the control unit 205 confirms that a succeeding job (to be referred to as job 9D hereinafter) requiring a sheet process by the saddle stitching apparatus in Fig. 9B corresponding to an inline finisher positioned on the output side of the large-volume stacker in Fig. 9B exists as a succeeding job whose print execution request is accepted after job 9A. In this case (to be referred to as case 9D hereinafter), the control unit 205 permits the print apparatus 100 to start the print process of job 9D while the door 2002 of the large-volume stacker in Fig. 9B is open. For example, in case 9D, the control unit 205 reads out print data of job 9D from the HDD 209 and causes the printer unit 203 to print while keeping the door 2002 of the stacker in Fig. 9B open. Also in case 9D, the control unit 205 makes sheets on which the printer unit 203 prints the print data of job 9D, pass through a feeding path of point A in Fig. 9B ⇒ point B in Fig. 9B ⇒ the through path in the large-volume stacker in Fig. 9B ⇒ point C in Fig. 9B while keeping the door 2002 of the stacker in Fig. 9B open. By this method, the control unit 205 causes the print system 1000 to supply sheets of job 9D from the print apparatus 100 into the saddle stitching apparatus in Fig. 9B while the door 2002 of the large-volume stacker in Fig. 9B is open. In case 9D, the control unit 205 causes the saddle stitching apparatus in Fig. 9B to execute a sheet process (e.g., a saddle stitching process) for sheets (print media) of job 9D supplied from the print apparatus 100 while keeping the door 2002 of the stacker in Fig. 9B open. The control unit 205 completes the process of job 9D in the print system 1000 while keeping the door 2002 of the stacker in Fig. 9B open.

When the print system 1000 has the system configuration in Fig. 19, this control means that the print system 1000 can execute the following operation.

Assume that the control unit 205 confirms that the print system 1000 has the system configuration in Fig. 19. Also, assume that the control unit 205 confirms that the door 2002 of a stacker 200a in Fig. 19 is currently open in accordance with an opening request from the operator via the switch 2001 in order to take out the printed material of a stacker job (to be referred to as stacker job 19A hereinafter) stacked on the stack tray of the large-volume stacker 200a in Fig. 19. In this case (to be referred to as case 19A hereinafter) in which the control unit 205 makes these two confirmations, the control unit 205 searches the HDD 209 for a job succeeding to job 19A.

In case 19A, assume that the control unit 205 confirms that a succeeding job (to be referred to as job 19B hereinafter) requiring a sheet process by the large-volume stacker 200a in Fig. 19 exists as a succeeding job whose print execution request is accepted after job 19A. In this case (to be referred as case 19B hereinafter), the control unit 205 inhibits the print apparatus 100 from starting the print process of job 19B while the door 2002 of the large-volume stacker 200a in Fig. 19 is open. Also in case 19B, the control unit 205 controls the print apparatus 100 so that job 19B keeps waiting for printing.

In case 19A, assume that the control unit 205 confirms that a succeeding job (to be referred to as job 19C hereinafter) requiring a sheet process (large-stacking process) by a large-volume stacker 200b in Fig. 19 corresponding to an inline finisher positioned on the output side of the large-volume stacker 200a in Fig. 19 exists as a succeeding job whose print execution request is accepted after job 19A. In this case (to be referred to as case 19C hereinafter), the control unit 205 permits the print apparatus 100 to start the print process of job 19C while the door 2002 of the large-volume stacker 200a in Fig. 19 is open. For example, in case 19C, the control unit 205 reads out print data of job 19C from the HDD 209 and causes the printer unit 203 to print while keeping the door 2002 of the stacker 200a in Fig. 19 open. Also in case 19C, the control unit 205 causes the print system 1000 to supply sheets of job 19C from the print apparatus 100 into the stacker 200b in Fig. 19 while the door 2002 of the stacker 200a in Fig. 19 is open. In case 19C, the control unit 205 causes the stacker 200b in Fig. 19 to execute a sheet process (e.g., a large-volume stacking process using the stack tray) for sheets (print media) of job 19C supplied from the print apparatus 100 while keeping the door 2002 of the stacker 200a in Fig. 19 open. In this manner, the control unit 205 completes the process of job 19C in the print system 1000 while keeping the door 2002 of the stacker 200a in Fig. 19 open.

In case 19A, assume that the control unit 205 confirms that a succeeding job (to be referred to as job 19D hereinafter) requiring a sheet process by a saddle stitching apparatus 200c in Fig. 19 corresponding to an inline finisher positioned on the output side of the large-volume stacker 200a in Fig. 19 exists as a succeeding job whose print execution request is accepted after job 19A. In this case (to be referred to as case 19D hereinafter), the control unit 205 permits the print apparatus 100 to start the print process of job 19D while the door 2002 of the large-volume stacker 200a in Fig. 19 is open. For example, in case 19D, the control unit 205 reads out print data of job 19D from the HDD 209 and causes the printer unit 203 to print while keeping the door 2002 of the stacker 200a in Fig. 19 open. Also in case 19D, the control unit 205 causes the print system 1000 to supply sheets of job 19D from the print apparatus 100 into the saddle stitching apparatus 200c in Fig. 19 while the door 2002 of the stacker 200a in Fig. 19 is open. In case 19D, the control unit 205 causes the saddle stitching apparatus 200c in Fig. 19 to execute a sheet process for sheets (print media) of job 19D supplied from the print apparatus 100 while keeping the door 2002 of the stacker 200a in Fig. 19 open. The control unit 205 completes the process of job 19D in the print system 1000 while keeping the door 2002 of the stacker 200a in Fig. 19 open.

These three control examples illustrated in Figs. 8B, 9B, and 19 mean one typical example in a configuration capable of executing the following control for the print system 1000.

Assume that the print apparatus 100 accepts the print execution request of the first job requiring a sheet process (e.g., a post-process) by a sheet processing apparatus (e.g., an inline finisher represented by the large-volume stacker) requiring the opening operation of the opening/closing unit (e.g., the door 2002) when the operator takes out sheets (e.g., print media). Then, assume that the print apparatus 100 accepts the print execution request of the second job as a succeeding job after performing the print process of the first job.

Assume that the second job accepted after the first job requires a sheet process by the sheet processing apparatus used for the sheet process of the first job. If the control unit 205 makes a determination corresponding to this case, it inhibits the print apparatus 100 from executing the print process of the second job while the opening/closing unit of the sheet processing apparatus used for the sheet process of the first job keeps open.

Assume that the second job accepted after the first job does not require a sheet process by the sheet processing apparatus used for the sheet process of the first job. If the control unit 205 makes a determination corresponding to this case, it permits the print apparatus 100 to execute the print process of the second job while the opening/closing unit of the sheet processing apparatus used for the sheet process of the first job keeps open. In this case, the control unit 205 causes the printer unit 203 to start the print process of the second job even while the operator keeps open the opening/closing unit of the sheet processing apparatus used for the first job in order to take out a printed bundle of the processed first job. In this case, the control unit 205 causes the sheet processing apparatus used for the sheet process of the second job to execute a sheet process necessary for the second job for sheets of one bundle of the second job after confirming that all the sheets of one bundle of the second job are conveyed into the sheet processing apparatus used for the sheet process of the second job even while the operator keeps open the opening/closing unit of the sheet processing apparatus used for the first job.

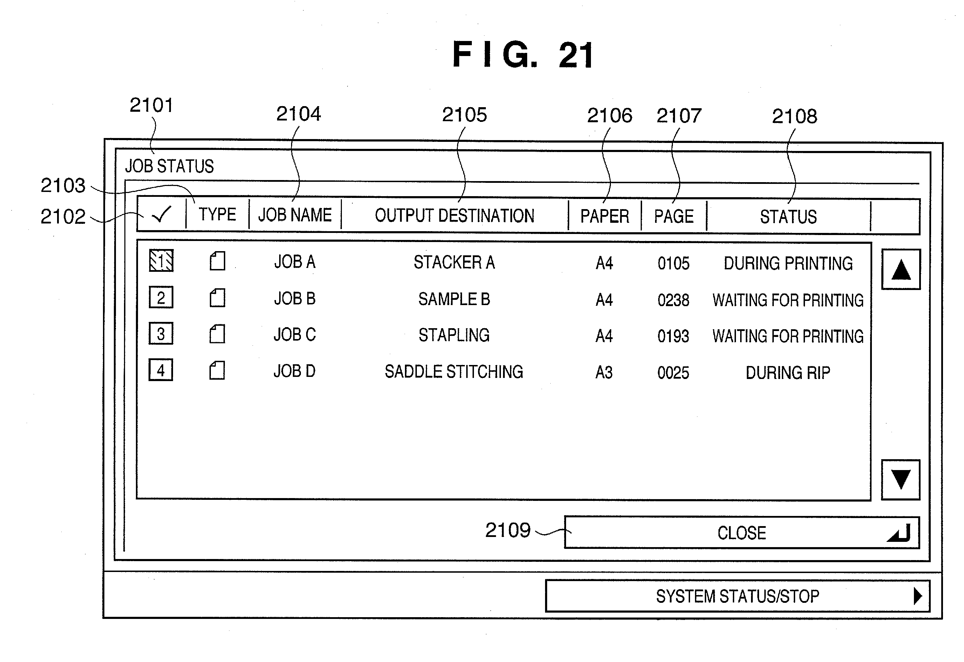

The embodiment calls the mechanism of maximizing productivity by the print system 1000, like the three control examples illustrated in Figs. 8B, 9B, and 19, as a productivity-oriented mode using inline finishers. As is apparent from a comparison between the three control examples, every time the system configuration of the print system 1000 changes, job control executed by the control unit 205 changes even in job control in the productivity-oriented mode using inline finishers. Also in this control, the control unit 205 uses the above-described system configuration information, status information of each inline finisher, and print process condition information of each job whose print execution request is accepted by the print apparatus 100. Various control examples to be described below with reference to Figs. 21 to 36 correspond to job control in the productivity-oriented mode using inline finishers.

It should be noted that sheet processes described in the embodiment mean various post-processes (sorting, stapling, cutting, sheet delivery, saddle stitching, folding, case binding, pad binding, and large-volume stacking), execution of which is requested by an operator for a job to be processed via the UI window of Fig. 7 or that of Fig. 17B. That is, a sheet conveyance process to convey a print medium through the sheet feeding path in the print system 1000 does not correspond to a "sheet process necessary for a job to be processed" in the embodiment.

In the embodiment, the control unit 205 inhibits or permits the start of the print operation of a succeeding job whose print execution request is issued after a job of sheets to be taken out by an operator from the sheet processing apparatus of the print system 1000. In other words, the control unit 205 controls execution/non-execution of the print operation of the succeeding job and the print timing.

This configuration is also unique to an inline finisher which connects to the print apparatus physically and electrically.

On the premise of this configuration, the control unit 205 serving as an example of the control unit of the print system 1000 executes the following control. A control example when the print system 1000 has the system configuration shown in Fig. 19 will be explained.

For example, when the user presses the key 617 in the display of Fig. 6 executed by the display unit 401, the control unit 205 causes the display unit 401 to execute a display for allowing the user to confirm the process status of each of jobs accepted by the print system 1000. For example, the control unit 205 causes the display unit 401 to execute a print status window as illustrated in Fig. 21.

The print status window will be explained.

### [Print Status Window]

The print status window will be explained with reference to Fig 21. A print status window 2101 displayed on the display unit 401 by the control unit 205 has, e.g., the following display items.

- Acceptance number 2102: a job number for specifying a job corresponding to an identifier assigned by the control unit 205 to each job whose print execution request is issued to the print apparatus 100.

- Job type 2103: a job type such as copying or PDL printing.

- Name 2104: a job name for a job having a name, like PDL printing.

- Output destination 2105: the output destination of a printed material. The output destination 2105 represents the tray of one of the sheet processing apparatuses 200a, 200b, and 200c of the print apparatus 100. Assignment of names on the display to the trays of the sheet processing apparatuses 200a, 200b, and 200c will be described later.

- Paper 2106: the paper size of a printed material.

- Page 2107: the number of pages of a job. The page 2107 represents the number of pages accumulated in the HDD 209.

- Status 2108: the process status of a job in the print apparatus 100.

A close key 2109 is used to close the print status window 2101 and return to a window before the print status window 2101 is displayed.

Assignment of names on the display of the output destination 2105 to the trays of the sheet processing apparatuses 200a, 200b, and 200c is as follows.

Sheet processing apparatus 200a

- the stack tray of the large-volume stacker: stacker A

- the escape tray of the large-volume stacker: sample A

Sheet processing apparatus 200b

- the stack tray of the large-volume stacker: stacker B

- the escape tray of the large-volume stacker: sample B

Sheet processing apparatus 200c

- the sample tray of the saddle stitching apparatus: sample C

- the stack tray of the saddle stitching apparatus: staple

- the booklet holding unit of the saddle stitching apparatus: saddle stitching

### [Print Operation]

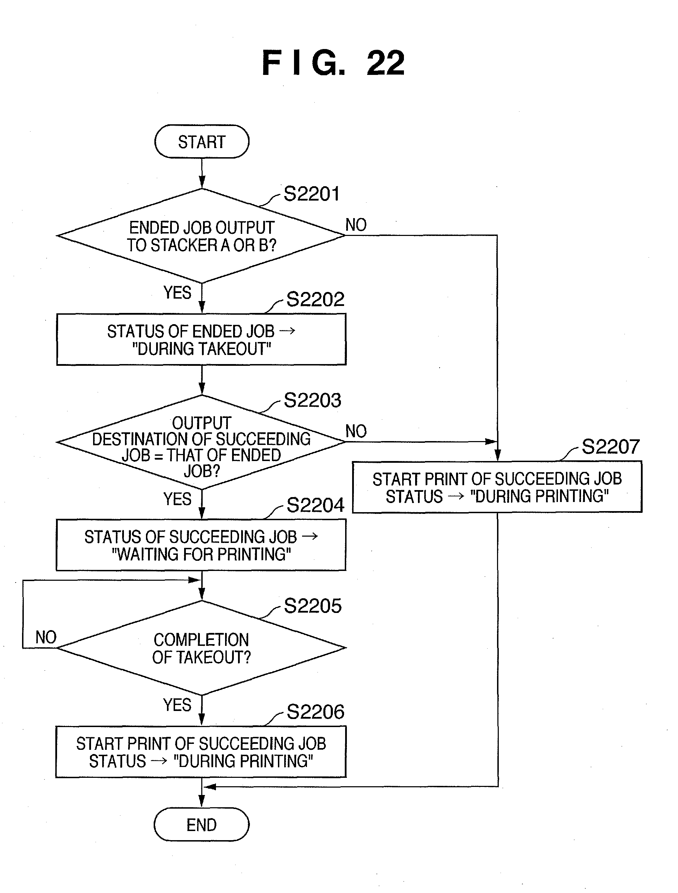

A print operation according to the embodiment will be explained with reference to Fig. 22. The printout destination will be explained using assignment of names on the display used in the description of [Print Status Window]. The control unit of the print system 1000 executes the process of the flowchart in Fig. 22.

In the embodiment, the control unit 205 of the print apparatus 100 executes this process. The control unit 205 executes this process by reading out program data for executing the process of the flowchart from the ROM 207 in Fig. 2 which stores computer-readable program data for executing various processes and control examples of the embodiment, and by executing the program data.

In step S2201, the control unit 205 confirms whether the output destination of a print job is stacker A or B at the end of the job.

The meaning "the end of a print job" will be explained by a concrete example. For example, the control unit 205 causes the printer unit 203 to execute the print process of data of a target job under print process conditions set by a user via the UI unit provided by the embodiment. The control unit 205 causes the inline finisher of the print system 1000 to execute a sheet process for sheets on which print data of the job are printed by the print process. The control unit 205 causes the delivery unit (sheet holding unit) of the inline finisher to deliver and hold, as a final product, the printed material of the job having undergone the sheet process.

In this manner, "when performing a print process complying with a user request and completing the sheet process of a job requiring execution of a sheet process complying with a user request for sheets having undergone the print process" is defined as "at the end of a print job". That is, at the stage of step S2201, "the end of a print job" includes a situation in which the delivery unit of the inline finisher keeps holding a printed material having undergone a sheet process.

In other words, at the stage of step S2201, "the end of a print job" includes a situation before the user takes out the printed material held by the delivery unit of the inline finisher from the delivery unit. This stage also includes a case in which printed material takeout work is complete and a case in which takeout work is in progress.

In any case, the embodiment defines, for example, a "job having undergone a print process by the printer unit 203 in accordance with a user instruction and a sheet process by the inline finisher of the print system 1000 in accordance with a user instruction" as an "ended job".

Based on this explanation, for example, the control unit 205 determines in step S2201 that the job (ended job) is output to stacker A (sheet processing apparatus 200a in Fig. 19) or stacker B (sheet processing apparatus 200b in Fig. 19).

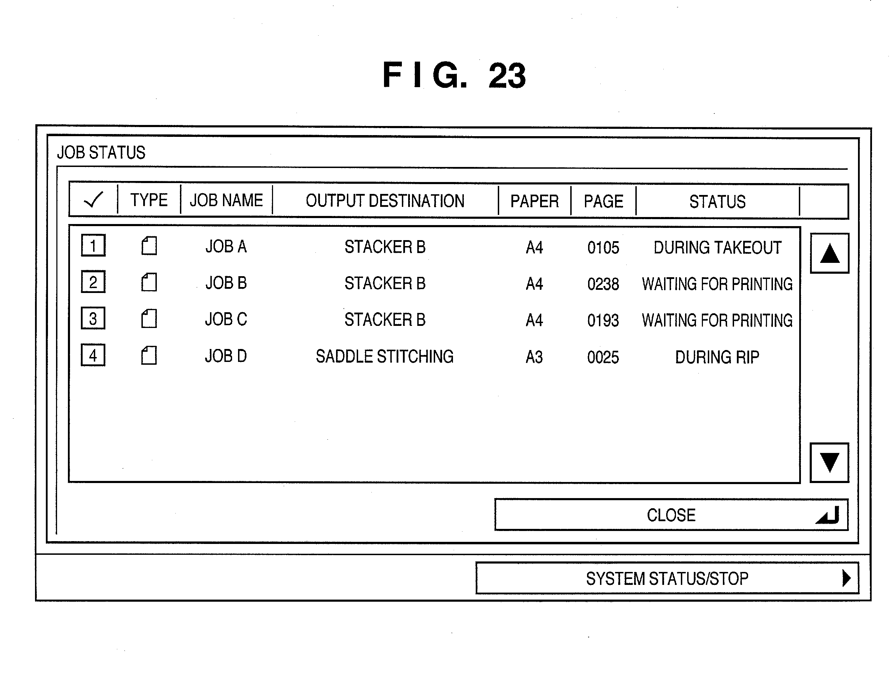

In other words, in step S2201, the control unit 205 confirms whether the "ended job" is a "job requiring a sheet process by the large-volume stacker in Fig. 19 after a print process". If the "ended job" is a "job requiring a sheet process by the large-volume stacker in Fig. 19 after a print process", YES in S2201. In this case, the control unit 205 causes the UI unit to execute a display for allowing the user to confirm the current state of the job (job status) in step S2202. For example, the control unit 205 causes the display unit 401 to display the print status window 2101 as shown in Fig. 23. While the user takes out the printed material of the job, the control unit 205 notifies the user that the job state is "during takeout of sheets", as shown in Fig. 23.

In step S2203, the control unit 205 checks whether there is a job whose output destination is the same as that of the "ended job" determined in step S2201. If the control unit 205 determines in step S2203 that there is a succeeding job whose output destination is the same as that of the "ended job", it displays, in the print status window 2101 in step S2204, a message that the succeeding job whose output destination is the same as that of the "ended job" waits for printing. Then, the process waits without starting printing.

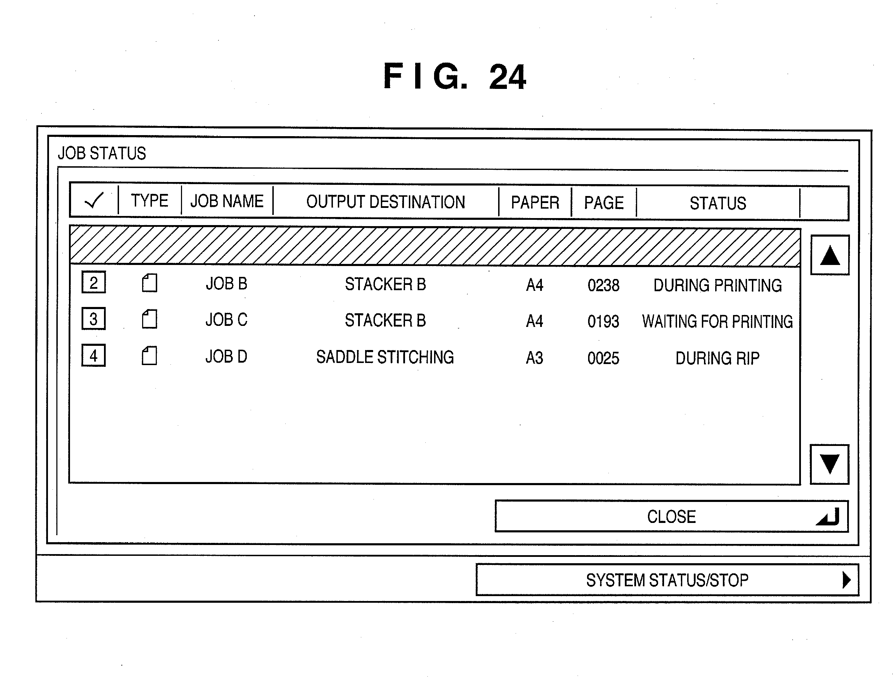

In step S2205, the process waits until the operator takes out the output material of the "ended job" determined in step S2201 from stacker A or B. If the control unit 205 detects, in step S2205 on the basis of information from the control unit of stacker A or B, that the operator takes out the printed material of the print job, it starts printing the succeeding job in step S2206. At this time, the print status window 2101 is displayed as shown in Fig. 24.

If there is a job whose output destination is different from that of the "ended job" determined in step S2201 while checking succeeding jobs in step S2203, the control unit 205 starts printing the job in step S2207. This control is specialized in the features of the system configuration unique to the print system.

For example, each inline finisher of the print system 1000 comprises a unit for processing sheets of a target job by the inline finisher, like the system configurations illustrated in Figs. 8A to 10B. In addition, each inline finisher in the embodiment can deliver and hold, at its delivery unit, a printed material as a final product having undergone a sheet process by the inline finisher. Each inline finisher in the embodiment except for the saddle stitching apparatus has a function of receiving sheets of a job not requiring execution of finishing (sheet process) by the inline finisher from an apparatus cascade-connected on the input side of the inline finisher. An inline finisher of this type in the embodiment has a function of transferring sheets of a job not requiring execution of finishing by the inline finisher to another inline finisher cascade-connected on the output side of the inline finisher. An example of the unit serving as this function is the straight path of each inline finisher in the embodiment illustrated in Figs. 11 and 12. As a mechanism of maximizing features unique to the system configuration in the embodiment, the following control is executable.

Assume that the control unit 205 causes the inline finisher of the print system 1000 to complete the sheet process of a target job, and the delivery unit of the finisher to deliver and hold the final product (printed material) of the job having undergone the sheet process. Then, the operator is taking out the printed material of the job from the delivery unit of the inline finisher. While the operator takes out sheets of the job having undergone finishing from the inline finisher, the control unit 205 permits the start of processing another succeeding job requiring no sheet process by the inline finisher.

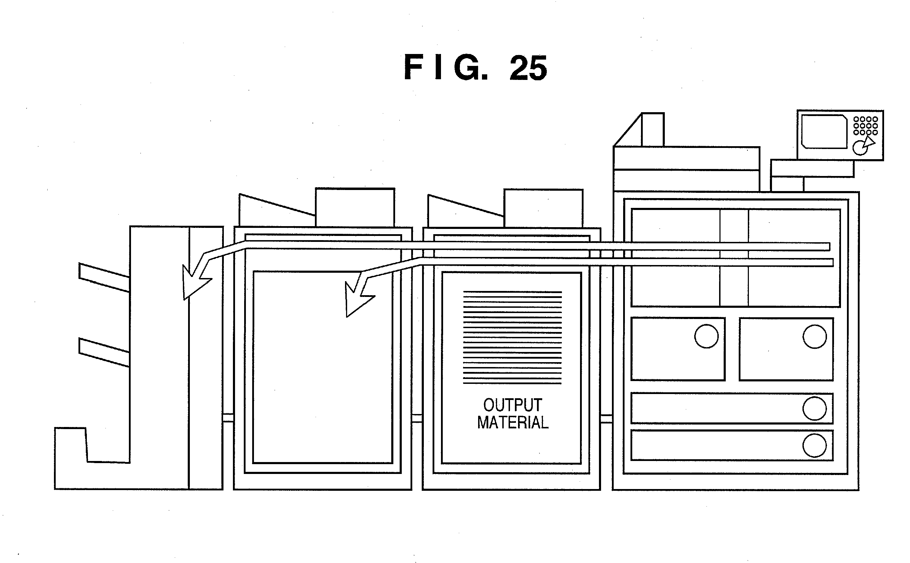

As an example of this control, the "ended job" determined in step S2201 requires holding of sheets having undergone a sheet process by stacker A (corresponding to the sheet processing apparatus 200a illustrated in Fig. 19). The sheet process by stacker A means a sheet stacking process. Under this condition, the control unit 205 permits the start of processing another succeeding job requiring a sheet process by the sheet processing apparatus 200b or 200c illustrated in Fig. 19, unlike the "ended job". Fig. 25 schematically shows this job control example.

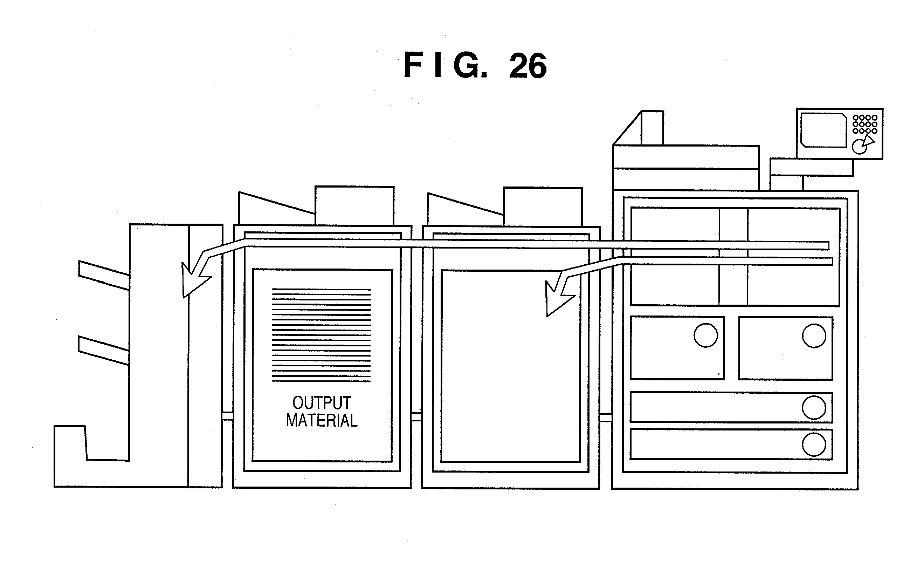

As another example, the "ended job" determined in step S2201 requires output to stacker B (corresponding to the sheet processing apparatus 200b illustrated in Fig. 19). Under this condition, the control unit 205 permits the start of processing another succeeding job requiring a sheet process by the sheet processing apparatus 200a or 200c illustrated in Fig. 19, unlike the "ended job". Fig. 26 schematically shows this job control.

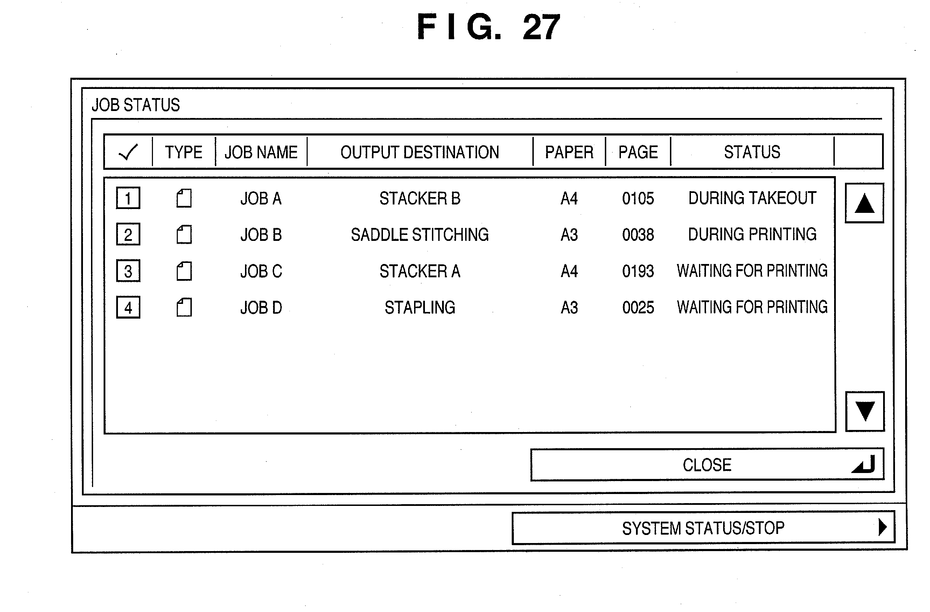

The control unit 205 performs the above control. Further, the embodiment provides a mechanism of accurately notifying a user of the job process status when performing this job control. For example, the control unit 205 causes the UI unit to execute a display for allowing the user to confirm what types of jobs are in process by the print system 1000 and how they are processed in what order. For example, when executing the control illustrated in Fig. 26, the control unit 205 causes the display unit 401 to execute a display illustrated in Fig. 27. In the embodiment, the monitor of a remote external computer capable of communicating data with the print apparatus 100 can also execute this display. The UI unit executes the display in Fig. 27 to allow the user to recognize that the "ended job" determined in step S2201 is an output to stacker B and takeout of sheets of the job is in progress (see the display of the job status of job A in Fig. 27). While the operator takes out sheets of job A from stacker B, the control unit 205 starts the print process of succeeding job B requiring a sheet process by the saddle stitching apparatus (corresponding to the sheet processing apparatus 200c in Fig. 19). The control unit 205 causes the display unit 401 to execute, in the display of Fig. 27, a display which allows the user to confirm that printing of job B is in progress while taking out sheets of job A from stacker B (see the display of the job status of job B in Fig. 27). It is also one of features of the embodiment to not only control the execution operation of the job but also execute display control reflecting this status.

In step S2207, after the start of printing a job whose output destination is different from that of the "ended job" determined in step S2201, the process waits until printing of the job started in step S2207 ends because printing is in progress in step S2207 even if the control unit 205 detects in step S2205 that the operator removes an output material from stacker A or B.

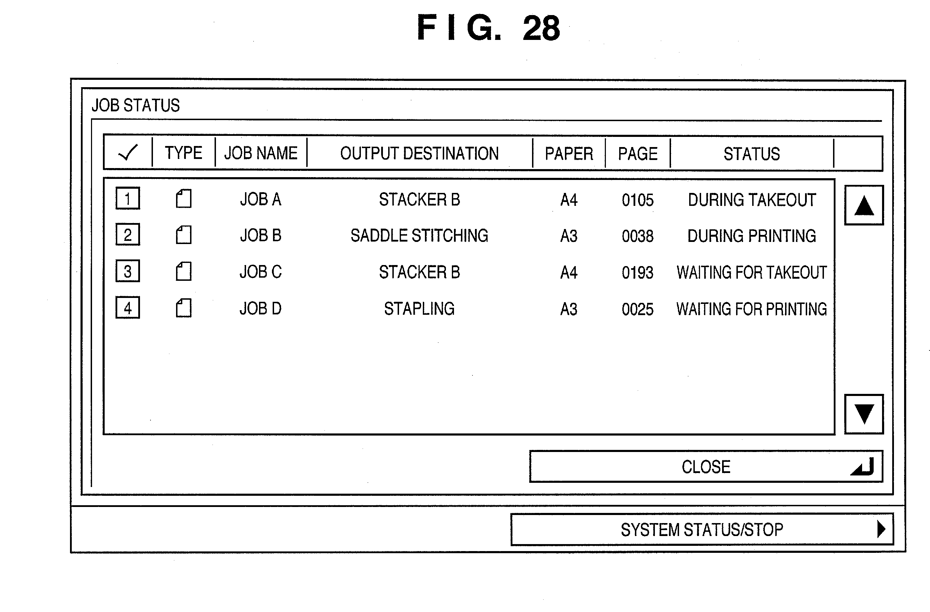

The status display may change as shown in Fig. 28 in order to discriminate a status in which printing does not start because, in step S2204, the output destination of a succeeding job is the same as that of the "ended job" determined in step S2201, from a status in which a job simply waits for its turn of printing.

In the example of Fig. 28,

- Job A: ended in step S2201. Its output material is being taken out from stacker B.

- Job B: during printing because the output destination of job B is different from that of job A (job B is a job which starts in step S2207).

- Job C: waiting until the output material of job A is taken out from stacker B because the output destination of job C is the same as that of job A (job C is a job which waits for printing in step S2204).

- Job D: waiting for its turn of printing because printing of job B is in progress though the output destination of job D is different from that of job A.

Printing continues by repeating the processes of steps S2201 to S2207.

The above control mainly executed by the control unit of the print system 1000 described with reference to Figs. 19 to 28 will be referred to as control example 1 in the embodiment. In addition to control example 1, the control unit of the print system 1000 can also execute another control as described in the following control example.

### [Description (2) of Control Example Executable by Control Unit of Print System 1000]

In the above-described control example 1, the control unit 205 executes the following control. For example, an "ended job" determined in step S2201 requires stacker A or B. Under this condition, the control unit 205 controls a job whose output destination is the same as that of the "ended job" determined in step S2201 to wait until the user takes out the output material (printed material) of the "ended job". In the following control example, the user can select, via the UI unit of the embodiment, whether to take out the output material of each job at the end of printing or to stack the output material of a succeeding job together without taking out the output material of each job.

A process according to this control example executed by the control unit in the embodiment will be explained with reference to Fig. 29 showing the flowchart of this process.

In step S2901, the control unit 205 confirms whether the output destination of a print job is stacker A or B at the end of the job.

If the control unit 205 determines in step S2901 that the job is output to stacker A or B, it confirms which of a setting of taking out the output material of the job at the end of printing (to be referred to as "the takeout reservation is made" hereinafter), or a setting of stacking the output material of a succeeding job together without taking out the output material of the job (to be referred to as "no takeout reservation is made" hereinafter) is made.

If the control unit 205 determines in step S2902 that the takeout reservation is made, it changes the status of the job to "during takeout" in step S2903, and displays "during takeout" in the print status window 2101, as shown in Fig. 23.

In step S2904, the control unit 205 checks whether there is a job whose output destination is the same as that of the "ended job" determined in step S2901. If the control unit 205 determines in step S2904 that there is a succeeding job whose output destination is the same as that of the "ended job", it displays, in the print status window 2101 in step S2905, a message that the succeeding job whose output destination is the same as that of the "ended job" waits for printing. Then, the process waits without starting printing.

In step S2906, the process waits until the operator takes out the output material of the "ended job" determined in step S2901 from stacker A or B. If the control unit 205 detects in step S2906 that the operator takes out the output material of the "ended job", the control unit 205 starts printing the succeeding job in step S2907.

If the control unit 205 determines in step S2902 that no takeout reservation is made, the control unit 205 starts printing the next print-standby job in step S2908 regardless of the output destination.

Alternatively, the control unit 205 checks succeeding jobs in step S2903. Even if there is a job whose output destination is different from that of the "ended job" determined in step S2901, the control unit 205 similarly starts printing the job in step S2908.

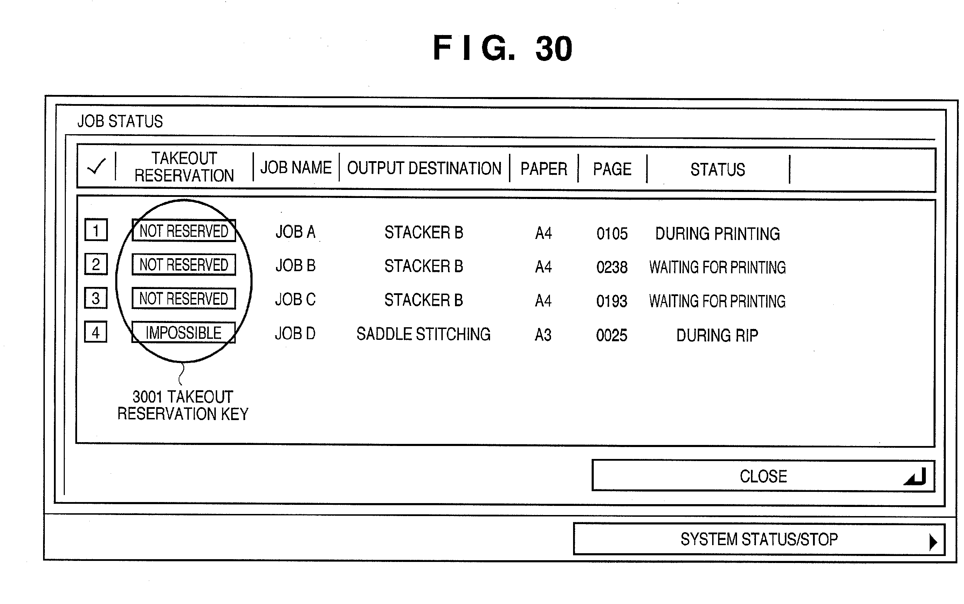

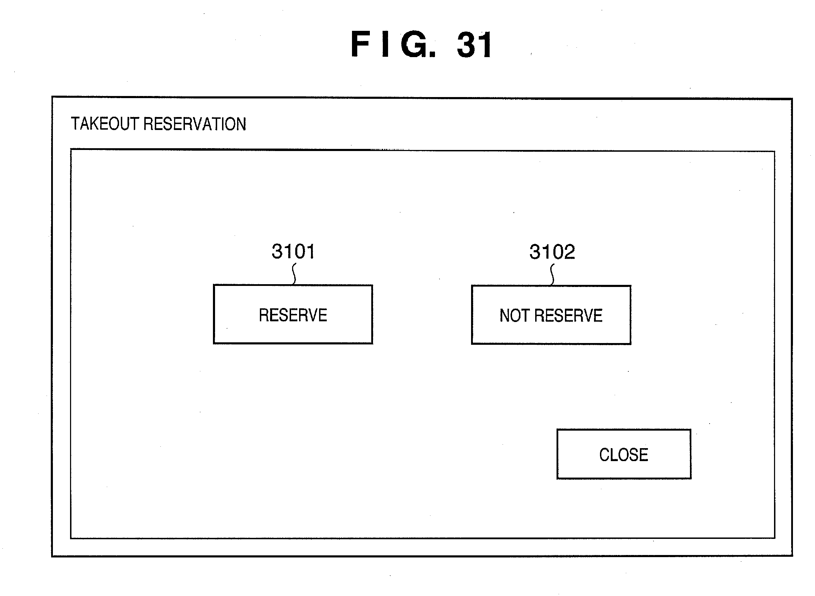

In the above example, whether the takeout reservation is made is recognizable from a takeout reservation key 3001 in the print status window, as shown in Fig. 30. The display of the takeout reservation key 3001 represents that the takeout reservation is impossible for a tray on which printing to the same output destination does not stop in takeout, like sample A, sample B, sample C, or stapling/saddle stitching. For a job to be output to stacker A or B, when the user presses the takeout reservation key 3001, the print status window shifts to a takeout reservation setup window as shown in Fig. 31 to allow the user to make or cancel the takeout reservation. Reference numeral 3101 denotes a key used to make the takeout reservation; and 3102, a key used to cancel the takeout reservation.

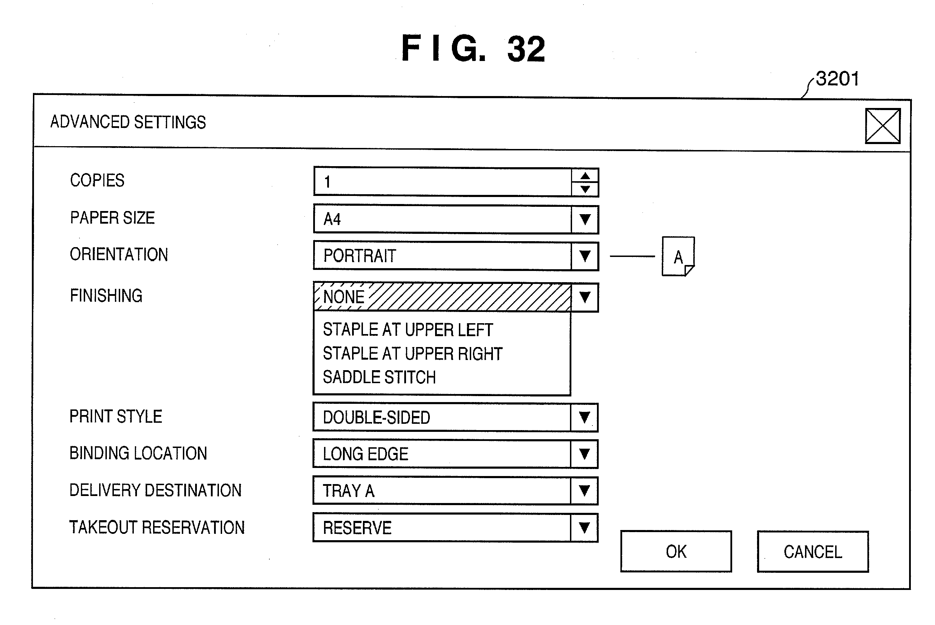

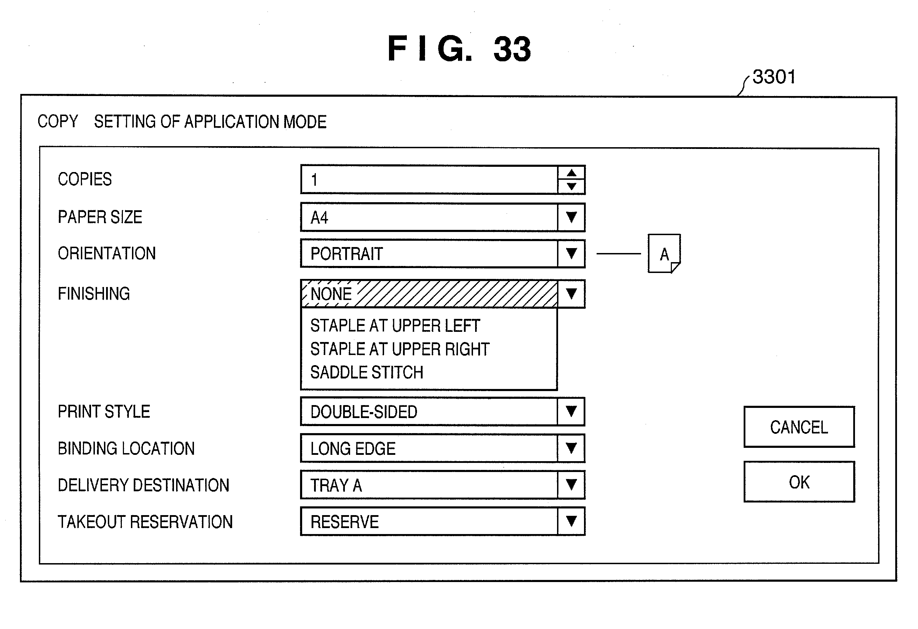

The user can also make the takeout reservation from the advanced print setup window or advanced copy setup window of the printer driver. Reference numerals 3201 in Fig. 32 and 3301 in Fig. 33 denote takeout reservation setup menus.

The above control mainly executed by the control unit of the print system 1000 described with reference to Figs. 29 to 33 will be referred to as control example 2 in the embodiment. In addition to control example 2, the control unit of the print system 1000 can also execute another control as described in the following control example.

### [Description (3) of Control Example Executable by Control Unit of Print System 1000]

For example, the control unit of the embodiment which executes the above-mentioned control examples 1 and 2 executes the following control in order to take out the output material of a job in step S2201/step S2901.

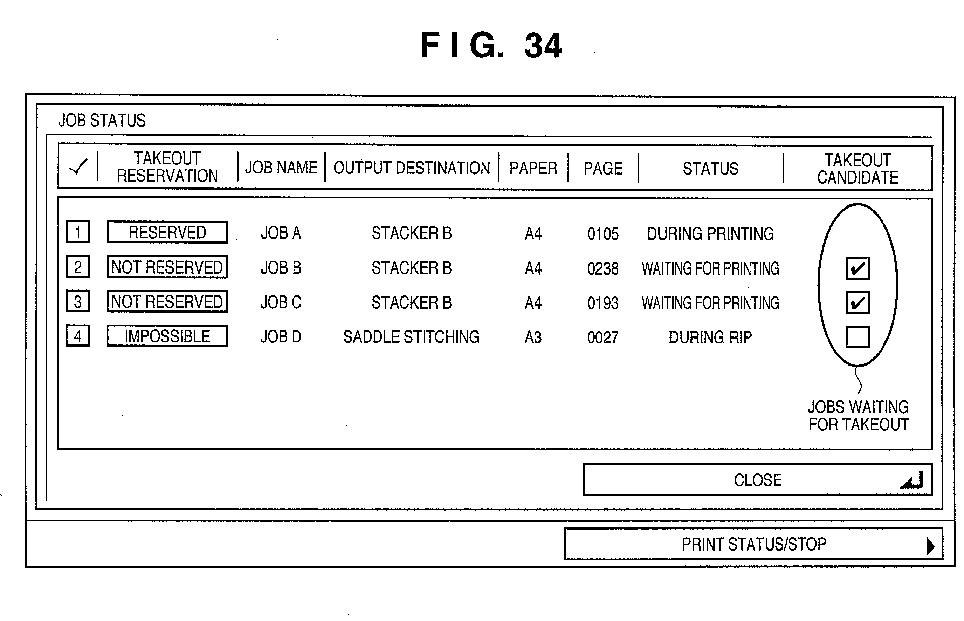

For example, the control unit 205 causes the UI unit to execute a display as illustrated in the print status window of Fig. 34 for a job assumed to wait for the start of printing in steps S2204 and S2205/steps S2905 and S2906.

In other words, the control unit of the embodiment controls the UI unit to notify, during printing in S2201/S2901, a user that a job will wait for printing because of takeout at the end of the job in S2201/S2901. The print system 1000 may further comprise this configuration.

The above control mainly executed by the control unit of the print system 1000 described with reference to Fig. 34 will be referred to as control example 3 in the embodiment. In addition to control example 3, the control unit of the print system 1000 can also execute another control as described in the following control example.

### [Description (4) of Control Example Executable by Control Unit of Print System 1000]

For example, in S2201/S2902 of the above-described control examples in the embodiment, the operator needs to take out sheets of a job having undergone a sheet process by the inline finisher of the print system 1000. In this situation, the control unit of the embodiment which executes the above-mentioned control examples 1 and 2 executes the following control.

For example, the control unit 205 controls to automatically open the door (corresponding to the door 2002 of the stacker in the example of Fig. 20) of the inline finisher (e.g., the sheet processing apparatus 200a or 200b in Fig. 19) in the embodiment from which the operator takes out sheets. The print system 1000 may further comprise this configuration.

This control mainly executed by the control unit of the print system 1000 will be referred to as control example 4 in the embodiment. In addition to control example 4, the control unit of the print system 1000 can also execute another control as described in the following control example.

### [Description (5) of Control Example Executable by Control Unit of Print System 1000]

For example, in S2201/S2902 of the above-described control examples in the embodiment, the operator needs to take out sheets of a job having undergone a sheet process by the inline finisher of the print system 1000. In this situation, the control unit of the embodiment which executes the above-mentioned control examples 1 and 2 executes the following control.

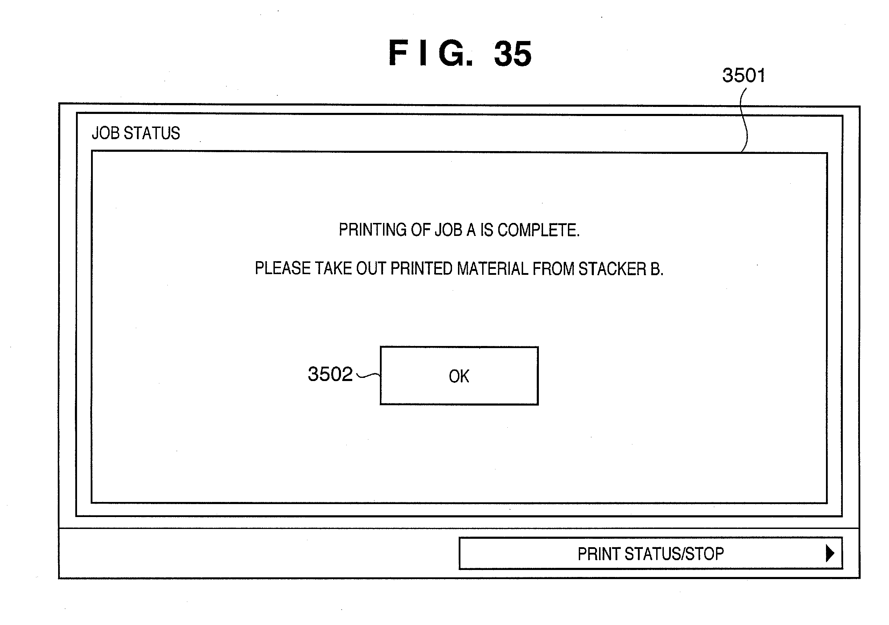

For example, the control unit 205 automatically displays a notification popup window 3501 as shown in Fig. 35 on the LCD screen of the operation unit 204.

For this purpose, an inline finisher holding the printed material of a job notifies the control unit 205 that the user can take out the printed material of the job. In the embodiment, the inline finisher is the sheet processing apparatus 200a or 200b in Fig. 19. Based on this information, the control unit 205 causes the UI unit to execute a display as illustrated in Fig. 35. At this time, the control unit 205 communicates data via a signal line connected to the sheet processing apparatus 200 in Fig. 2. An OK key 3502 is a display key used when the user approves takeout of a printed material and closes the notification popup window 3501. The print system 1000 may execute this display control in addition to various display control examples described above.

This control mainly executed by the control unit of the print system 1000 will be referred to as control example 5 in the embodiment. In addition to control example 5, the control unit of the print system 1000 can also execute another control as described in the following control example.

### [Description (6) of Control Example Executable by Control Unit of Print System 1000]

The control unit of the embodiment controls to make printing of a succeeding job wait until the output material of a job which ends in step S2201/step S2902 is taken out in S2205/S2906, like the above-described control examples 1 and 2. Alternatively, the control unit may execute the following control.

Assume that the operator does not take out a printed material from an inline finisher in the embodiment even upon the lapse of a predetermined time. The control unit 205 acquires, via the signal line connected to the sheet processing apparatus 200 in Fig. 2, information for specifying this situation by the control unit 205. In this case, the control unit 205 controls to automatically cancel the wait for takeout of the printed material by the operator. The user can make determination settings necessary to execute this control via the UI unit of the embodiment.

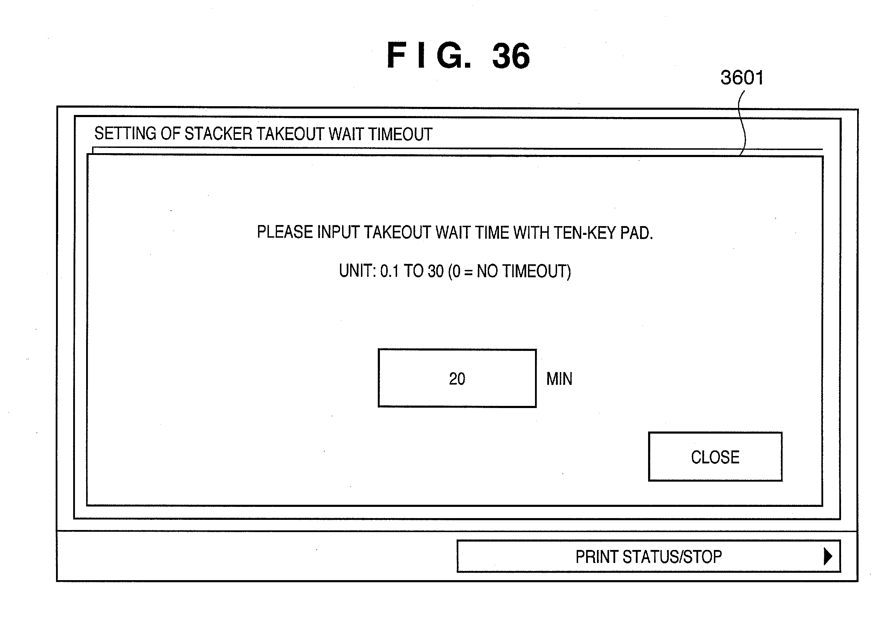

Assume that the user presses an advanced setting key of the operation unit 204. In response to this, the control unit 205 controls the display unit 401 to execute a display illustrated in Fig. 36. The control unit 205 controls the operation unit 204 to allow the user to designate the takeout wait time in minutes via a takeout wait timeout setup window 3601 illustrated in Fig. 36. The control unit 205 executes control based on a request from the user via the display in Fig. 36. For example, the control unit 205 accepts a setting of 0 min from the user via the display in Fig. 36. In this case, the control unit 205 inhibits the start of printing a succeeding job requiring a sheet process by an inline finisher without waiting for taking out the printed material of a preceding job by the user from the delivery unit of the inline finisher. In other words, assume that the control unit 205 accepts a setting of 1 min from the user via the display in Fig. 36. In this case, the control unit 205 activates the timer when the printed material of a preceding job is delivered to the delivery unit of an inline finisher. Assume that the operator does not take out any printed material even upon the lapse of 1 min after activation of the timer. If this condition is satisfied, the control unit 205 permits the start of printing a succeeding job requiring a sheet process by the inline finisher even if the user does not take out the printed material of a preceding job from the delivery unit of the inline finisher.

This control mainly executed by the control unit of the print system 1000 will be referred to as control example 6 in the embodiment. The system of the embodiment can execute various control examples 1 to 6 described above. Needless to say, the system need not execute all control examples 1 to 6.

In other words, the print system 1000 of the embodiment comprises the following constituent features for various control examples executable by the control unit of the embodiment including those illustrated in Figs. 19 to 36 and the like.

The print system 1000 comprises the print apparatus 100 having the printer unit 203 capable of executing the print process of data in the HDD 209 capable of storing data of jobs. The print system 1000 also comprises a plurality of sheet processing apparatuses 200a to 200n each of which can connect to the print apparatus 100 and execute a sheet process for sheets of a job printed by the printer unit 203. Each sheet processing apparatus allows an operator to take out a printed material having undergone a sheet process by the sheet processing apparatus. The print system 1000 can selectively supply sheets of a job printed by the printer unit 203 from the printer unit 203 of the print apparatus 100 to a plurality of sheet processing apparatuses.

On the premise of the above system configuration, the control unit 205 executes the following control when the operator takes out sheets from any of the sheet processing apparatuses.

Assume that the situation of the print system 1000 meets the above case. In this case, the control unit 205 inhibits execution of the print operation of a job which is accepted after a job of sheets to be taken out by the operator and requires a sheet process by a sheet processing apparatus from which the operator takes out sheets.

The control unit 205 also executes the following control when the operator takes out sheets from any of the sheet processing apparatuses.

Assume that the HDD 209 holds a job which is accepted after a job of sheets to be taken out by the operator and does not require a sheet process by a sheet processing apparatus from which the operator takes out sheets. In this case, the control unit 205 permits the printer unit 203 to execute the print operation of this job regardless of takeout work by the operator.

Moreover, the control unit 205 executes the following control.

The control unit 205 controls the UI unit to accept, from a user via the UI unit, an instruction for specifying whether to take out sheets of a job having undergone a sheet process immediately before the end of the sheet process by the sheet processing apparatus.

Based on the instruction from the UI unit, the control unit 205 performs the following control.

For example, the control unit 205 determines whether to execute the print operation of a job which is accepted after a job of sheets to be taken out by the operator and requires a sheet process by a sheet processing apparatus from which the operator takes out sheets.

The control unit 205 also executes the following control.

Assume that a plurality of jobs to be printed by the printer unit 203 are under printing or wait for printing in the HDD 209. In this case, the control unit 205 allows the UI unit to execute a display which allows a user to specify a job which waits for printing because the operator takes out sheets from the sheet processing apparatus. The control unit 205 executes this operation when, for example, the user presses the system status key.

In addition, the control unit 205 executes the following display control.

For example, when the operator can take out sheets of a job which are stacked on a specific sheet processing apparatus such as the large-volume stacker, the control unit 205 causes the UI unit to execute a display capable of notifying a user of a message to this effect.

The control unit 205 also executes the following control using a configuration unique to the inline finisher.

Assume that the operator can take out sheets of a job requiring a sheet process by a specific sheet processing apparatus such as the large-volume stacker among a plurality of sheet processing apparatuses from the specific sheet processing apparatus. When confirming this situation on the basis of information from the control unit of the large-volume stacker, the control unit 205 automatically opens the door 2002 at the sheet takeout portion.

The control unit 205 also executes the following control using a configuration unique to the inline finisher.

Assume that the operator does not take out, during a specific period, sheets of a job to be taken out by the operator from the sheet processing apparatus. In this case, the control unit 205 causes the printer unit 203 to automatically start the print operation of a succeeding job whose print operation by the printer unit 203 is inhibited because the operator takes out sheets from the sheet processing apparatus.

In other words, the control unit 205 executes the following control as the above-described main control.

For example, there are a plurality of jobs whose print execution requests are issued after job A requiring a sheet process by the sheet processing apparatus of the print system 1000 after a print process by the printer unit 203. Among these jobs, job B exists which requires a sheet process by the same sheet processing apparatus as the sheet processing apparatus that executes a sheet process necessary for job A. In this situation, the control unit 205 makes the print operation of job B wait until the operator completely takes out sheets of job A from the sheet processing apparatus. After the operator takes out sheets of job A from the sheet processing apparatus, the control unit 205 starts the print operation of job B.

The control unit 205 executes this control when both jobs A and B satisfy the following condition.

For example, both jobs A and B require a sheet process by the inline type sheet processing apparatus 200 among sheet processing apparatuses 200, 107, 108, 109, and 110 roughly classified into three in Fig. 1.

In this case, the control unit 205 inhibits the start of the print operation of job B before the end of taking out sheets of job A by the operator from the sheet processing apparatus.

Assume that a plurality of inline type sheet processing apparatuses are cascade-connected in the print system 1000, and job A requires a sheet process by a sheet processing apparatus cascade-connected second to the print apparatus 100. Further, assume that the operator takes out the printed material of job A from the second sheet processing apparatus. In this case, assume that there is a job (e.g., job B) whose print execution request is accepted after job A of sheets to be taken out by the operator and which requires a sheet process by the second sheet processing apparatus. Then, the control unit 205 makes wait the print operation of a succeeding job which meets this condition.

More specifically, the control unit 205 holds print data of a succeeding job in the HDD 209, and makes the succeeding job wait for printing. Assume that there is a job (e.g., job B) whose print execution request is accepted after job A of sheets to be taken out by the operator and which requires a sheet process by the first sheet processing apparatus. Then, the control unit 205 starts the print operation of a succeeding job which meets this condition. In other words, the control unit 205 permits execution of the print operation in parallel with (at the same time as) takeout work of the printed material of job A.

In this manner, the control unit 205 controls the print execution timings of jobs to be processed by the print apparatus 100 including jobs A and B on the basis of information on the sheet processing apparatuses.

As a matter of course, the system is configured as follows.

For example, the control unit 205 controls the UI unit to accept the print execution request of a job to be processed and the execution request of a sheet process necessary for the job from a user via the operation unit 204 of the print apparatus 100 serving as an example of the UI unit.

The control unit 205 can also accept the print execution request of a job to be processed and the execution request of a sheet process necessary for the job from the user via the operation unit of a computer such as the PC 103 or 104.

The control unit 205 allows the printer unit 203 to execute a print process necessary for a job whose data to be printed is stored in the HDD 209 via the scanner unit 201, in parallel with the sheet process of a job printed by the print apparatus 100 prior to the stored job.

The control unit 205 can similarly process a job whose sheet process execution request is issued via a print setup window displayable on the monitor of a PC in response to a printer driver activation instruction by a user operation to the PC. The control unit 205 allows the printer unit to execute the print process of a job from the PC in parallel with the sheet process of a job printed prior to the job.

A configuration capable of executing parallel operations can increase productivity.

A plurality of types of sheet processes are selectively executable as sheet processes for sheets of a job printed by the print apparatus 100. These sheet processes include at least any of a stapling process, punching process, case binding process, pad binding process, saddle stitching process, large-volume sheet stacking process, and cutting process. This is a mechanism which copes with various print styles which may be requested by a user in the POD environment.

To execute various control examples described above, the control unit 205 also utilizes the following information.

An example of this information is system configuration information which is accepted from a user via the UI unit and is necessary to specify the order in which a plurality of sheet processing apparatuses of the print system connect to the print apparatus. Based on this information and information of a job, the control unit 205 controls the print operation timing of a job to be processed.

The control unit of the print system 1000 as exemplified by the control unit 205 executes this control. What situations are assumed and what effects are obtained by mechanisms corresponding to the control examples illustrated in Fig. 19 and subsequent drawings will be described concretely.

For example, the embodiment pays attention to the following situation.

In a printing environment such as the POD environment, various finishing processes are likely to be requested. The embodiment can meet this need by a system configuration of cascade-connecting inline finishers, as described above. The embodiment assumes a case in which different POD companies serving as delivery candidates of the system request different system configurations when the print system 1000 comes into practical use. Thus, each sheet processing apparatus can independently operate as an independent housing. This has been illustrated in Figs. 8A to 10B.

According to the embodiment, a plurality of inline finishers are cascade-connected for a situation unique to a system configuration assuming the above use case. Each sheet processing apparatus has a function of conveying a sheet from a preceding apparatus to a succeeding apparatus via a straight path formed in the sheet processing apparatus. This configuration is also a mechanism of preventing the apparatus configuration from becoming larger than necessary while coping with the above use cases and user needs.

The embodiment prevents, e.g., the following problem in the system configuration assuming the above use cases and user needs.

For example, a problem occurs because the printed material of a succeeding job is output to the stack tray of a sheet processing apparatus such as the large-volume stacker while the operator takes out a printed material from the stack tray. In this situation, sheets of the succeeding job may jam. In other words, this trouble may occur in a system configuration which assumes only an increase in productivity. If, however, the print operation stops in the print system 1000 while the operator takes out a printed material from the tray, this may influence the productivity of the overall system.

Studies have been made toward practical use of the print system 1000, and the print system 1000 can execute various control examples described above as solutions to the problem.

As described in the control examples illustrated in Fig. 19 and subsequent drawings, the control unit 205 inhibits output of the printed material of a succeeding job to the stack tray of the large-volume stacker or the like while the operator takes out a printed material from the stack tray. This control can deal with even the above-mentioned jam of a succeeding job. The control unit 205 controls a target job to set an output destination other than the tray even while the operator takes out a printed material from the tray. In other words, the control unit 205 permits the start of printing a succeeding job which is printable without obstructing takeout work from the tray. This can keep productivity as high as possible while suppressing an error such as a jam. The control unit 205 also determines whether to stack each succeeding job, opens the door when a printed material can be taken out, and sends a notification to a user. This can further enhance the effects.

Effects which can be obtained by the above-described print system 1000 according to the embodiment will be explained below.

For example, the embodiment can solve problems as assumed in Description of the Related Art. The embodiment can build a convenient printing environment adoptable to not only the office environment but also to the POD environment. The embodiment can provide a mechanism of minimizing intervention work by an operator that may occur in the POD environment due to, e.g., the specifications of a print apparatus. The embodiment can implement efficient work by reducing the work load of the operator. The embodiment can provide a mechanism capable of flexibly coping with various needs from various users as much as possible in consideration of various situations and use environments. The embodiment can provide the following effects when building a convenient, flexible printing environment capable of coping with use cases and needs in the POD environment assumed in Description of the Related Art.

The embodiment can prevent any trouble or the like which influences a specific job or a plurality of jobs due to work to take out the printed material of a given job from a sheet processing apparatus by an operator in a system which accepts a plurality of jobs to be processed. The embodiment can provide a mechanism of maintaining high productivity without causing any trouble or the like due to intervention work by an operator which may influence the productivity of jobs to be processed in the print system. The embodiment provides a mechanism capable of processing a plurality of jobs at productivity as high as possible even when the operator takes out sheets from a sheet processing apparatus used for a sheet process necessary for a job to be processed. In this manner, the embodiment can provide various mechanisms for practical use of a product.

In the embodiment, the print apparatus 100 incorporates the control unit 205 which executes various control examples described in the embodiment with reference to Figs. 1 to 36. Alternatively, the print system 1000 may be configured such that a control unit incorporated in an apparatus (e.g., the inline finisher or PC 103) other than the print apparatus 100 executes all or some of control examples disclosed in the embodiment which are executed by the control unit 205.

### [Other Mechanisms]

A host computer (e.g., the PC 103 or 104) may use an externally installed program to achieve the functions shown in the drawings in the embodiment. In this case, data for displaying the same operation windows as those described in the embodiment including operation windows are externally installed to provide various user interface windows on the display unit of the host computer. This process is described with reference to the configuration based on the UI windows of Figs. 17A and 17B. In this configuration, the present invention is also applicable to a case in which an output apparatus receives a set of information including a program from a storage medium such as a CD-ROM, flash memory, or FD, or from an external storage medium via a network.

As described above, the object of the present invention is also achieved by supplying a storage medium which records software program codes for implementing the functions of the above-described embodiment to a system or apparatus, and reading out and executing the program codes stored in the storage medium by the computer (CPU or MPU) of the system or apparatus.

In this case, the program codes read out from the storage medium implement new functions of the present invention, and the storage medium which stores the program codes constitutes the present invention.

The program form is arbitrary such as an object code, a program executed by an interpreter, or script data supplied to an OS as long as a program function is attained.

The storage medium for supplying the program includes a flexible disk, hard disk, optical disk, magnetooptical disk, MO, CD-ROM, CD-R, CD-RW, magnetic tape, nonvolatile memory card, ROM, and DVD.

In this case, the program code read out from the storage medium implements the functions of the above-described embodiment, and the storage medium which stores the program codes constitutes the present invention.

As another program supply method, the program can be supplied by connecting a client computer to an Internet homepage via the browser of the client computer, and downloading the computer program of the present invention or a compressed file containing an automatic installing function from the homepage to a recording medium such as a hard disk. The program can also be implemented by grouping program codes which form the program of the present invention into a plurality of files, and downloading the files from different homepages. That is, claims of the present invention also incorporate a WWW server, FTP server, and the like which prompt a plurality of users to download the program files for implementing functional processes of the present invention by a computer.

The program of the present invention can be encrypted, stored in a storage medium such as a CD-ROM, and distributed to a user. A user who satisfies predetermined conditions is prompted to download decryption key information from a homepage via the Internet. The user executes the encrypted program using the key information, and installs the program in the computer.

The functions of the above-described embodiment are implemented when the computer executes the readout program codes. Also, the functions of the above-described embodiment are implemented when an OS (Operating System) or the like running on the computer performs some or all of actual processes on the basis of the instructions of the program codes.

The functions of the above-described embodiment are also implemented when the program codes read out from the storage medium are written in the memory of a function expansion board inserted into the computer or the memory of a function expansion unit connected to the computer, and the CPU of the function expansion board or function expansion unit performs some or all of actual processes on the basis of the instructions of the program codes.

The present invention may be applied to a system including a plurality of devices or an apparatus formed by a single device. The present invention can also be achieved by supplying a program to the system or apparatus. In this case, the system or apparatus can obtain the effects of the present invention by proving, to the system or apparatus, a storage medium which stores a program represented by software for achieving the present invention.

The present invention is not limited to the above embodiment, and various modifications (including organic combinations of embodiments) can be made without departing from the scope of the invention, and are not excluded from the scope of the invention. For example, the control unit 205 in the print apparatus 100 mainly performs various control operations, but the external controller of a housing different from the print apparatus 100 may execute one or all of various control operations.

Various examples and embodiments of the present invention have been described. It is apparent to those skilled in the art that the spirit and scope of the invention are not limited to a specific description in the specification.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. When an operator takes out a sheet from one of sheet processing apparatuses in a print system capable of supplying a sheet of a job having undergone a print process to a plurality of sheet processing apparatuses from a print apparatus capable of executing the print process of data in a storage unit capable of storing data of a plurality of jobs, execution of the print operation of a job which is accepted after a job of the sheet to be taken out by the operator and requires a sheet process by the sheet processing apparatus from which the operator takes out the sheet is inhibited. When the operator takes out a sheet from one of the sheet processing apparatuses, execution of the print operation of a job which is accepted after a job of the sheet to be taken out by the operator and does not require a sheet process by the sheet processing apparatus from which the operator takes out the sheet is permitted.

## Claims

1. A print system capable of supplying a sheet of a job having undergone a print process by a print unit from the print unit of a print apparatus having the print unit capable of executing the print process of data in a storage unit capable of storing data of a plurality of jobs to a plurality of sheet processing apparatuses each of which has a sheet processing unit capable of executing a sheet process for a sheet of a job printed by the print unit and allows an operator to take out the sheet of the job having undergone the sheet process by the sheet processing unit, **characterized by** comprising:
a control unit which, when the operator takes out a sheet from one of the plurality of sheet processing apparatuses, inhibits execution of a print operation of a job which is accepted after a job of the sheet to be taken out by the operator and requires a sheet process by the sheet processing apparatus from which the operator takes out the sheet,
wherein when the operator takes out a sheet from one of the plurality of sheet processing apparatuses, said control unit permits execution of a print operation of a job which is accepted after a job of the sheet to be taken out by the operator and does not require a sheet process by the sheet processing apparatus from which the operator takes out the sheet.

2. The system according to claim 1, **characterized in that** when the operator takes out a sheet from one of the plurality of sheet processing apparatuses, said control unit permits, regardless of takeout work by the operator, execution of a print operation of a job which is accepted after a job of the sheet to be taken out by the operator and does not require the sheet process by the sheet processing apparatus from which the operator takes out the sheet.

3. The system according to claim 1 or 2, **characterized in that**
said control unit can accept, from a user via a user interface unit, an instruction for specifying whether to take out a sheet of a job having undergone a sheet process immediately after an end of the sheet process by the sheet processing apparatus, and
said control unit determines, on the basis of the instruction, whether to execute a print operation of a job which is accepted after the job of the sheet to be taken out by the operator and requires the sheet process by the sheet processing apparatus from which the operator takes out the sheet.

4. The system according to any one of claims 1 to 3, **characterized in that** said control unit allows a user interface unit to execute a display which allows a user to specify which of a plurality of jobs to be printed by the print unit waits for printing because of takeout work of a sheet by the operator from the sheet processing apparatus.

5. The system according to any one of claims 1 to 4, **characterized in that** when the operator can take out a sheet of a job which is stacked on a specific sheet processing apparatus, said control unit can execute, via a user interface unit, a display capable of notifying a user that the operator can take out the sheet of the job which is stacked on the specific sheet processing apparatus.

6. The system according to any one of claims 1 to 5, **characterized in that** when the operator can take out a sheet of a job requiring a sheet process by a specific sheet processing apparatus among the plurality of sheet processing apparatuses from the specific sheet processing apparatus, said control unit automatically opens a door at a sheet takeout portion.

7. The system according to any one of claims 1 to 6, **characterized in that**
when the operator does not take out, during a specific period, a sheet of a job to be taken out by the operator from the sheet processing apparatus,
said control unit allows the print unit to start a print operation of a job whose print operation by the print unit is inhibited because of takeout work of a sheet by the operator from the sheet processing apparatus.

8. The system according to any one of claims 1 to 7, **characterized in that**
said control unit makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus, and
said control unit starts the print operation of the second job after the operator takes out the sheet of the first job from the sheet processing apparatus.

9. The system according to any one of claims 1 to 8, **characterized in that**
said control unit makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus,
said control unit starts the print operation of the second job after the operator takes out the sheet of the first job from the sheet processing apparatus, and
said control unit inhibits a start of the print operation of the second job before the operator completely takes out the sheet of the first job from the sheet processing apparatus when both the first job and the second job are jobs requiring a sheet process by an inline type sheet processing apparatus among the inline type sheet processing apparatus capable of receiving a sheet from the print apparatus without intervention work by an operator and communicating data with another apparatus, a near-line type sheet processing apparatus incapable of receiving a sheet from the print apparatus without intervention work by an operator and capable of communicating data with another apparatus, and an offline type sheet processing apparatus incapable of receiving a sheet from the print apparatus without intervention work by an operator and communicating data with another apparatus.

10. The system according to any one of claims 1 to 9, **characterized in that**
said control unit makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus,
said control unit starts the print operation of the second job after the operator takes out the sheet of the first job from the sheet processing apparatus,
the print system can supply a sheet of a job having undergone a print process by the print unit from the print unit to a plurality of sheet processing apparatuses including a first sheet processing apparatus and a second sheet processing apparatus and each having a sheet processing unit capable of executing a sheet process for a sheet of a job printed by the print unit, and
said control unit controls, on the basis of information on the plurality of sheet processing apparatuses, print execution timings of a plurality of jobs to be processed by the print apparatus, the jobs including the first job and the second job.

11. The system according to any one of claims 1 to 10, **characterized in that**
when the print system has a system configuration capable of supplying a sheet from the print unit via a first sheet processing apparatus into a second sheet processing apparatus among the first sheet processing apparatus and second sheet processing apparatus each of which holds a printed material having undergone sheet processes by the first sheet processing apparatus and the second sheet processing apparatus at sheet holding units of the first sheet processing apparatus and second sheet processing apparatus respectively, and
when the sheet processing apparatus from which the operator takes out a sheet is the second sheet processing apparatus,
said control unit makes wait a print operation of a job whose print execution request is accepted after a job of the sheet to be taken out by the operator and which requires a sheet process by the second sheet processing apparatus, and
said control unit allows the print unit to execute a print operation of a job whose print execution request is accepted after a job of the sheet to be taken out by the operator and which requires a sheet process by the first sheet processing apparatus, without making the print operation of the job wait.

12. The system according to any one of claims 1 to 11, **characterized in that** said control unit can accept a print execution request of a job to be processed and an execution request of a sheet process necessary for the job from a user via a display unit of a user interface unit of the print apparatus.

13. The system according to any one of claims 1 to 12, **characterized in that** said control unit can accept a print execution request of a job to be processed and an execution request of a sheet process necessary for the job from a user via a display unit of a user interface unit of a computer capable of transmitting data to the print apparatus.

14. The system according to any one of claims 1 to 13, **characterized in that** said control unit allows the print unit to execute a print process necessary for a job whose data to be printed is stored in the storage unit via a document reading unit, in parallel with a sheet process of a job having undergone a print process by the print apparatus prior to the job.

15. The system according to any one of claims 1 to 14, **characterized in that** said control unit allows the print unit to execute a print process necessary for a job whose sheet process execution request is issued via a print setup window displayable on a display unit of a host computer in response to a printer driver activation instruction by a user operation to the host computer capable of transmitting print data to the print apparatus, in parallel with a sheet process of a job having undergone a print process by the print apparatus prior to the job.

16. The system according to any one of claims 1 to 15, **characterized in that** said control unit allows the sheet processing apparatuses of the print system to execute a plurality of types of sheet processes including at least one of a stapling process, a punching process, a case binding process, a pad binding process, a saddle stitching process, a large-volume sheet stacking process, and a cutting process as a sheet process to a sheet of a job having undergone a print process by the print unit of the print apparatus.

17. The system according to any one of claims 1 to 16, **characterized in that** said control unit controls a print operation timing of a job to be processed on the basis of system configuration information which is accepted from a user via a user interface unit and is necessary to specify an order in which a plurality of sheet processing apparatuses of the print system connect to the print apparatus.

18. The system according to any one of claims 1 to 17, **characterized in that** said control unit controls a print operation timing of a job to be processed on the basis of system configuration information which is acquired from a sheet processing apparatus when the sheet processing apparatus connects to the print apparatus, and is necessary to specify an order in which a plurality of sheet processing apparatuses of the print system connect to the print apparatus.

19. The system according to any one of claims 1 to 18, **characterized in that**
when a second job accepted after a first job requiring a sheet process by a sheet processing apparatus requiring an operation to open an opening/closing unit in sheet takeout work by the operator is a job requiring a sheet process by the sheet processing apparatus used for the sheet process of the first job,
said control unit inhibits the print apparatus from executing a print process of the second job while keeping open the opening/closing unit of the sheet processing apparatus used for the sheet process of the first job, and
when the second job accepted after the first job is not a job requiring the sheet process by the sheet processing apparatus used for the sheet process of the first job,
said control unit permits the print apparatus to execute the print process of the second job while keeping open the opening/closing unit of the sheet processing apparatus used for the sheet process of the first job.

20. A job processing method for a print system capable of supplying a sheet of a job having undergone a print process by a print unit from the print unit of a print apparatus having the print unit capable of executing the print process of data in a storage unit capable of storing data of a plurality of jobs to a plurality of sheet processing apparatuses each of which has a sheet processing unit capable of executing a sheet process for a sheet of a job printed by the print unit and allows an operator to take out the sheet of the job having undergone the sheet process by the sheet processing unit, **characterized by** comprising the steps of:
when the operator takes out a sheet from one of the plurality of sheet processing apparatuses, inhibiting execution of a print operation of a job which is accepted after a job of the sheet to be taken out by the operator and requires a sheet process by the sheet processing apparatus from which the operator takes out the sheet; and
when the operator takes out a sheet from one of the plurality of sheet processing apparatuses, permitting execution of a print operation of a job which is accepted after a job of the sheet to be taken out by the operator and does not require a sheet process by the sheet processing apparatus from which the operator takes out the sheet.

21. The method according to claim 20, **characterized in that** when the operator takes out a sheet from one of the plurality of sheet processing apparatuses, the job processing method permits, regardless of takeout work by the operator, execution of a print operation of a job which is accepted after the job of the sheet to be taken out by the operator and does not require the sheet process by the sheet processing apparatus from which the operator takes out the sheet.

22. The method according to claim 20 or 21, **characterized in that**
the job processing method can accept, from a user via a user interface unit, an instruction for specifying whether to take out a sheet of a job having undergone a sheet process immediately after an end of the sheet process by the sheet processing apparatus, and
the job processing method determines, on the basis of the instruction, whether to execute a print operation of a job which is accepted after the job of the sheet to be taken out by the operator and requires the sheet process by the sheet processing apparatus from which the operator takes out the sheet.

23. The method according to any one of claims 20 to 22, **characterized in that** the job processing method allows a user interface unit to execute a display which allows a user to specify which of a plurality of jobs to be printed by the print unit waits for printing because of takeout work of a sheet by the operator from the sheet processing apparatus.

24. The method according to any one of claims 20 to 23, **characterized in that** when the operator can take out a sheet of a job which is stacked on a specific sheet processing apparatus, the job processing method can execute, via a user interface unit, a display capable of notifying a user that the operator can take out the sheet of the job which is stacked on the specific sheet processing apparatus.

25. The method according to any one of claims 20 to 24, **characterized in that** when the operator can take out a sheet of a job requiring a sheet process by a specific sheet processing apparatus among the plurality of sheet processing apparatuses from the specific sheet processing apparatus, the job processing method automatically opens a door at a sheet takeout portion.

26. The method according to any one of claims 20 to 25, **characterized in that**
when the operator does not take out, during a specific period, a sheet of a job to be taken out by the operator from the sheet processing apparatus,
the job processing method allows the print unit to start a print operation of a job whose print operation by the print unit is inhibited because of takeout work of a sheet by the operator from the sheet processing apparatus.

27. The method according to any one of claims 20 to 26, **characterized in that**
the job processing method makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus, and
the job processing method starts the print operation of the second job after the operator takes out the sheet of the first job from the sheet processing apparatus.

28. The method according to any one of claims 20 to 27, **characterized in that**
the job processing method makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus,
the job processing method starts the print operation of the second job after the operator takes out the sheet of the first job from the sheet processing apparatus, and
the job processing method inhibits a start of the print operation of the second job before the operator completely takes out the sheet of the first job from the sheet processing apparatus when both the first job and the second job are jobs requiring a sheet process by an inline type sheet processing apparatus among the inline type sheet processing apparatus capable of receiving a sheet from the print apparatus without intervention work by an operator and communicating data with another apparatus, a near-line type sheet processing apparatus incapable of receiving a sheet from the print apparatus without intervention work by an operator and capable of communicating data with another apparatus, and an offline type sheet processing apparatus incapable of receiving a sheet from the print apparatus without intervention work by an operator and communicating data with another apparatus.

29. The method according to any one of claims 20 to 28, **characterized in that**
the job processing method makes wait a print operation of a second job whose print execution request is issued after a first job requiring a sheet process by a sheet processing apparatus of the system after a print process by the print unit and which requires a sheet process by the same sheet processing apparatus as the sheet processing apparatus that executes the sheet process necessary for the first job, until the operator completely takes out a sheet of the first job from the sheet processing apparatus,
the job processing method starts the print operation of the second job after the operator takes out the sheet of the first job from the sheet processing apparatus,
the print system can supply a sheet of a job having undergone a print process by the print unit from the print unit to a plurality of sheet processing apparatuses including a first sheet processing apparatus and a second sheet processing apparatus and each having a sheet processing unit capable of executing a sheet process for a sheet of a job printed by the print unit, and
the job processing method controls, on the basis of information on the plurality of sheet processing apparatuses, print execution timings of a plurality of jobs to be processed by the print apparatus, the jobs including the first job and the second job.

30. The method according to any one of claims 20 to 29, **characterized in that**
when the print system has a system configuration capable of supplying a sheet from the print unit via a first sheet processing apparatus into a second sheet processing apparatus among the first sheet processing apparatus and second sheet processing apparatus which hold a printed material having undergone sheet processes by the first sheet processing apparatus and the second sheet processing apparatus at sheet holding units of the first sheet processing apparatus and second sheet processing apparatus, respectively, and
when the sheet processing apparatus from which the operator takes out a sheet is the second sheet processing apparatus,
the job processing method makes wait a print operation of a job whose print execution request is accepted after a job of the sheet to be taken out by the operator and which requires a sheet process by the second sheet processing apparatus, and
the job processing method allows the print unit to execute a print operation of a job whose print execution request is accepted after a job of the sheet to be taken out by the operator and which requires a sheet process by the first sheet processing apparatus, without making the print operation of the job wait.

31. The method according to any one of claims 20 to 30, **characterized in that** the job processing method can accept a print execution request of a job to be processed and an execution request of a sheet process necessary for the job from a user via a display unit of a user interface unit of the print apparatus.

32. The method according to any one of claims 20 to 31, **characterized in that** the job processing method can accept a print execution request of a job to be processed and an execution request of a sheet process necessary for the job from a user via a display unit of a user interface unit of a computer capable of transmitting data to the print apparatus.

33. The method according to any one of claims 20 to 32, **characterized in that** the job processing method allows the print unit to execute a print process necessary for a job whose data to be printed is stored in the storage unit via a document reading unit, in parallel with a sheet process of a job having undergone a print process by the print apparatus prior to the job.

34. The method according to any one of claims 20 to 33, **characterized in that** the job processing method allows the print unit to execute a print process necessary for a job whose sheet process execution request is issued via a print setup window displayable on a display unit of a host computer in response to a printer driver activation instruction by a user operation to the host computer capable of transmitting print data to the print apparatus, in parallel with a sheet process of a job having undergone a print process by the print apparatus prior to the job.

35. The method according to any one of claims 20 to 34, **characterized in that** the job processing method allows the sheet processing apparatuses of the print system to execute a plurality of types of sheet processes including at least one of a stapling process, a punching process, a case binding process, a pad binding process, a saddle stitching process, a large-volume sheet stacking process, and a cutting process as a sheet process to a sheet of a job having undergone a print process by the print unit of the print apparatus.

36. The method according to any one of claims 20 to 35, **characterized in that** the job processing method controls a print operation timing of a job to be processed on the basis of system configuration information which is accepted from a user via a user interface unit and is necessary to specify an order in which a plurality of sheet processing apparatuses of the print system connect to the print apparatus.

37. The method according to any one of claims 20 to 36, **characterized in that** the job processing method controls a print operation timing of a job to be processed on the basis of system configuration information which is acquired from a sheet processing apparatus when the sheet processing apparatus connects to the print apparatus, and is necessary to specify an order in which a plurality of sheet processing apparatuses of the print system connect to the print apparatus.

38. The method according to any one of claims 20 to 37, **characterized in that**
when a second job accepted after a first job requiring a sheet process by a sheet processing apparatus requiring an operation to open an opening/closing unit in sheet takeout work by the operator is a job requiring a sheet process by the sheet processing apparatus used for the sheet process of the first job,
the job processing method inhibits the print apparatus from executing a print process of the second job while keeping open the opening/closing unit of the sheet processing apparatus used for the sheet process of the first job, and
when the second job accepted after the first job is not a job requiring the sheet process by the sheet processing apparatus used for the sheet process of the first job,
the job processing method permits the print apparatus to execute the print process of the second job while keeping open the opening/closing unit of the sheet processing apparatus used for the sheet process of the first job.

39. A computer-readable storage medium **characterized by** storing a program for executing a job processing method defined in any one of claims 20 to 38.

40. A program for causing a computer to execute a job processing method defined in any one of claims 20 to 38.

41. A print apparatus for executing a job processing method defined in any one of claims 20 to 38.
